# EUROPEAN PATENT APPLICATION

(11) **EP 4 506 313 A1**
(43) Date of publication of application: **12.02.2025**
(21) Application number: 23784527.6
(22) Date of filing: 10.02.2023
(51) Int. Cl.: C03B 33/03, B26F 3/00, B28D 5/00, B28D 7/04, C03B 33/04

(54) **CLEAVING SYSTEM AND CLEAVING PROCESSING METHOD**

(30) Priority: 08.04.2022 JP 2022064200
(71) Applicant: BANDO KIKO CO., LTD., Tokushima 770-0871 (JP)
(72) Inventor: BANDO, Kazuaki, Tokushima-shi, Tokushima 770-0871 (JP)
(74) Representative: Ashton, Gareth Mark
(86) International application number: PCT/JP2023/004505
(87) International publication number: WO 2023/195232

(57) **Abstract**

To provide a bend-breaking system and a bend-breaking processing method capable of smoothly and reliably bend-breaking an edge portion of a glass plate to be processed in bend-breaking processing.

In a bend-breaking system 10a, after a bend-breaking cutter wheel forms an end cut line in an edge portion of a glass plate, the bend-breaking cutter wheel is lifted in an up-down direction by a first lifting mechanism, after the bend-breaking cutter wheel is lifted, the bend-breaking cutter wheel and first and second pressing members are rotated in an axial direction by a rotation mechanism so that a first pressing member is positioned in the edge portion of the glass plate extending outside an outline cut line, after the first pressing member is positioned in the edge portion of the glass plate, the second pressing member is lowered in the up-down direction by a third lifting mechanism and the second pressing member and the first and second support members clamp a main body portion and an edge portion of the glass plate, and after the second pressing member and the first and second support members clamp the main body portion and the edge portion, the second support member is lowered in the up-down direction by the fourth lifting mechanism, and the first pressing member is lowered in the up-down direction by the second lifting mechanism to press the edge portion of the glass plate extending outside the outline cut line downward while maintaining the clamping of the main body portion by the second pressing member and the first support member to bend-break the edge portion.

## Description

### Technical Field

The present invention relates to a bend-breaking system that bend-breaks an edge portion of a glass plate to be processed such as a window glass plate of an automobile or a liquid crystal glass plate, and also relates to a bend-breaking processing method of bend-breaking the edge portion of the glass plate to be processed.

### Background Art

There is disclosed a glass plate processing system including a loading conveyor that loads a glass plate, a cutting processing area positioned in front of the loading conveyor, a bend-breaking processing area positioned in front of the cutting processing area, a grinding processing area positioned in front of the bend-breaking processing area, an unloading conveyor positioned in front of the grinding processing area, and a conveyance mechanism that conveys the glass plate from the loading conveyor to each processing area (refer to Patent Literature 1).

The cutting processing area of the glass plate processing system includes a cutting processing table including a first moving mechanism that moves in a width direction in a state in which the positioned glass plate is placed, and a cutting device movable in a front-rear direction. In the cutting processing area, after the cutting device moves rearward in the front-rear direction toward an outer side in the width direction of an edge portion of the glass plate placed on the cutting processing table, the cutting processing table moves in the width direction toward the cutting device by the first moving mechanism, and an outline cut line is formed on the glass plate placed on the cutting processing table using the cutting device. The bend-breaking processing area includes a bend-breaking processing table on which the positioned glass plate subjected to the cutting processing is placed, and a bend-breaking device movable in the front-rear direction. In the bend-breaking processing area, after the bend-breaking device moves rearward in the front-rear direction toward the bend-breaking processing table, an end cut line (scribe) is formed in the edge portion of the glass plate placed on the bend-breaking processing table using the bend-breaking device, and the edge portion of the glass plate is bend-broken.

The grinding processing area includes a grinding processing table including a second moving mechanism that moves in the width direction in a state in which a main body portion of the positioned glass plate subjected to the bend-breaking processing is placed, and a grinding device movable in the front-rear direction. In the grinding processing area, after the grinding device moves rearward in the front-rear direction to an outer side in the width direction of an edge of the main body portion of the glass plate placed on the grinding processing table, the grinding processing table moves in the width direction to the grinding device by the second moving mechanism, and an edge of a main body portion of the glass plate placed on the grinding processing table is ground using the grinding device. Note that, the cutting processing and the grinding processing are performed in synchronization.

### Citation List

### Patent Literature

Patent Literature 1: JP 2020-040877 A

### Summary of Invention

### Technical Problem

As illustrated in Fig. 27, a bend-breaking device 140 of the glass plate processing system disclosed in Patent Literature 1 is formed of a bend-breaking jig 141, a first lifting mechanism 142 (air cylinder), a pressing roller 143, and a second lifting mechanism 144 (air cylinder). The bend-breaking jig 141 is formed of a bend-breaking cutter wheel 145 that forms an end cut line (scribe) in an edge portion of a glass plate, and a bend-breaking cutter holder 146 that is positioned above the bend-breaking cutter wheel 145 and supports the bend-breaking cutter wheel 145. The bend-breaking cutter holder 146 includes a holder main body including a coupling unit, and a holder head attached to a distal end of the holder main body. The bend-breaking cutter holder 146 rotates in a circumferential direction (axial direction) with respect to a cutter holder center axis extending in an up-down direction by the rotation of a θ-axis servomotor 147. Although not illustrated, a support device that supports a lower surface of the glass plate is arranged on a side of the lower surface of the glass plate. The support device includes a first support member including a circular first support surface and a second support member extending in a circumferential direction around the first support member and including an annular second support surface.

Bend-breaking processing in the glass plate processing system disclosed in Patent Literature 1 is as follows. The bend-breaking jig 141 and the pressing roller 143 of the bend-breaking device 140 move in the front-rear direction (X direction) and the width direction (Y direction) by an X-axis actuator and a Y-axis actuator, the bend-breaking cutter wheel 145 of the bend-breaking jig 141 is positioned in the vicinity of an outer side of an outline cut line of the glass plate, and the pressing roller 143 is positioned in an edge portion on the outer side of the outline cut line of the glass plate. Furthermore, the support device is positioned immediately below the bend-breaking device 140 with the glass plate interposed therebetween. Next, after the bend-breaking jig 141 is lowered toward an upper surface of the glass plate by the first lifting mechanism 142, the bend-breaking cutter wheel 145 abuts the upper surface of the glass plate, and a rolling direction of the bend-breaking cutter wheel 145 becomes the same as a moving direction of the bend-breaking jig 141, the bend-breaking device 140 moves toward the edge of the edge portion of the glass plate, so that an end cut line is formed in the edge portion of the glass plate by the bend-breaking cutter wheel 145.

After the end cut line is formed in the edge portion of the glass plate, the bend-breaking jig 141 of the bend-breaking device 140 moves to a predetermined position of the edge portion of the glass plate, and the first and second support members of the support device are raised in the up-down direction, so that the first and second support surfaces abut the lower surface of the edge portion of the glass plate with the outline cut line interposed therebetween. Next, together with the second support member of the support device lowered in the up-down direction, the pressing roller 143 is lowered toward the upper surface of the glass plate by the second lifting mechanism 144, and the pressing roller 143 that abuts the upper surface of the glass plate presses the edge portion of the glass plate downward, thereby bend-breaking the edge portion of the glass plate from the main body portion of the glass plate. In the bend-breaking processing in the glass plate processing system disclosed in Patent Literature 1, when the pressing roller 143 presses the edge portion of the glass plate downward, the edge portion of the glass plate extending to the vicinity of the outline cut line and the vicinity of the end cut line is elastically deformed and the edge portion is curved upward, and there is a case where the edge portion of the glass plate cannot be bend-broken on the outline cut line and the end cut line, and the edge portion of the glass plate cannot be bend-broken smoothly and reliably.

An object of the present invention is to provide a bend-breaking system and a bend-breaking processing method capable of smoothly and reliably bend-breaking an edge portion of a glass plate to be processed in bend-breaking processing.

### Solution to Problem

A first premise of the present invention for solving the above problems is a bend-breaking system that bend-breaks an edge portion of a glass plate to be processed.

A characteristic of a bend-breaking system of the present invention in the first premise is that the bend-breaking system includes a bend-breaking device that is positioned on a side of an upper surface of a glass plate and bend-breaks an edge portion of the glass plate, and a support device that is positioned on a side of a lower surface of the glass plate and supports the glass plate, the bend-breaking device includes a bend-breaking cutter wheel that forms an end cut line on an outer side of an outline cut line formed in the edge portion of the glass plate, a first pressing member that is positioned in the vicinity of a radially outer side of the bend-breaking cutter wheel and presses the edge portion of the glass plate extending outside the outline cut line downward, a second pressing member that is positioned in the vicinity of a radially outer side of the first pressing member and presses a main body portion of the glass plate extending inside the outline cut line downward, a first lifting mechanism that lifts the bend-breaking cutter wheel up and down in an up-down direction, a second lifting mechanism that lifts the first pressing member up and down in the up-down direction, a third lifting mechanism that lifts the second pressing member up and down in the up-down direction, and a rotation mechanism that rotates the bend-breaking cutter wheel and the first and second pressing members in an axial direction, and the support device includes a first support member that supports the main body portion of the glass plate, a second support member that supports the edge portion of the glass plate, and a fourth lifting mechanism that lifts the second support member up and down in the up-down direction, in which the bend-breaking system includes a cutter wheel raising means in which, after the bend-breaking cutter wheel lowered in the up-down direction by the first lifting mechanism forms the end cut line in the edge portion of the glass plate, the bend-breaking cutter wheel is raised in the up-down direction by the first lifting mechanism, a rotating means in which, after the bend-breaking cutter wheel is raised by the cutter wheel raising means, the bend-breaking cutter wheel and the first and second pressing members are rotated in the axial direction by the rotation mechanism so that the first pressing member is positioned in the edge portion of the glass plate extending outside the outline cut line, a glass plate clamping means in which, after the bend-breaking cutter wheel and the first and second pressing members are rotated by the rotating means and the first pressing member is positioned in the edge portion of the glass plate extending outside the outline cut line, the second pressing member is lowered in the up-down direction by the third lifting mechanism and the second pressing member and the first and second support members clamp the main body portion and the edge portion of the glass plate; a second support member lowering means in which, after the second pressing member and the first and second support members clamp the main body portion and the edge portion by the glass plate clamping means, the second support member is lowered in the up-down direction by the fourth lifting mechanism; and an edge portion bend-breaking means in which the first pressing member is lowered in the up-down direction by the second lifting mechanism and presses the edge portion of the glass plate extending outside the outline cut line downward to bend-break the edge portion while maintaining clamping of the main body portion by the second pressing member and the first support member.

As an example of the bend-breaking system of the present invention, in the bend-breaking device, the bend-breaking cutter wheel is positioned on a radially outer side of the first pressing member around the first pressing member, and the second pressing member is positioned on a radially outer side of the first pressing member around the first pressing member and on the opposite side of the bend-breaking cutter wheel.

As another example of the bend-breaking system of the present invention, in the bend-breaking device, the bend-breaking cutter wheel, the first pressing member, and the second pressing member are arranged in a line at equal intervals in a radial direction, the first pressing member rotates by the rotation mechanism, and the bend-breaking cutter wheel and the second pressing member revolve around the first pressing member.

As another example of the bend-breaking system of the present invention, the second support member is positioned in the vicinity of an outer side of the first support member and extends in an axial direction of the first support member, and in the glass plate clamping means, when the second support member is raised by the fourth lifting mechanism, the second support member supports a lower surface of the edge portion of the glass plate extending to the vicinity of an outer side of the outline cut line over the outline cut line and a lower surface of the main body portion of the glass plate extending to the vicinity of an inner side of the outline cut line.

As another example of the bend-breaking system of the present invention, the second support member includes a second support surface having a predetermined area that supports the lower surface of the glass plate, the second support surface of the second support member is formed into an annular shape surrounding the first support member in the axial direction, and in the glass plate clamping means, when the second support member is raised by the fourth lifting mechanism, the second support surface formed into the annular shape supports the lower surface of the edge portion of the glass plate extending to the vicinity of the outer side of the outline cut line over the outline cut line and the lower surface of the main body portion of the glass plate extending to the vicinity of the inner side of the outline cut line.

As another example of the bend-breaking system of the present invention, the first support member includes a first support surface having a predetermined area that supports the lower surface of the glass plate, the first support surface of the first support member is formed into a perfect circular shape, and in the glass plate clamping means, the first support surface formed into the perfect circular shape supports the lower surface of the main body portion of the glass plate extending to the vicinity of the inner side of the outline cut line, and the vicinity of an outer peripheral edge of the first support surface supports the lower surface of the edge portion of the glass plate extending to the vicinity of the outer side of the outline cut line.

As another example of the bend-breaking system of the present invention, the bend-breaking system includes a bend-breaking device moving means in which the bend-breaking device moves in a horizontal direction on the side of the upper surface of the glass plate after the bend-breaking cutter wheel and the first and second pressing members are raised by the first to third lifting mechanisms, and a support device moving means in which the support device moves in the horizontal direction in synchronization with the bend-breaking device on the side of the lower surface of the glass plate, in which after the bend-breaking device and the support device move in synchronization with each other by the bend-breaking device moving means and the support device moving means, the bend-breaking device and the support device perform the glass plate clamping means and the edge portion bend-breaking means in cooperation with each other.

As another example of the bend-breaking system of the present invention, the bend-breaking system includes an end cut line forming means, in which the bend-breaking cutter wheel forms the end cut line in the edge portion of the glass plate in a state in which the first and second support members support the lower surface of the edge portion extending outside the outline cut line of the glass plate while the bend-breaking device and the support device move in synchronization with each other.

A second premise of the present invention for solving the above problems is a bend-breaking processing method of bend-breaking an edge portion of a glass plate to be processed.

A characteristic of a bend-breaking processing method of the present invention in the second premise is that a bend-breaking processing method uses a bend-breaking device that is positioned on a side of an upper surface of the glass plate and bend-breaks the edge portion of the glass plate, and a support device that is positioned on a side of a lower surface of the glass plate and supports the glass plate, the bend-breaking device includes a bend-breaking cutter wheel that forms an end cut line on an outer side of an outline cut line formed in the edge portion of the glass plate, a first pressing member that is positioned in the vicinity of a radially outer side of the bend-breaking cutter wheel and presses the edge portion of the glass plate extending outside the outline cut line downward, a second pressing member that is positioned in the vicinity of a radially outer side of the first pressing member and presses a main body portion of the glass plate extending inside the outline cut line downward, a first lifting mechanism that lifts the bend-breaking cutter wheel up and down in an up-down direction, a second lifting mechanism that lifts the first pressing member up and down in the up-down direction, a third lifting mechanism that lifts the second pressing member up and down in the up-down direction, and a rotation mechanism that rotates the bend-breaking cutter wheel and the first and second pressing members in an axial direction, and the support device includes a first support member that supports the main body portion of the glass plate, a second support member that supports the edge portion of the glass plate, and a fourth lifting mechanism that lifts the second support member up and down in the up-down direction, in which the bend-breaking processing method includes a cutter wheel raising step in which, after the bend-breaking cutter wheel lowered in the up-down direction by the first lifting mechanism forms an end cut line in the edge portion of the glass plate, the bend-breaking cutter wheel is raised in the up-down direction by the first lifting mechanism, a rotating step in which, after the bend-breaking cutter wheel is raised by the cutter wheel raising step, the bend-breaking cutter wheel and the first and second pressing members are rotated in the axial direction by the rotation mechanism so that the first pressing member is positioned in the edge portion of the glass plate extending outside the outline cut line, a glass plate clamping step in which, after the bend-breaking cutter wheel and the first and second pressing members are rotated by the rotating step and the first pressing member is positioned in the edge portion of the glass plate extending outside the outline cut line, the second pressing member is lowered in the up-down direction by the third lifting mechanism and the second pressing member and the first and second support members clamp the main body portion and the edge portion of the glass plate, a second support member lowering step in which, after the second pressing member and the first and second support members clamp the main body portion and the edge portion by the glass plate clamping step, the second support member is lowered in the up-down direction by the fourth lifting mechanism, and an edge portion bend-breaking step in which the first pressing member is lowered in the up-down direction by the second lifting mechanism and presses the edge portion of the glass plate extending outside the outline cut line downward to bend-break the edge portion while maintaining clamping of the main body portion by the second pressing member and the first support member.

As an example of the bend-breaking processing method of the present invention, in the bend-breaking device, the bend-breaking cutter wheel is positioned on a radially outer side of the first pressing member around the first pressing member, and the second pressing member is positioned on a radially outer side of the first pressing member around the first pressing member and on the opposite side of the bend-breaking cutter wheel.

As another example of the bend-breaking processing method of the present invention, in the bend-breaking device, the bend-breaking cutter wheel, the first pressing member, and the second pressing member are arranged in a line at equal intervals in a radial direction, the first pressing member rotates by the rotation mechanism, and the bend-breaking cutter wheel and the second pressing member revolve around the first pressing member.

As another example of the bend-breaking processing method of the present invention, the second support member is positioned in the vicinity of an outer side of the first support member and extends in an axial direction of the first support member, and in the glass plate clamping step, when the second support member is raised by the fourth lifting mechanism, the second support member supports a lower surface of the edge portion of the glass plate extending to the vicinity of an outer side of the outline cut line over the outline cut line and a lower surface of the main body portion of the glass plate extending to the vicinity of an inner side of the outline cut line.

As another example of the bend-breaking processing method of the present invention, the second support member includes a second support surface having a predetermined area that supports the lower surface of the glass plate, the second support surface of the second support member is formed into an annular shape surrounding the first support member in the axial direction, and in the glass plate clamping step, when the second support member is raised by the fourth lifting mechanism, the second support surface formed into the annular shape supports the lower surface of the edge portion of the glass plate extending to the vicinity of the outer side of the outline cut line over the outline cut line and the lower surface of the main body portion of the glass plate extending to the vicinity of the inner side of the outline cut line.

As another example of the bend-breaking processing method of the present invention, the first support member includes a first support surface having a predetermined area that supports the lower surface of the glass plate, the first support surface of the first support member is formed into a perfect circular shape, and in the glass plate clamping step, the first support surface formed into the perfect circular shape supports the lower surface of the main body portion of the glass plate extending to the vicinity of the inner side of the outline cut line, and the vicinity of an outer peripheral edge of the first support surface supports the lower surface of the edge portion of the glass plate extending to the vicinity of the outer side of the outline cut line.

As another example of the bend-breaking processing method of the present invention, the bend-breaking processing method includes a bend-breaking device moving step in which the bend-breaking device moves in a horizontal direction on the side of the upper surface of the glass plate after the bend-breaking cutter wheel and the first and second pressing members are raised by the first to third lifting mechanisms, and a support device moving step in which the support device moves in the horizontal direction in synchronization with the bend-breaking device on the side of the lower surface of the glass plate, in which after the bend-breaking device and the support device move in synchronization with each other by the bend-breaking device moving step and the support device moving step, the bend-breaking device and the support device perform the glass plate clamping step and the edge portion bend-breaking step in cooperation with each other.

As another example of the bend-breaking processing method of the present invention, the bend-breaking processing method includes an end cut line forming step, in which the bend-breaking cutter wheel forms an end cut line in the edge portion of the glass plate in a state in which the first and second support members support the lower surface of the edge portion extending outside the outline cut line of the glass plate while the bend-breaking device and the support device move in synchronization with each other.

### Advantageous Effects of Invention

According to the bend-breaking system and the bend-breaking processing method according to the present invention, a bend-breaking cutter wheel lowered in an up-down direction by a first lifting mechanism forms an end cut line on an edge portion of a glass plate, after forming the end cut line in the edge portion of the glass plate, the bend-breaking cutter wheel is raised in the up-down direction by the first lifting mechanism, after the bend-breaking cutter wheel is raised, a rotation mechanism rotates the bend-breaking cutter wheel and first and second pressing members in an axial direction so that the first pressing member is positioned in the edge portion of the glass plate extending outside an outline cut line, after the bend-breaking cutter wheel and the first and second pressing members are rotated and the first pressing member is positioned in the edge portion of the glass plate extending outside the outline cut line, the second pressing member is lowered in the up-down direction by a third lifting mechanism and the second pressing member and the first and second support members clamp the main body portion and the edge portion of the glass plate, after the second pressing member and the first and second support members clamp the main body portion and the edge portion, the second support member is lowered in the up-down direction by a fourth lifting mechanism, and the first pressing member is lowered in the up-down direction by the second lifting mechanism and presses the edge portion of the glass plate extending outside the outline cut line downward and bend-breaks the edge portion while maintaining the clamping of the main body portion by the second pressing member and the first support member, therefore the main body portion of the glass plate is clamped by the second pressing member and the first support member and the main body portion of the glass plate is fixed by the second pressing member and the first support member, so that, even when the first pressing member presses the edge portion of the glass plate extending outside the outline cut line downward and a pressing force of the first pressing member acts on the edge portion, it is possible to prevent elastic deformation of the main body portion and the edge portion of the glass plate extending to the vicinity of the outline cut line, the main body portion and the edge portion do not curve upward and the edge portion of the glass plate is bend-broken on the outline cut line and the end cut line by the pressing force of the first pressing member, and the edge portion of the glass plate may be smoothly and reliably bend-broken.

With the bend-breaking system and the bend-breaking processing method in which the bend-breaking cutter wheel is positioned on a radially outer side of the first pressing member around the first pressing member and the second pressing member is positioned on a radially outer side of the first pressing member around the first pressing member and on an opposite side of the bend-breaking cutter wheel, by rotating the bend-breaking cutter wheel and the first and second pressing members in an axial direction by the rotation mechanism, and positioning the bend-breaking cutter wheel and the first pressing member in the edge portion of the glass plate extending outside the outline cut line, it is possible to position the second pressing member on the main body portion of the glass plate extending outside the outline cut line. With the bend-breaking system and the bend-breaking processing method, by clamping the main body portion of the glass plate by the second pressing member and the first support member positioned on the main body portion of the glass plate, the main body portion of the glass plate may be fixed by the second pressing member and the first support member, elastic deformation of the main body portion and the edge portion of the glass plate extending to the vicinity of the outline cut line can be reliably prevented, and the edge portion of the glass plate may be smoothly and reliably bend-broken on the outline cut line and the end cut line.

With the bend-breaking system and the bend-breaking processing method in which the bend-breaking cutter wheel, the first pressing member, and the second pressing member are arranged in a line at equal intervals in a radial direction, the first pressing member rotates by the rotation mechanism, and the bend-breaking cutter wheel and the second pressing member revolve around the first pressing member, when the first pressing member rotates by the rotation mechanism, the bend-breaking cutter wheel and the second pressing member revolve around the first pressing member, so that by allowing the bend-breaking cutter wheel and the second pressing member to revolve in an axial direction of the first pressing member by the rotation mechanism to position the bend-breaking cutter wheel and the first pressing member in the edge portion of the glass plate extending outside the outline cut line, it is possible to position the second pressing member in the main body portion of the glass plate extending outside the outline cut line. With the bend-breaking system and the bend-breaking processing method, by clamping the main body portion of the glass plate by the second pressing member and the first support member positioned on the main body portion of the glass plate while revolving in an axial direction of the first pressing member, the main body portion of the glass plate may be fixed by the second pressing member and the first support member, elastic deformation of the main body portion and the edge portion of the glass plate extending to the vicinity of the outline cut line can be reliably prevented, and the edge portion of the glass plate may be smoothly and reliably bend-broken on the outline cut line and the end cut line.

With the bend-breaking system and the bend-breaking processing method in which the second support member is positioned in the vicinity of the outer side of the first support member to extend in the axial direction of the first support member, and the second support member supports the lower surface of the edge portion of the glass plate extending to the vicinity of the outer side of the outline cut line over the outline cut line and the lower surface of the main body portion of the glass plate extending to the vicinity of the inner side of the outline cut line when the second support member is raised by the fourth lifting mechanism, the second support member extending in the circumferential direction of the first support member supports the lower surface of the edge portion of the glass plate extending to the vicinity of the outer side of the outline cut line over the outline cut line and the lower surface of the main body portion of the glass plate extending to the vicinity of the inner side of the outline cut line, so that when the second pressing member presses the main body portion and the edge portion of the glass plate downward, a curve of the edge portion of the glass plate extending to the vicinity of the outer side of the outline cut line supported by the second support member and the main body portion of the glass plate extending to the vicinity of the inner side of the outline cut line downward can be prevented, and it is possible to prevent unintended breakage and damage of the main body portion and the edge portion when the second pressing member and the first and second support member clamp the main body portion and the edge portion of the glass plate.

With the bend-breaking system and the bend-breaking processing method in which the second support member includes a second support surface having a predetermined area that supports the lower surface of the glass plate, the second support surface of the second support member is formed into an annular shape surrounding the first support member in the axial direction, and the second support surface formed into the annular shape supports the lower surface of the edge portion of the glass plate extending to the vicinity of the outer side of the outline cut line over the outline cut line and the lower surface of the main body portion of the glass plate extending to the vicinity of the inner side of the outline cut line when the second support member is raised by the fourth lifting mechanism, the second support surface formed into an annular shape of the second support member supports the lower surface of the edge portion of the glass plate extending to the vicinity of the outer side of the outline cut line over the outline cut line and the lower surface of the main body portion of the glass plate extending to the vicinity of the inner side of the outline cut line, so that when the second pressing member presses the main body portion and the edge portion of the glass plate downward, a curve of the edge portion of the glass plate extending to the vicinity of the outer side of the outline cut line supported by the second support surface of the second support member and the main body portion of the glass plate extending to the vicinity of the inner side of the outline cut line downward can be prevented, and it is possible to prevent unintended breakage and damage of the main body portion and the edge portion when the second pressing member and the first and second support member clamp the main body portion and the edge portion of the glass plate.

With a bend-breaking system and a bend-breaking processing method in which the first support member includes a first support surface having a predetermined area that supports a lower surface of the glass plate, the first support surface of the first support member is formed into a perfect circular shape, the first support surface formed into the perfect circular shape supports the lower surface of the main body portion of the glass plate extending to the vicinity of the inner side of the outline cut line, and the vicinity of the outer peripheral edge of the first support surface supports the lower surface of the edge portion of the glass plate extending to the vicinity of the outer side of the outline cut line, the first support surface having a predetermined area formed into the perfect circular shape supports the lower surface of the main body portion of the glass plate extending to the vicinity of the inner side of the outline cut line and the vicinity of the outer peripheral edge of the first support surface supports the lower surface of the edge portion of the glass plate extending to the vicinity of the outer side of the outline cut line, so that the second pressing member and the first support surface of the first support member can reliably clamp the main body portion of the glass plate extending to the vicinity of the outline cut line and the main body portion extending to the vicinity of the outline cut line is fixed by the second pressing member and the first support surface of the first support member, therefore the elastic deformation of the main body portion of the glass plate extending to the vicinity of the outline cut line can be prevented, the main body portion and the edge portion do not curve upward and the edge portion of the glass plate is bend-broken on the outline cut line and the end cut line by the pressing force of the first pressing member, and the edge portion of the glass plate can be smoothly and reliably bend-broken.

With the bend-breaking system and the bend-breaking processing method in which, after the bend-breaking cutter wheel and the first and second pressing members are raised by the first to third lifting mechanisms, the bend-breaking device moves in the horizontal direction on the side of the upper surface of the glass plate, the support device moves in the horizontal direction in synchronization with the bend-breaking device on the side of the lower surface of the glass plate, and the bend-breaking device and the support device move in synchronization, the bend-breaking device and the support device cooperate to perform the glass plate clamping means (glass plate clamping step) and the edge portion bend-breaking means (edge portion bend-breaking step), after the bend-breaking device and the support device move in synchronization in the horizontal direction to form a plurality of end cut lines at the edge portion of the glass plate, while maintaining clamping of the main body portion by the second pressing member and the first supporting member, the first pressing member is lowered in the up-down direction by the third lifting mechanism to press the edge portion extending to the outside of the outline cut line formed at the edge portion of the glass plate downward to bend-break the edge portion, so that all of the edge portions extending around the glass plate can be bend-broken smoothly and reliably.

With the bend-breaking system and the bend-breaking processing method in which the bend-breaking cutter wheel forms the end cut line in the edge portion of the glass plate in a state in which the first and second support members support the lower surface of the edge portion extending to the outside of the outline cut line of the glass plate while the bend-breaking device and the support device move in synchronization, the elastic deformation of the edge portion can be prevented by the first and second support members supporting the lower surface of the edge portion of the glass plate, and the end cut line can be reliably formed in the edge portion of the glass plate in a state in which the edge portion of the glass plate is held horizontally.

### Brief Description of Drawings

Fig. 1 is a side view of a glass plate processing system using a bend-breaking device.
Fig. 2 is a top view of the glass plate processing system using the bend-breaking device.
Fig. 3 is a top view illustrating an example of a glass plate to be processed by the glass plate processing system.
Fig. 4 is a side view of a loading area.
Fig. 5 is a top view of the loading area.
Fig. 6 is a front view of the loading area.
Fig. 7 is a top view of a cutting processing table and a grinding processing table.
Fig. 8 is a side view of the cutting processing table and the grinding processing table.
Fig. 9 is a diagram for explaining movement of the cutting processing table and the grinding processing table.
Fig. 10 is a side view of a cutting device as an example installed in a cutting processing area.
Fig. 11 is a front view of the cutting device.
Fig. 12 is a top view of the cutting device.
Fig. 13 is a top view of a bend-breaking processing table.
Fig. 14 is a side view of the bend-breaking processing table.
Fig. 15 is a side view of a bend-breaking device.
Fig. 16 is a front view of the bend-breaking device.
Fig. 17 is a top view of the bend-breaking device.
Fig. 18 is an enlarged front view of the bend-breaking device.
Fig. 19 is an enlarged side view of the bend-breaking device.
Fig. 20 is a top view of the bend-breaking processing table in which a support device is exposed.
Fig. 21 is a front view of the bend-breaking processing table in which the support device is seen from the front.
Fig. 22 is a front view of a grinding device illustrated as an example installed in a grinding processing area.
Fig. 23 is a side view of the grinding device.
Fig. 24 is a top view of the grinding device.
Fig. 25 is a diagram illustrating an example of an end cut line forming procedure in the bend-breaking processing.
Fig. 26 is a diagram illustrating an example of a bend-breaking procedure in the bend-breaking processing.

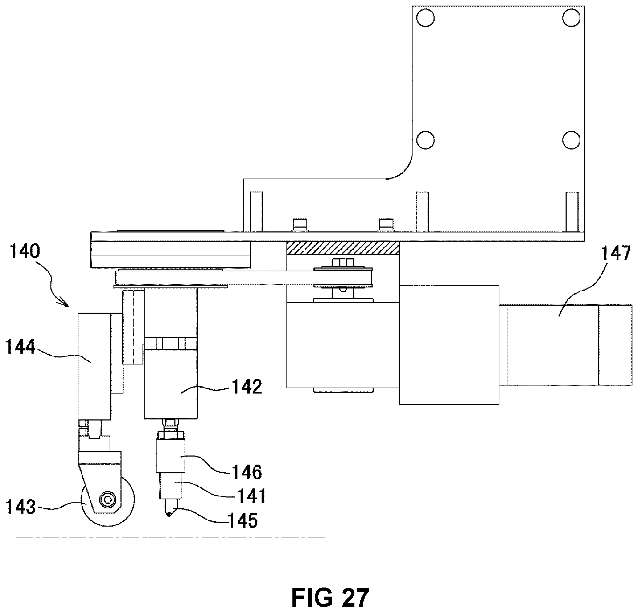

Fig. 27 is a side view of a bend-breaking device according to a conventional technology.

### Description of Embodiments

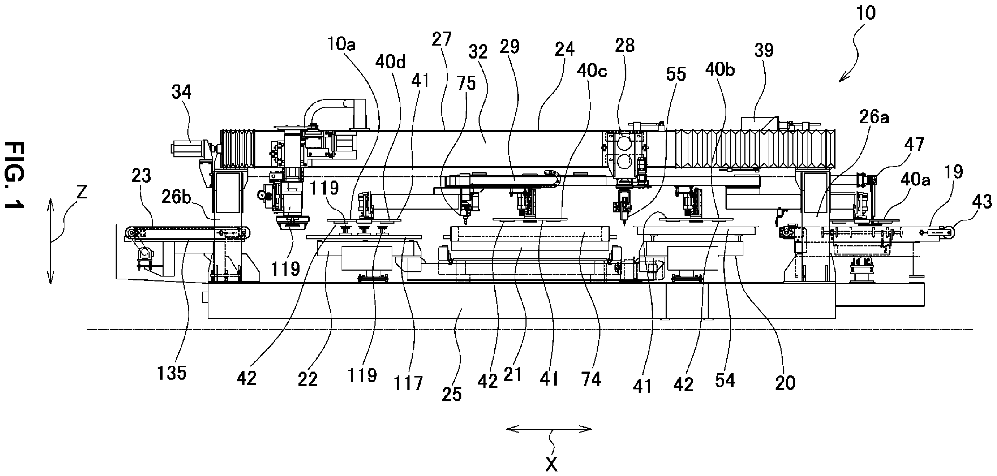

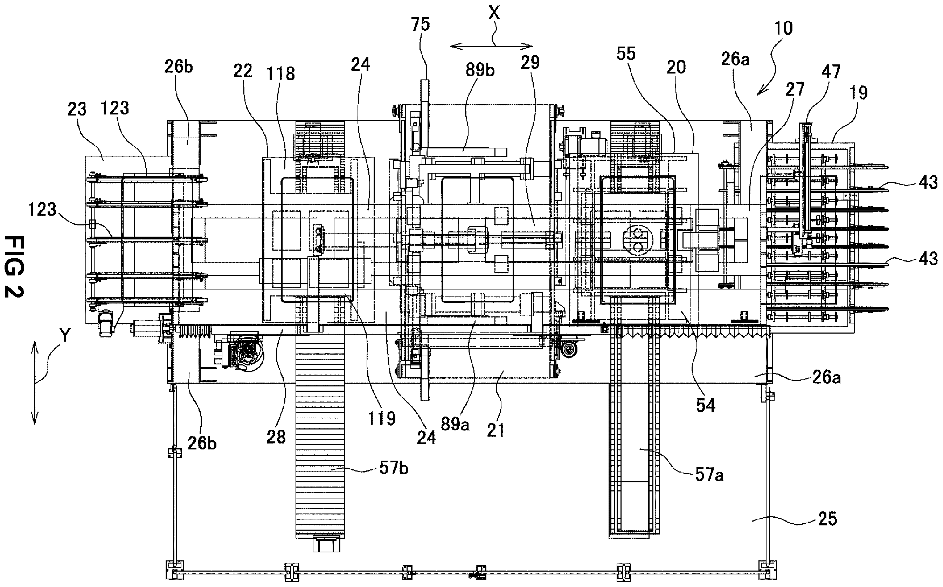

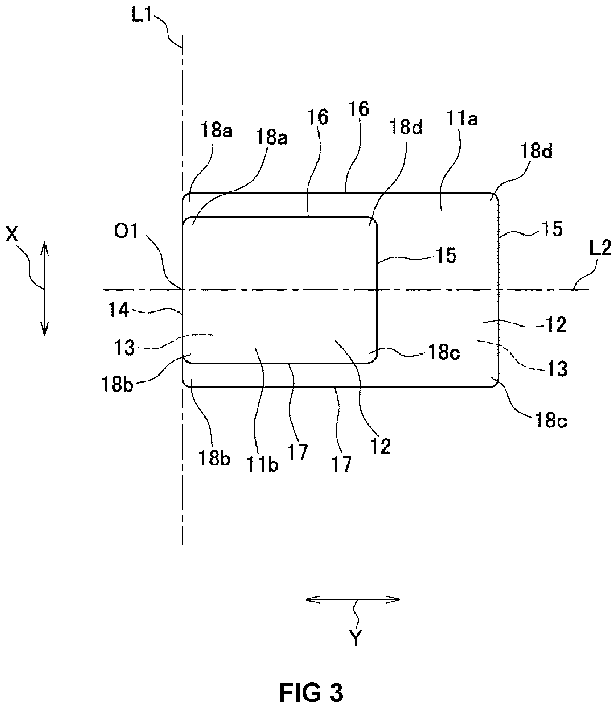

Referring to the accompanying drawings such as Fig. 1, which is a side view of a glass plate processing system 10 adopting a bend-breaking system 10a, the bend-breaking system 10a and a bend-breaking processing method according to the present invention will be described in detail as follows. Note that, Fig. 2 is a top view of the glass plate processing system 10 using a bend-breaking device 75, and Fig. 3 is a top view illustrating an example of glass plates 11a and 11b to be processed, processed by the glass plate processing system 10. In Fig. 3, the glass plates 11a and 11b are illustrated in a state of being positioned in a loading area 19. In Figs. 1 and 2, a front-rear direction (X-axis direction) is indicated by an arrow X, a width direction (Y-axis direction) is indicated by an arrow Y, and an up-down direction (Z-axis direction) is indicated by an arrow Z.

As illustrated in Fig. 3, the glass plates 11a and 11b to be processed (glass plates 11a and 11b before being processed) processed in the glass plate processing system 10 include an upper surface 12 having a predetermined area and a lower surface 13 having a predetermined area, has a predetermined thickness, and is formed into a rectangle (quadrangle) a planar shape of which is elongated in the width direction. The glass plates 11a and 11b to be processed include a first side edge 14 (one side edge) and a second side edge 15 (the other side edge) that face each other with a distance therebetween in the width direction and extend in the front-rear direction, a front end edge 16 and a rear end edge 17 that face each other with a distance therebetween in the front-rear direction and extend in the width direction, and first to fourth corners 18a to 18d. Note that, the planar shape of the glass plate to be processed is sometimes formed into a polygon other than a rectangle (quadrangle), and is sometimes formed so that each edge of the glass plate makes a curve, and the shape of the glass plate includes any shape.

The glass plate processing system 10 performs cutting processing, bend-breaking processing, and grinding processing on the glass plates 11a and 11b (plate-shaped glasses) to be processed having different sizes in which areas of the upper and lower surfaces 12 and 13 are different, from a large-sized (large-area) glass plate 11a in which the upper surface 12 and the lower surface 13 have a large area to a small-sized (small-area) glass plate 11b in which the upper surface 12 and the lower surface 13 have a small area. The glass plate processing system 10 is controlled by a controller (control device) (not illustrated).

The controller is a computer that includes a central processing unit (CPU or MPU) and a memory (main memory and cache memory) and is operated by an independent operating system (virtual OS), and includes a large-capacity hard disk (large-capacity storage area) built therein. An input device (not illustrated) such as a keyboard and a numeric key unit, and an output device (not illustrated) such as a monitor, a display, and a touch panel are connected to the controller.

In the large-capacity hard disk (large-capacity storage area) of the controller, a name and a product number of each of the glass plates 11a and 11b to be processed, a plurality of coordinate data (coordinates of side edges and coordinates of front and rear end edges of the glass plates 11a and 11b, coordinates of the first to fourth corners 18a to 18d, coordinates of the centers of the glass plates 11a and 11b and the like) of the glass plates 11a and 11b, which are different depending on the size (area) and the shape of each of the glass plates 11a and 11b to be processed, and image data (planar image (six-plane image) and a stereoscopic image (3D image)) of the glass plates 11a and 11b to be processed are stored (saved) in association with glass plate specification information (glass plate specification identifier) that specifies the glass plates 11a and 11b. As the glass plate specification information, production numbers, serial numbers and the like of the glass plates 11a and 11b are used, and in addition, the controller can generate a unique identifier that specifies the glass plates 11a and 11b, and the generated identifier can be used as the glass plate specification information.

In the cutting (cutting) processing in a cutting (cutting) processing area 20, the bend-breaking processing in a bend-breaking area 21, and the grinding processing in a grinding processing area 22 to be described later, the controller performs NC control on a cutting device 55, a bend-breaking device 75, and a grinding device 118 to be described later using the coordinate data of the glass plates 11a and 11b stored in the large-capacity hard disk. In the NC control, the controller quantifies a position where coordinate processing (XY plane coordinates) is started and a position of changing a processing direction by coordinates, and quantifies an operation direction, a distance, and a speed of two axes of an X-axis (front-rear direction) and a Y-axis (width direction). Signals obtained by quantifying command coordinates and axes are transmitted (input) to the cutting device 55, the bend-breaking device 75, and the grinding device 118. In the NC control, a shape desired to be processed is accurately represented by repeating "coordinates → axis → command".

The glass plate processing system 10 includes the loading area 19 (processing starting area) into which the glass plates 11a and 11b to be processed (before being processed) are loaded, an unloading area 23 (processing finishing area) from which the processed glass plates 11a and 11b are unloaded, processing areas 20 to 22 arranged (installed) between the loading area 19 and the unloading area 23 to process the glass plates 11a and 11b, and a conveyance mechanism 24 that sequentially conveys the glass plates 11a and 11b from a rear side (upstream) toward a front side (downstream) in the front-rear direction to the loading area 19, the processing areas 20 to 22, and the unloading area 23, and moves the cutting device 55 and the grinding device 118 in the front-rear direction. The processing areas 20 to 22 are arranged in the front-rear direction while facing each other with a distance therebetween in the front-rear direction between the loading area 19 and the unloading area 23.

The processing areas 20 to 22 include the cutting processing area 20 positioned forward (downstream) in the front-rear direction of the loading area 19 and separated forward from the loading area 19 by a predetermined dimension, the bend-breaking processing area 21 positioned forward (downstream) in the front-rear direction of the cutting processing area 20 and separated forward from the cutting processing area 20 by a predetermined dimension, and the grinding processing area 22 positioned forward (downstream) in the front-rear direction of the bend-breaking processing area 21 and separated forward from the bend-breaking processing area 21 by a predetermined dimension. The cutting processing area 20, the bend-breaking processing area 21, and the grinding processing area 22 are formed on a system stand 25 (machine stand) formed in a quadrangular shape elongated in the front-rear direction.

The conveyance mechanism 24 includes a pair of first pillars 26a positioned in a rear side of the system stand 25 and extending in the up-down direction, a pair of second pillars 26b positioned in a front part of the system stand 25 and extending in the up-down direction, a fixed frame 27 positioned between the first and second pillars 26a and 26b and extending in the front-rear direction, a first moving unit 28 (first moving means) installed on one side part of the fixed frame 27, and a second moving unit 29 (second moving means) installed on a lower part of the fixed frame 27.

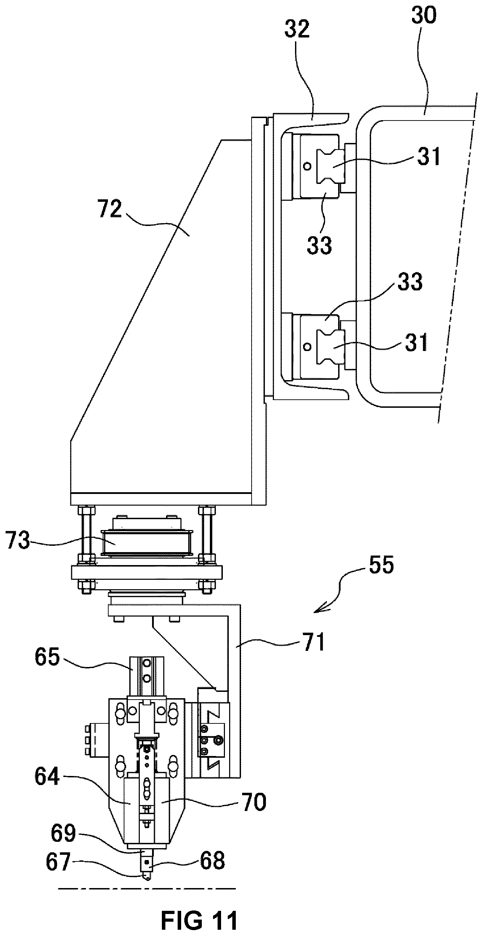

The first moving unit 28 allows the cutting device 55 and the grinding device 118 to advance and retreat (linearly move) in the front-rear direction (X-axis direction). The first moving unit 28 is formed of a first guide frame 30, a pair of first guide rails 31, a first feed screw (ball screw) (not illustrated), a first traveling frame 32, a plurality of first slide blocks (housing nuts) (not illustrated), a pair of first guide shoes 33, and a first servomotor 34 (refer to Fig. 11).

The first guide frame 30 is installed on the fixed frame 27 and extends in the front-rear direction. The first guide rails 31 face each other with a distance therebetween in the up-down direction, are fixed to one side part of the first guide frame 30 by a predetermined fixing means, and extend in the front-rear direction. The first feed screw (ball screw) is positioned between the first guide rails 31, is rotatably supported by a plurality of bearings (not illustrated) fixed to one side part of the first guide frame 30, and extends in the front-rear direction.

The first traveling frame 32 is positioned in one side part of the first guide frame 30 and extends in the front-rear direction. The first slide blocks (housing nuts) are arranged at a predetermined interval in the front-rear direction, and are fixed to a facing surface of the first traveling frame 32 facing the first guide frame 30 by a predetermined fixing means. The first guide shoes 33 face each other with a distance therebetween in the up-down direction, are fixed to the facing surface of the first traveling frame 32 facing the first guide frame 30 by a predetermined fixing means, and extend in the front-rear direction.

The first servomotor 34 is positioned in a front end of the first guide frame 30 and is coupled to the second pillar 26b via a bracket. A shaft of the first servomotor 34 is coupled and fixed to the other end of the first feed screw. The first feed screw rotates by rotation of the first servomotor 34, and the cutting device 55 and the grinding device 118 advance and retreat (linearly move) in the front-rear direction (X-axis direction) by the rotation of the first feed screw.

When the shaft of the first servomotor 34 rotates in a counterclockwise direction, the first feed screw rotates in the counterclockwise direction, the first slide block moves in the front-rear direction from a front side toward a rear side of the first guide frame 30 by the rotation of the first feed screw in the counterclockwise direction, and the first traveling frame 32 moves in the front-rear direction from the front side toward the rear side of the first guide frame 30 by the movement of the first slide block. Conversely, when the shaft of the first servomotor 34 rotates in a clockwise direction, the first feed screw rotates in the clockwise direction, the first slide block moves in the front-rear direction from the rear side toward the front side of the first guide frame 30 by the rotation of the first feed screw in the clockwise direction, and the first traveling frame 32 moves in the front-rear direction from the rear side toward the front side of the first guide frame 30 by the movement of the first slide block.

The second moving unit 29 allows glass plate first to fourth holders 40a to 40d to be described later to advance and retreat (linearly move) in the front-rear direction (X-axis direction). The second moving unit 29 is formed of a second guide frame 35, a pair of second guide rails 36, a second feed screw (ball screw) (not illustrated), a second traveling frame 37, a plurality of second slide blocks (housing nuts) (not illustrated), a pair of second guide shoes 38, a second servomotor 39, and the glass plate first to fourth holders 40a to 40d (glass plate first to fourth lifters).

The second guide frame 35 is installed on the fixed frame 27 and extends in the front-rear direction. The second guide rails 36 face each other with a distance therebetween in the width direction, are fixed on a lower part of the second guide frame 35 by a predetermined fixing means, and extend in the front-rear direction. The second feed screw (ball screw) is positioned between the second guide rails 36, is rotatably supported by a plurality of bearings (not illustrated) fixed on the lower part of the second guide frame 35, and extends in the front-rear direction.

The second traveling frame 37 is positioned in the lower part of the second guide frame 35 and extends in the front-rear direction. The second slide blocks (housing nuts) are arranged at a predetermined interval in the width direction, and are fixed to a facing surface of the second traveling frame 37 facing the second guide frame 35 by a predetermined fixing means. The second guide shoes 38 face each other with a distance therebetween in the width direction, are fixed to the facing surface of the second traveling frame 37 facing the second guide frame 35 by a predetermined fixing means, and extend in the front-rear direction.

The second servomotor 39 is positioned in a rear end of the second guide frame 35 and is fixed to the fixed frame 27. A shaft of the second servomotor 39 is coupled and fixed to one end of the second feed screw via a timing belt (and/or a gear). The second feed screw rotates by rotation of the second servomotor 39, and the glass plate first to fourth holders 40a to 40d advance and retreat (linearly move) in the front-rear direction (X-axis direction) by the rotation of the second feed screw.

When the shaft of the second servomotor 39 rotates in the clockwise direction, the second feed screw rotates in the clockwise direction, the second slide block moves in the front-rear direction from a rear side toward a front side of the second guide frame 35 by the rotation of the second feed screw in the clockwise direction, and the second traveling frame 37 (glass plate first to fourth holders 40a to 40d) moves in the front-rear direction from the rear side toward the front side of the second guide frame 35 by the movement of the second slide block. Conversely, when the shaft of the second servomotor 39 rotates in the counterclockwise direction, the second feed screw rotates in the counterclockwise direction, the second slide block moves in the front-rear direction from the front side to the rear side of the second guide frame 35 by the rotation of the second feed screw in the counterclockwise direction, and the second traveling frame 37 (glass plate first to fourth holders 40a to 40d) moves in the front-rear direction from the front side to the rear side of the second guide frame 35 by the movement of the second slide block.

Control units that control start and stop, the number of rotations, and a rotational speed of the first and second servomotors 34 and 39 are connected to the controller via an interface (wired or wireless) (not illustrated). The control unit of the first servomotor 34 drives the first servomotor 34 at a predetermined number of rotations and rotational speed when receiving a drive signal from the controller, and stops driving the first servomotor 34 when receiving a stop signal from the controller. The control unit of the second servomotor 39 drives the second servomotor 39 at a predetermined number of rotations and rotational speed when receiving a drive signal from the controller, and stops driving the second servomotor 39 when receiving a stop signal from the controller.

The glass plate first to fourth holders 40a to 40d are attached to a lower part of the second traveling frame 37, extend downward from the second traveling frame 37, and are arranged at equal intervals in the front-rear direction. The glass plate first to fourth holders 40a to 40d include a pad installing plate 41 extending in the front-rear direction, a suction pad 42 installed on the pad installing plate 41 and sucks to hold the glass plates 11a and 11b, a vacuum mechanism (air suction device) (air vacuum pump) (not illustrated), and a pad lifting mechanism (not illustrated). An air cylinder is used as the pad lifting mechanism. A control unit that controls start and stop of the vacuum mechanism and the pad lifting mechanism (air cylinder) is connected to the controller via an interface (wired or wireless) (not illustrated).

The glass plate first holder 40a reciprocates in the front-rear direction between the loading area 19 and the cutting processing area 20, advances from the loading area 19 toward the cutting processing area 20, and retreats from the cutting processing area 20 toward the loading area 19. The glass plate second holder 40b reciprocates in the front-rear direction between the cutting processing area 20 and the bend-breaking processing area 21, advances from the cutting processing area 20 toward the bend-breaking processing area 21, and retreats from the bend-breaking processing area 21 toward the cutting processing area 20. The glass plate third holder 40c reciprocates in the front-rear direction between the bend-breaking processing area 21 and the grinding processing area 22, advances from the bend-breaking processing area 21 toward the grinding processing area 22, and retreats from the grinding processing area 22 toward the bend-breaking processing area 21. The glass plate fourth holder 40d reciprocates in the front-rear direction between the grinding processing area 22 and the unloading area 23, advances from the grinding processing area 22 toward the unloading area 23, and retreats from the unloading area 23 toward the grinding processing area 22.

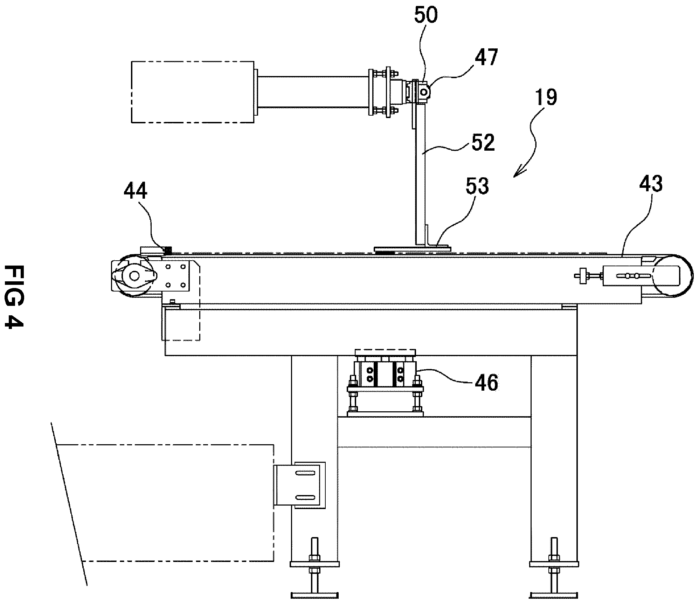

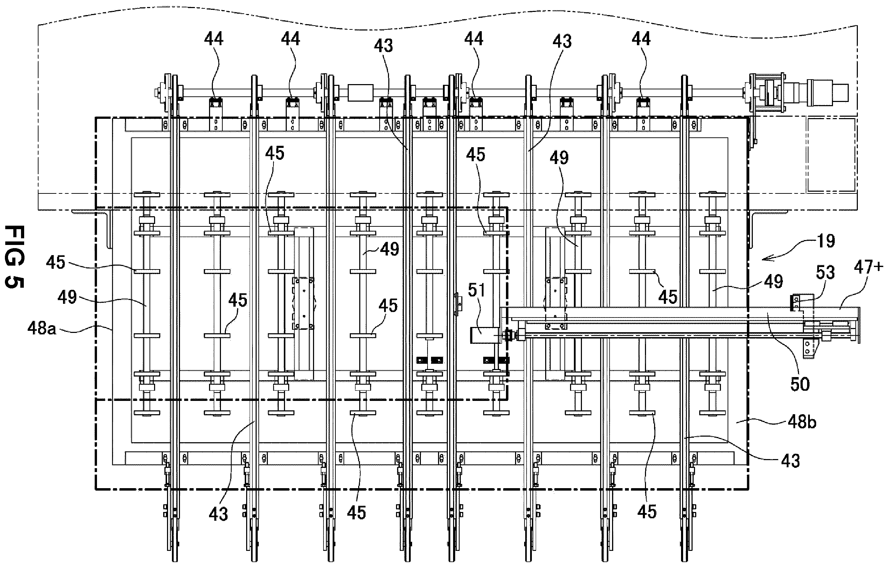

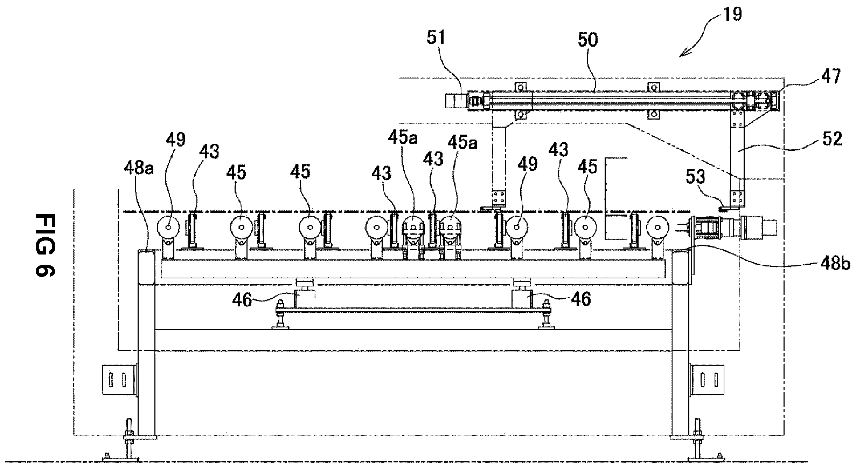

Fig. 4 is a side view of the loading area 19, and Fig. 5 is a top view of the loading area 19. Fig. 6 is a front view of the loading area 19. The loading area 19 includes a loading conveyor 43, a stopper 44, a roller 45, a pair of roller lifting mechanisms 46, and a moving mechanism 47. The loading area 19 is supported by a leg extending upward from a floor surface of the system stand 25. In the loading area 19, a first positioning means (first positioning step) and a second positioning means (second positioning step) are performed to position the glass plates 11a and 11b toward the processing areas 20 to 22.

A positioning first reference L1 (virtual positioning first reference line) extending in the front-rear direction is set and a positioning second reference L2 (virtual positioning second reference line) extending in the width direction is set in one side edge portion 48a of the loading area 19. The positioning first reference L1 is a virtual line linearly extending in the front-rear direction, which is assumed on the basis of an outermost side edge positioned on an outermost side in the width direction out of the first side edge 14 (one side edge) extending in the front-rear direction on one side in the width direction of the large-sized (large-area) glass plate 11a (glass plate 11a to be processed first). For example, in a case where the first side edge 14 (one side edge) of the glass plates 11a and 11b makes a curve, the outermost side edge is a vertex of the curve positioned on the outermost side in the width direction. In a case where the first side edge 14 (one side edge) of the glass plates 11a and 11b linearly extends in the front-rear direction, the first side edge 14 (one side edge) is the outermost side edge.

In the positioning first reference L1, the outermost side edge positioned on the outermost side in the width direction out of the first side edge 14 (one side edge) extending in the front-rear direction on one side in the width direction of the glass plates 11a and 11b is positioned. Herein, positioning the outermost side edge in the positioning first reference L1 includes not only a case where the outermost side edge completely coincides with the positioning first reference L1, but also a case where the outermost side edge is positioned in the vicinity of (nearest to) an inner side in the width direction of the positioning first reference L1, or a case where the outermost side edge is positioned in the vicinity of (nearest to) an outer side in the width direction of the positioning first reference L1.

In the positioning second reference L2, a front-rear direction center O1 of the first side edge 14 (one side edge) extending in the front-rear direction on one side in the width direction of the glass plates 11a and 11b (center line L2 extending in the width direction while dividing a dimension in the front-rear direction of the glass plates 11a and 11b into two) is positioned. Herein, positioning the front-rear direction center O1 (center line L2) in the positioning second reference L2 includes not only a case where the front-rear direction center O1 (center line L2) completely coincides with the positioning second reference L2, but also a case where the front-rear direction center O1 (center line L2) is positioned in the vicinity of (nearest to) a front side in the front-rear direction of the positioning second reference L2, or a case where the front-rear direction center O1 (center line L2) is positioned in the vicinity of (nearest to) a rear side in the front-rear direction of the positioning second reference L2.

The controller (glass plate processing system 10) calculates a dimension in the width direction of each of the glass plates 11a and 11b using the coordinate data of each of the glass plates 11a and 11b stored in the large-capacity hard disk, determines a first moving dimension (first moving distance) in the width direction for positioning the first side edge 14 (one side edge) of the glass plates 11a and 11b in the positioning first reference L1 (virtual positioning first reference line) according to a difference in the calculated dimension in the width direction (Y-axis direction) of the glass plates 11a and 11b, and determines the number of rotations (the number of rotations of a shaft for moving the glass plates 11a and 11b by a first moving dimension (first moving distance) in the width direction) of a shaft of a third servomotor 51 to be described later on the basis of the determined first moving dimension. The controller (glass plate processing system 10) stores (saves) the determined first moving dimension and the determined number of rotations of the shaft of the third servomotor 51 in the large-capacity hard disk in a state of being associated with the glass plate specification information (glass plate specification identifier) of each of the glass plates 11a and 11b.

The controller (glass plate processing system 10) calculates the dimension in the front-rear direction (X-axis direction) of each of the glass plates 11a and 11b using the coordinate data of each of the glass plates 11a and 11b stored in the large-capacity hard disk, and determines a second moving dimension to a rear side in the front-rear direction of the loading conveyor 43 for positioning the front-rear direction center O1 of one side edge 14 of the glass plates 11a and 11b in the positioning second reference L2 (virtual positioning second reference line) according to a difference in the calculated dimension in the front-rear direction of the glass plates 11a and 11b. The controller (glass plate processing system 10) stores (saves) the determined second moving dimension in the large-capacity hard disk in a state of being associated with the glass plate specification information (glass plate specification identifier) of each of the glass plates 11a and 11b.

The controller (glass plate processing system 10) calculates a moving dimension (moving distance) in the front-rear direction of the cutting device 55 and the grinding device 118 on the basis of the calculated dimension in the front-rear direction of each of the glass plates 11a and 11b, and determines the number of rotations of the shaft of the first servomotor 34 (number of rotations of the shaft that moves the cutting device 55 and the grinding device 118 in the front-rear direction by the moving dimension (moving distance)) on the basis of the calculated moving dimension. The controller (glass plate processing system 10) stores (saves) the determined moving dimension and the determined number of rotations of the shaft of the first servomotor 34 in the large-capacity hard disk in a state of being associated with the glass plate specification information (glass plate specification identifier) of each of the glass plates 11a and 11b. Note that, the moving dimensions (moving distances) in the front-rear direction of the glass plate first to fourth holders 40a to 40d are stored (saved) in the large-capacity hard disk in a state of being associated with the glass plate specification information (glass plate specification identifier) of each of the glass plates 11a and 11b.

As illustrated in Figs. 4 to 6, the loading conveyors 43 are a plurality of endless tracks extending in the front-rear direction (X direction), and are arranged at predetermined intervals in the width direction (Y direction). A control unit that controls start and stop and a conveyance distance of the loading conveyors 43 is connected to the controller via an interface (wired or wireless) (not illustrated). The loading conveyors 43 convey the glass plates 11a and 1b from the rear side to the front side in the front-rear direction from a rear end (loading port) toward a front end (unloading port) of the loading area 19. The stoppers 44 are installed on the front end of the loading area 19 and are arranged so as to be spaced apart in the width direction. The front end edge 16 of the glass plates 11a and 11b moving forward from the rear end toward the front end of the loading area 19 by the loading conveyors 43 abut the stoppers 44. The stopper 44 is provided with a contact sensor (not illustrated). The contact sensor is connected to the controller, detects abutment (contact) of the front end edge 16 of the glass plates 11a and 11b with the stopper 44, and transmits an abutment signal to the controller when the front end edge 16 abuts the stopper 44.

A plurality of rollers 45 is rotatably attached to shafts 49 extending in the front-rear direction, and installed between the loading conveyors 43 together with the shafts 49. The rollers 45 are arranged at an interval of a predetermined dimension in the front-rear direction and are arranged at an interval of a predetermined dimension in the width direction. The rollers 45 rotate in a clockwise direction and in a counterclockwise direction with respect to the width direction, and abut the lower surface 13 of the glass plates 11a and 11b to hold the glass plates 11a and 11b so as to be movable in the width direction. The shafts 49 are attached to a pedestal positioned below the same via bearings.

A resistance plate (rubber ring) (not illustrated) that increases rotation resistance of a roller 45a is attached between the roller 45a out of the rollers 45 and the shaft 49. Resistance between the roller 45a and the shaft 49 increases by the resistance plate (rubber ring), the roller 45a does not rotate unless a rotational force exceeding the rotation resistance is applied to the roller 45a, and free rotation of the roller 45a is prevented by the resistance plate. In a case where the glass plates 11a and 11b are placed on the rollers 45, free movement of the glass plates 11a and 11b in the width direction is prevented by the roller 45a having large rotation resistance. Note that, it is only required that the resistance plate (rubber ring) is attached between at least one roller 45 of the rollers 45 and the shaft 49.

The roller lifting mechanisms 46 are installed below the pedestal to which the shaft 49 is attached, and are arranged at an interval of a predetermined distance in the width direction. An air cylinder is used as each of the roller lifting mechanisms 46, and the shafts 49 and the rollers 45 are lifted up and down in the up-down direction together with the pedestal by the roller lifting mechanisms 46 (air cylinders). A raising dimension and a lowering dimension of the roller lifting mechanisms 46 (air cylinders) are set in advance. A control unit that controls start and stop of the roller lifting mechanism 46 (air cylinder) is connected to the controller via an interface (wired or wireless) (not illustrated). When receiving a lift signal from the controller, the control unit of the roller lifting mechanism 46 (air cylinder) lifts the roller 45 (pedestal and shaft 49) up and down using the roller lifting mechanism 46.

Note that, while the loading conveyors 43 are conveying the glass plates 11a and 11b, the rollers 45 (pedestal and shafts 49) are lowered below the loading conveyors 43 by the roller lifting mechanism 46 (air cylinder), and the rollers 45 do not abut the lower surface 13 of the glass plates 11a and 11b. When the rollers 45 (pedestal and shafts 49) are raised by the roller lifting mechanism 46 (air cylinder), a part of a peripheral edge portion of the roller 45 is exposed above the loading conveyors 43, and the glass plates 11a and 11b are raised above the loading conveyors 43 by the rollers 45.

The moving mechanism 47 includes a rod 50 positioned above the loading conveyors 43 and the rollers 45, the third servomotor 51 installed on (built in) the rod 50, a feed screw (feed screw mechanism) (not illustrated) installed on (built in) the rod 50 and coupled to the shaft of the third servomotor 51, a moving arm 52 extending downward from the rod 50, and an abutting member 53 installed on a lower end of the moving arm 52.

The rod 50 is attached to a rear surface of the first pillar 26a and extends in the width direction. The moving arm 52 is movably installed on the feed screw, and linearly moves to one side and the other side in the width direction along the rod 50 by the rotation of the feed screw by the rotation of the shaft of the third servomotor 51. The abutting member 53 linearly moves to one side and the other side in the width direction together with the moving arm 52 along with the movement of the moving arm 52 in the width direction. The abutting member 53 abuts the second side edge (the other side edge) 15 of the glass plates 11a and 11b in a state in which the roller 45 raised by the roller lifting mechanism 46 (air cylinder) abuts the lower surface 13 of the glass plates 11a and 11b, and presses the glass plates 11a and 11b in the width direction so that the glass plates 11a and 11b move in the width direction.

A control unit that controls start and stop, the number of rotations, and a rotational speed of the third servomotor 51 is connected to the controller via an interface (wired or wireless) (not illustrated). The control unit of the third servomotor 51 drives the third servomotor 51 at a predetermined number of rotations and rotational speed when receiving a drive signal from the controller, and stops driving the third servomotor 51 when receiving a stop signal from the controller.

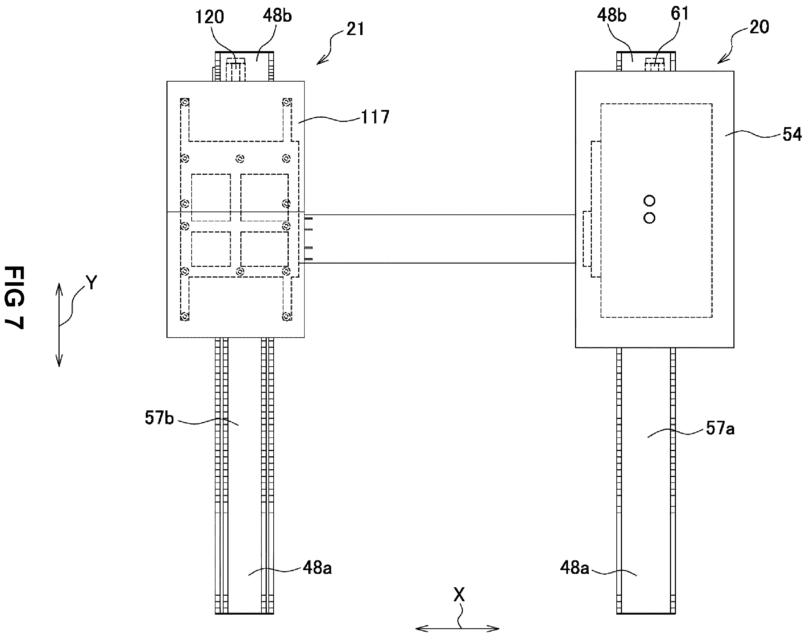

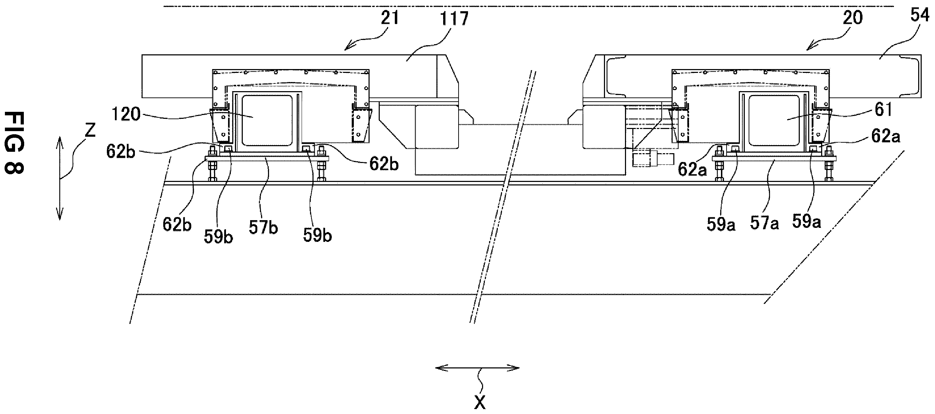

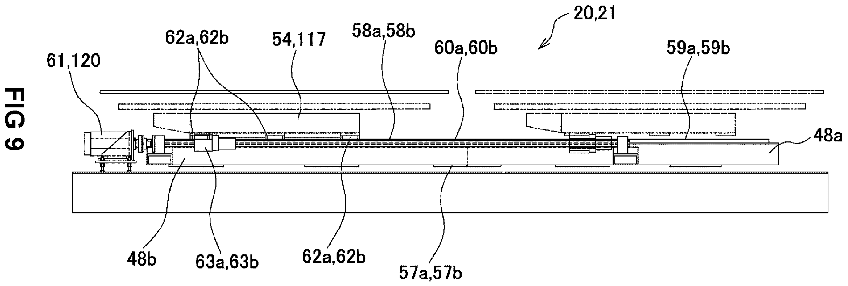

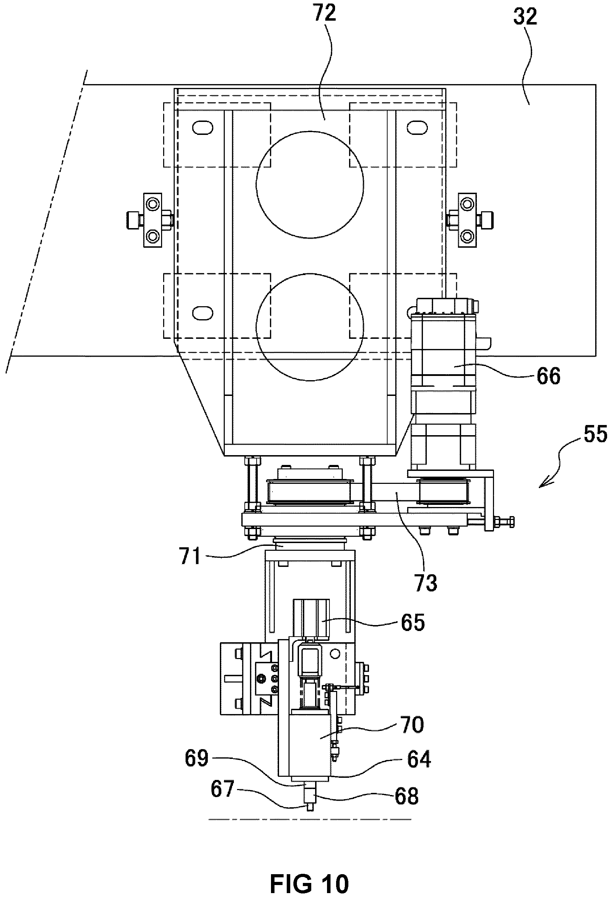

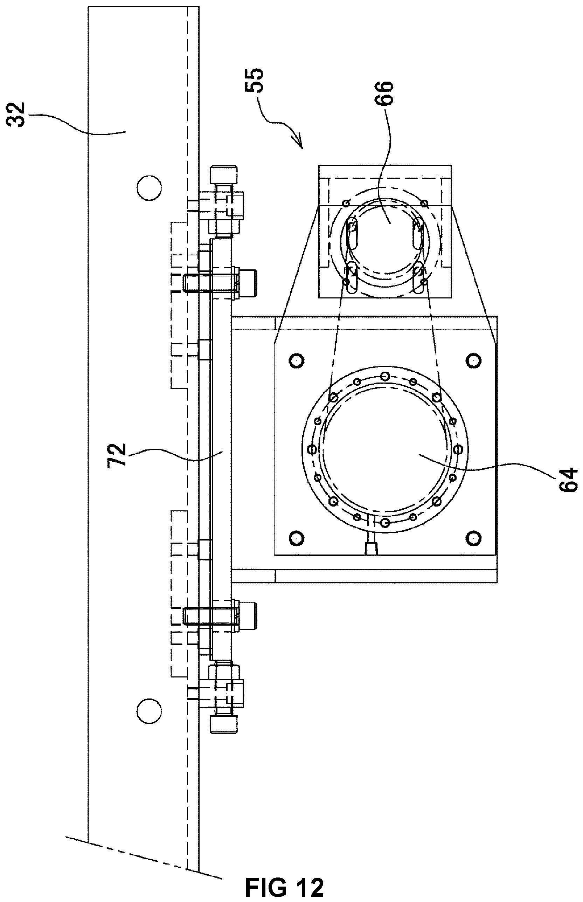

Fig. 7 is a top view of a cutting processing table 54 and a grinding processing table 117, and Fig. 8 is a side view of the cutting processing table 54 and the grinding processing table 117. Fig. 9 is a view for explaining movement of the cutting processing table 54 and the grinding processing table 117, and Fig. 10 is a side view of the cutting device 55 installed in the cutting processing area 20 as an example. Fig. 11 is a front view of the cutting device 55, and Fig. 12 is a top view of the cutting device 55. In Figs. 7 and 8, the front-rear direction (X-axis direction) is indicated by an arrow X, the width direction (Y-axis direction) is indicated by an arrow Y, and the up-down direction (Z-axis direction) is indicated by an arrow Z.

The cutting processing area 20 includes the cutting processing table 54 (cutting processing stand) on which the glass plates 11a and 11b positioned in the loading area 19 are placed, and the cutting device 55 (cutting device) that puts an outline cut line K1 (cut line) on edge portion 56b (peripheral edge portion) of the glass plates 11a and 11b placed on the cutting processing table 54.

The cutting processing table 54 is installed on a base lane 57a elongated in the width direction fixed on the floor surface of the system stand 25. The cutting processing table 54 uses a first moving mechanism 58a to move in the width direction in a state in which the positioned glass plates 11a and 11b are placed. The first moving mechanism 58a is formed of a traveling guide rail 59a, a feed screw 60a (ball screw), a fourth servomotor 61, a guide shoe 62a, and a slide block 63a (housing nut).

The traveling guide rails 59a are installed on an upper surface of the base lane 57a and extend in the width direction. The feed screw 60a (ball screw) is installed on the upper surface of the base lane 57a and on a side of the traveling guide rail 59a, and extends in the width direction. The fourth servomotor 61 is installed on the base lane 57a and reciprocates the cutting processing table 54 in the width direction. The other end of the feed screw 60a is coupled to a shaft of the fourth servomotor 61.

The feed screw 60a is rotatably supported by a bearing (not illustrated) fixed to the base lane 57a. The guide shoe 62a is attached to a lower surface of the cutting processing table 54 and extends in the width direction. The guide shoe 62a is slidably fitted to the traveling guide rail 59a. The slide block 63a (housing nut) is attached to the lower surface of the cutting processing table 54 and between the guide shoes 62a. The slide block 63a is rotatably screwed to the feed screw 60a.

When the shaft of the fourth servomotor 61 rotates in the clockwise direction, the feed screw 60a rotates in the clockwise direction, the rotation of the feed screw 60a in the clockwise direction causes the slide block 63a to move the feed screw 60a in the width direction from the second side edge portion 48b (the other side edge portion) of the cutting processing area 20 toward the first side edge portion 48a (one side edge portion), and the movement of the slide block 63a causes the cutting processing table 54 to move in the width direction from the second side edge portion 48b toward the first side edge portion 48a of the cutting processing area 20. Conversely, when the shaft of the fourth servomotor 61 rotates in the counterclockwise direction, the feed screw 60a rotates in the counterclockwise direction, the rotation of the feed screw 60a in the counterclockwise direction causes the slide block 63a to move the feed screw 60a in the width direction from the first side edge portion 48a (one side edge portion) of the cutting processing area 20 toward the second side edge portion 48b (the other side edge portion), and the movement of the slide block 63a causes the cutting processing table 54 to move in the width direction from the first side edge portion 48a toward the second side edge portion 48b of the cutting processing area 20.

The cutting device 55 includes a cutting jig 64, an air cylinder 65, and a fifth servomotor 66. The cutting jig 64 is formed of a cutting cutter wheel 67, a cutting cutter holder 68 (cutting holder), a cutter lifting shaft 69, and a cutter lifting guide 70. The cutting cutter wheel 67 is coupled to the cutting cutter holder 68 via a bearing (not illustrated), and freely rotates about an axis of the intervening bearing. The cutting cutter wheel 67 forms the outline cut line K1 at the edge portion 56b (peripheral edge portion) of the glass plates 11a and 11b.

The cutting cutter holder 68 is positioned immediately above the cutting cutter wheel 67 and coupled to the cutter wheel 67 to support the cutter wheel 67. The cutter lifting shaft 69 is positioned immediately above the cutting cutter holder 68 and coupled to the cutter holder 68 to support the cutter holder 68. The cutter lifting guide 70 is positioned immediately above the cutter lifting shaft 69 and coupled to the cutter lifting shaft 69 to support the cutter lifting shaft 69. The cutting jig 64 (including the air cylinder 65) is coupled to a support shaft 71 that is positioned immediately above the air cylinder 65 and rotatably supports the cutting jig 64. The support shaft 71 is attached to a bracket 72 positioned immediately above the same. The bracket 72 (cutting device 55) is coupled to the first moving unit 28 of the conveyance mechanism 24 described above that advances and retreats (linearly moves) in the front-rear direction (X-axis direction).

The air cylinder 65 is installed immediately above the cutter lifting shaft 69. The air cylinder 65 lifts (vertically moves) the cutting cutter wheel 67 (cutting cutter holder 68) up and down in the up-down direction (Z-axis direction), and lowers the cutter wheel 67 toward the upper surface 12 of the glass plates 11a and 11b to apply (provide) a cutting pressure (downward pressing force) to the cutter wheel 67 when forming the outline cut line K1 (cut line) in the edge portion 56b of the glass plates 11a and 11b. A shaft of the fifth servomotor 66 is coupled to the support shaft 71 via a timing belt 73. The fifth servomotor 66 adjusts a direction of a cutting direction of the cutting jig 64 (cutting cutter wheel 67) (an angle around an axis orthogonal to an XY plane).

In the cutting device 55, the control unit of the fifth servomotor 66 rotates the shaft of the motor 66 on the basis of an NC control signal transmitted from the controller, performs NC control on the cutting jig 64 (cutting cutter wheel 67), and the cutting jig 64 (cutting cutter wheel 67) forms (puts) the outline cut line K1 according to the shape desired to be processed in the edge portion 56b (peripheral edge portion) of the glass plates 11a and 11b according to the NC control.

Control units that control start and stop, the number of rotations, and a rotational speed of the fourth and fifth servomotors 61 and 66 are connected to the controller via an interface (wired or wireless) (not illustrated). The control unit of the fourth servomotor 61 drives the fourth servomotor 61 at a predetermined number of rotations and rotational speed when receiving a drive signal from the controller, and stops driving the fourth servomotor 61 when receiving a stop signal from the controller. The control unit of the fifth servomotor 66 drives the fifth servomotor 66 at a predetermined number of rotations and rotational speed when receiving a drive signal from the controller, and stops driving the fifth servomotor 66 when receiving a stop signal from the controller.

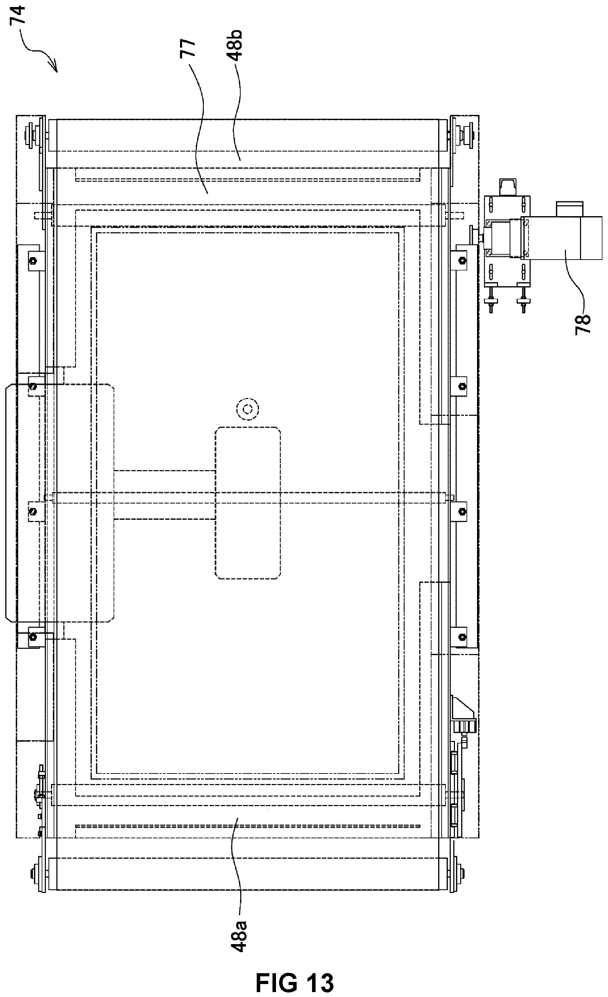

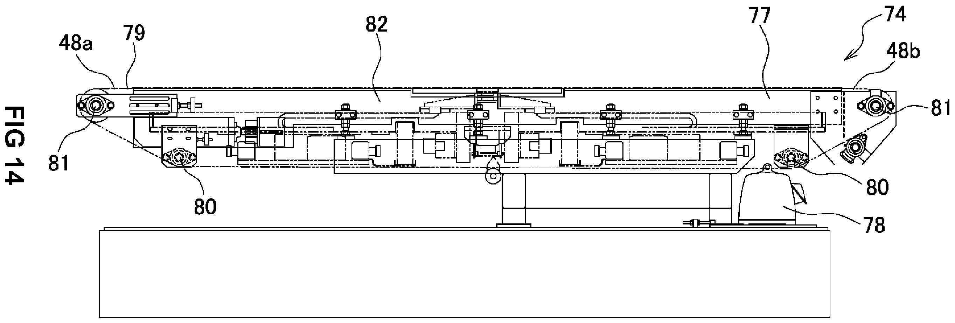

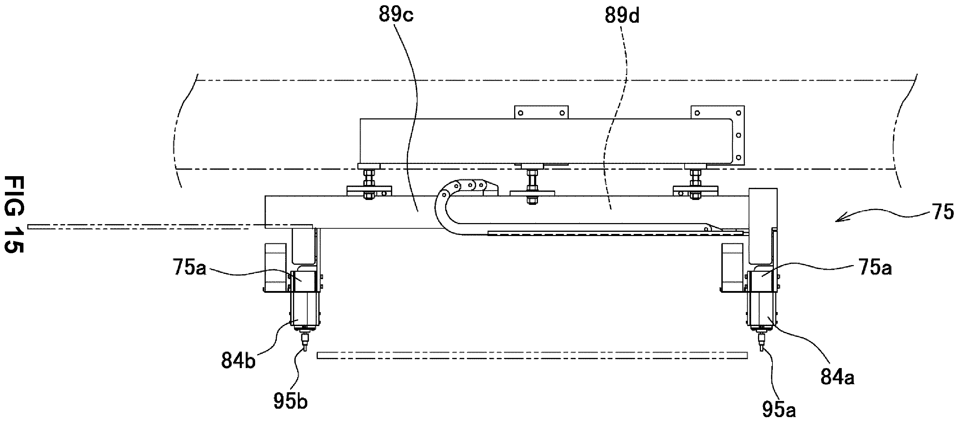

Fig. 13 is a top view of the bend-breaking processing table 74, and Fig. 14 is a side view of the bend-breaking processing table 74. The bend-breaking processing area 21 includes the bend-breaking processing table 74 (bend-breaking processing stand) on which the glass plates 11a and 11b positioned in the loading area 19 and subjected to the cutting processing in the cutting processing area 20 are placed, a bend-breaking device 75 that bend-breaks the edge portion 56b (peripheral edge portion) positioned outside the outline cut line K1 (cut line) of the glass plates 11a and 11b placed on the bend-breaking processing table 74, and a support device 76 that supports the glass plate (refer to Figs. 15 to 21).

The bend-breaking processing table 74 is formed of a belt conveyor 77 that travels in the width direction (Y-axis direction) and a conveyor driving motor 78 that causes the belt conveyor 77 to travel, and is installed on a base board fixed to the floor surface of the system stand 25. The belt conveyor 77 is formed of a belt 79 extending in the width direction, a plurality of pulleys 80 and carrier rollers 81 that support the belt 79, and a conveyor frame 82 that supports the belt 79, the pulleys 80, and the carrier rollers 81. The glass plates 11a and 11b subjected to the cutting processing are placed on the belt conveyor 77. The belt conveyor 77 conveys the edge portion 56b of the glass plates 11a and 11b bend-broken by the bend-breaking device 75 to the other side in the width direction (from the first side edge portion 48a to the second side edge portion 48b), and discards the bend-broken edge portion 56b of the glass plates 11a and 11b to a dust box (not illustrated).

A shaft of the conveyor driving motor 78 is coupled to the pulley 80 by a timing belt. A control unit that controls start and stop of the conveyor driving motor 78 is connected to the controller via an interface (wired or wireless) (not illustrated). The rotational speed (belt traveling speed) of the shaft of the conveyor driving motor 78 is set in advance, and is stored (saved) in the large-capacity hard disk of the controller in a state in which the rotational speed (belt traveling speed) is associated with specification information of the conveyor driving motor 78. The control unit of the conveyor driving motor 78 drives the driving motor 78 at a predetermined number of rotations when receiving a drive signal from the controller, and stops driving the driving motor 78 when receiving a stop signal from the controller. When the shaft of the conveyor driving motor 78 rotates in the clockwise direction, the rotation is transmitted to the pulley 80 via the timing belt, the pulley 80 rotates in the clockwise direction, and the belt 79 travels toward the other side in the width direction by the rotation of the pulley 80.

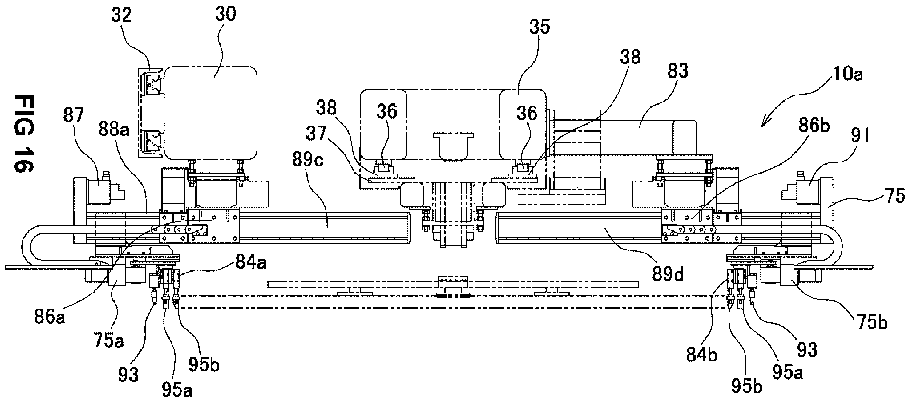

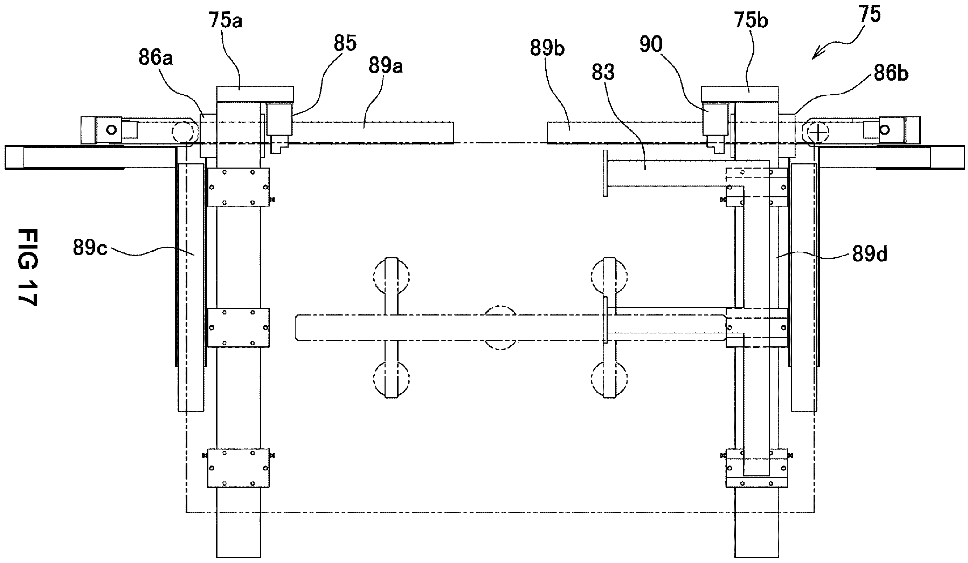

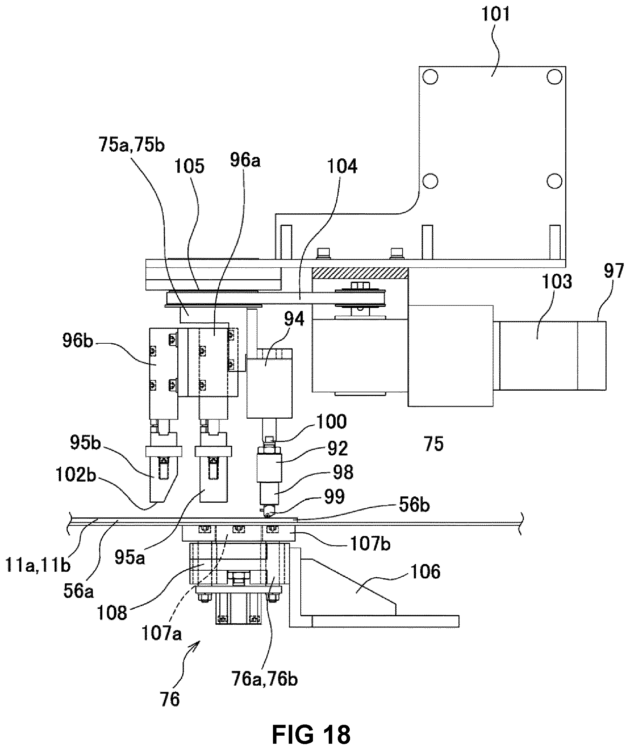

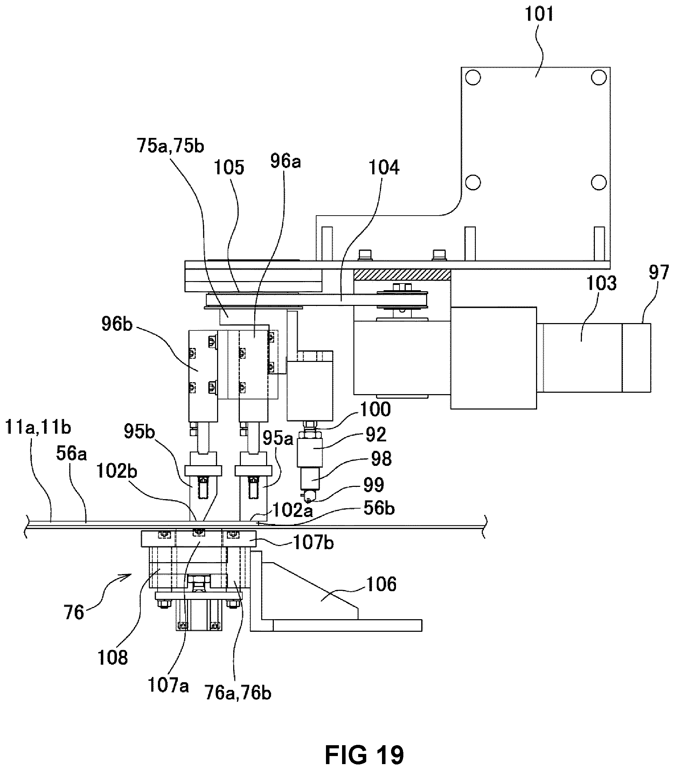

Fig. 15 is a side view of the bend-breaking device 75, and Fig. 16 is a front view of the bend-breaking device 75. Fig. 17 is a top view of the bend-breaking device 75, and Figs. 18 and 19 are enlarged front views of the bend-breaking device 75. Fig. 18 illustrates a state in which the bend-breaking cutter wheel 93 is lowered and the first and second pressing members 95a and 95b are raised. Fig. 19 illustrates a state in which the bend-breaking cutter wheel 93 is raised and the first and second pressing members 95a and 95b are lowered.

The bend-breaking device 75 is formed of two devices of a first bend-breaking device 75a and a second bend-breaking device 75b spaced apart in the width direction. The first bend-breaking device 75a is coupled to the first guide frame 30, and the second bend-breaking device 75b is coupled to a suspension frame 83. The suspension frame 83 is coupled to a side part of the second guide frame 35. The first bend-breaking device 75a includes a first bend-breaking jig 84a (bend-breaking jig), a sixth servomotor 85 (X-axis servomotor) and an X-axis first actuator 86a, a seventh servomotor 87 (Y-axis servomotor) and a Y-axis first actuator 88a, and an X-axis first actuator frame 89a and a Y-axis first actuator frame 89c. The X-axis first actuator frame 89a and the Y-axis first actuator frame 89c are coupled in series at their one ends.

The second bend-breaking device 75b includes a second bend-breaking jig 84b (bend-breaking jig), an eighth servomotor 90 (X-axis servomotor) and an X-axis second actuator 86b, a ninth servomotor 91 (Y-axis servomotor) and a Y-axis second actuator 88b, and an X-axis second actuator frame 89b and a Y-axis second actuator frame 89d. The X-axis second actuator frame 89b and the Y-axis second actuator frame 89d are coupled in series at their one ends.

As illustrated in Figs. 18 and 19, the bend-breaking jigs 84a and 84b of the first and second bend-breaking devices 75a and 75b are formed of a bend-breaking cutter holder 92, a bend-breaking cutter wheel 93, a holder lifting mechanism 94 (first lifting mechanism), a first pressing member 95a, a second pressing member 95b, a first pressing member lifting mechanism 96a (second lifting mechanism), a second pressing member lifting mechanism 96b (second lifting mechanism), and a rotation mechanism 97.

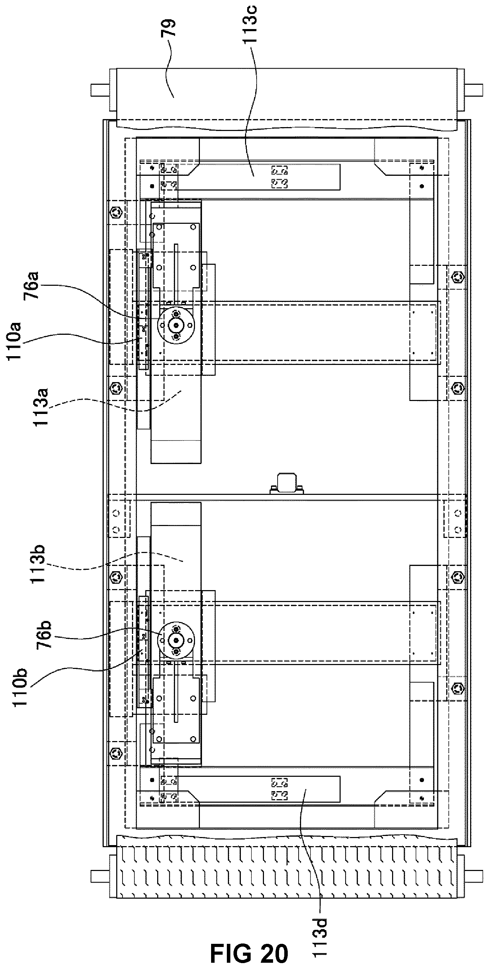

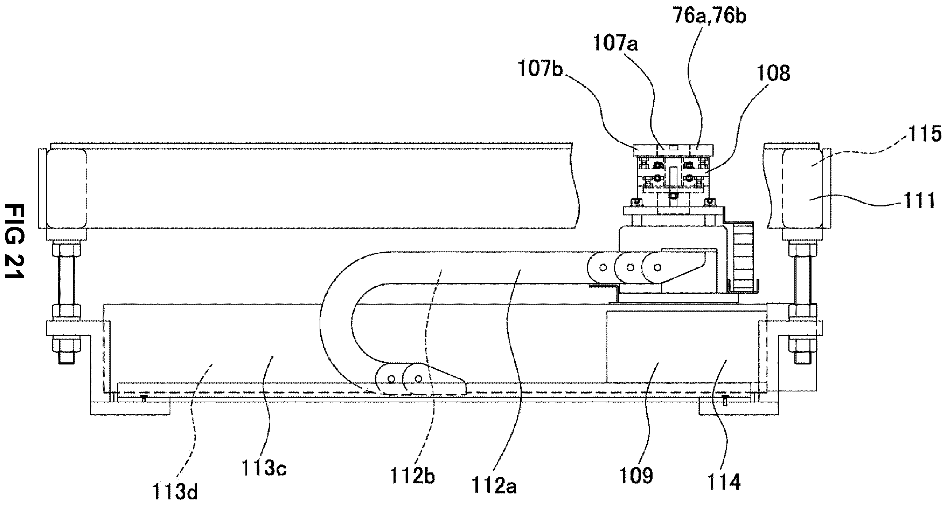

As illustrated in Figs. 20 and 21, the bend-breaking cutter holder 92 includes a holder main body 98 including a coupling unit, and a holder head 99 attached to a distal end of the holder main body 98, and extends in the up-down direction. The bend-breaking cutter wheel 93 is coupled to the holder head 99 (bend-breaking cutter holder 92) via a bearing (not illustrated), and rotates about an axis of the intervening bearing. Note that, a rotational angle of the bend-breaking cutter wheel 93 is limited to 10°. The bend-breaking cutter wheel 93 is rotatably (rollably) attached to a distal end of the holder head 99 via a rolling shaft, and a peripheral edge thereof rolls about the rolling shaft. The bend-breaking cutter wheel 93 forms (puts) an end cut line K2 (scribe) in the edge portion 56 of the glass plates 11a and 11b to be processed (edge portion 56 of the glass plates 11a and 11b extending outside the outline cut line K1).

The holder lifting mechanism 94 (first lifting mechanism) is installed immediately above the holder main body 98, and is coupled to a coupling unit 100 of the bend-breaking cutter holder 92 (holder main body 98). The holder lifting mechanism 94 is fixed to the bracket 101 by a fixing member. An air cylinder is used as the holder lifting mechanism 94. The holder lifting mechanism 94 (air cylinder) lifts up and down (vertically moves) the bend-breaking cutter holder 92 (bend-breaking cutter wheel 93) of the first and second bend-breaking jigs 84a and 84b in the up-down direction (Z-axis direction).

As illustrated in Fig. 18, the holder lifting mechanism 94 (air cylinder) lowers the cutter wheel 93 toward the upper surface 12 of the glass plates 11a and 11b at the time of bend-breaking processing on the edge portion 56b of the glass plates 11a and 11b, and applies (provides) an end cutting pressure (downward pressing force) to the cutter wheel 93. A raising dimension and a lowering dimension of the holder lifting mechanism are set in advance.

The first pressing member 95a is made of rubber or a synthetic resin having rubber elasticity, is positioned in the vicinity of a radially outer side of the bend-breaking cutter wheel 93, and extends in the up-down direction. The first pressing member 95a includes a first pressing surface 102a having a perfect circular shape having a predetermined area that abuts the upper surface 12 of the glass plates 11a and 1b. The first pressing member 95a presses the edge portion 56b of the glass plates 11a and 11b on which the outline cut line K1 (cut line) and the end cut line K2 are formed (glass plates 11a and 11b extending outside the outline cut line K1) downward.

The second pressing member 95b is made of rubber or a synthetic resin having rubber elasticity, is positioned in the vicinity of a radially outer side of the bend-breaking cutter wheel 93, and extends in the up-down direction. The second pressing member 95b includes a second pressing surface 102b having a semi-circular shape having a predetermined area that abuts the upper surface 12 of the glass plates 11a and 1b. The second pressing member 95b presses a main body portion 56a of the glass plates 11a and 11b on which the outline cut line K1 (cut line) and the end cut line K2 are formed (glass plates 11a and 11b extending inside the outline cut line K1) downward.

In the bend-breaking jigs 84a and 84b of the first and second bend-breaking devices 75a and 75b, the bend-breaking cutter wheel 93 is positioned on a radially outer side of the first pressing member around the first pressing member 95a, and the second pressing member 95b is positioned on a radially outer side of the first pressing member 95a around the first pressing member 95a and on the opposite side of the bend-breaking cutter wheel 93. The bend-breaking cutter wheel 93, the first pressing member 95a, and the second pressing member 95b are arranged in a line at equal intervals in the radial direction.

The first pressing member lifting mechanism 96a (second lifting mechanism) is installed immediately above the first pressing member 95a, is coupled to the top of the first pressing member 95a, and is fixed to the bracket 101 by a fixing member. An air cylinder is used as the first pressing member lifting mechanism 96a. The first pressing member lifting mechanism 96a (air cylinder) lifts (vertically moves) the first pressing member 95a of the first and second bend-breaking jigs 84a and 84b up and down in the up-down direction (Z-axis direction). As illustrated in Fig. 19, the first pressing member lifting mechanism 96a (second lifting mechanism) lowers the first pressing member 95a toward the upper surface 12 of the glass plates 11a and 11b at the time of the bend-breaking processing on the edge portion 56b of the glass plates 11a and 11b, and applies (provides) a downward pressing force to the first pressing member 95a. A raising dimension and a lowering dimension of the first pressing member 95a are set in advance. One bracket 101 is slidably attached to the X-axis first actuator frame 89a and the Y-axis first actuator frame 89c.

The second pressing member lifting mechanism 96b (third lifting mechanism) is installed immediately above the second pressing member 95b, is coupled to the top of the second pressing member 95b, and is fixed to the bracket 101 by a fixing member. An air cylinder is used as the second pressing member lifting mechanism 96b. The second pressing member lifting mechanism 96b (air cylinder) lifts (vertically moves) the second pressing member 95b of the first and second bend-breaking jigs 84a and 84b up and down in the up-down direction (Z-axis direction). As illustrated in Fig. 19, the second pressing member lifting mechanism 96b (third lifting mechanism) lowers the second pressing member 95b toward the upper surface 12 of the glass plates 11a and 11b at the time of the bend-breaking processing on the edge portion 56b of the glass plates 11a and 11b, and applies (provides) a downward pressing force to the second pressing member 95b. A raising dimension and a lowering dimension of the second pressing member 95b are set in advance. The other bracket 101 is slidably attached to the X-axis second actuator frame 89b and the Y-axis second actuator frame 89d.

The rotation mechanism 97 is formed of a tenth servomotor 103 (Z-axis servomotor), a timing belt 104, and a rotation shaft 105. The tenth servomotor 103 is attached to the bracket 101, and a shaft thereof is wound around the timing belt 104. The rotation shaft 105 is positioned immediately above the first pressing member lifting mechanism 96a (first pressing member 95a) and is coupled to the top of the first pressing member lifting mechanism 96a. An axis of the rotation shaft 105 coincides with an axis of the first pressing member 95a. The rotation shaft 105 is wound around the timing belt 104. The rotation mechanism 97 rotates the bend-breaking cutter wheel 93 and the first and second pressing members 95a and 95b in the axial direction.

When the shaft of the tenth servomotor 103 rotates in the clockwise direction, the rotation shaft 105 rotates in the clockwise direction, the first pressing member 95a (first pressing member lifting mechanism 96a) rotates (rotates) in the clockwise direction, and the bend-breaking cutter wheel 93 (holder lifting mechanism 94) and the second pressing member 95b (second pressing member lifting mechanism 96b) revolve around the first pressing member 95a (around the axis thereof) in the clockwise direction. When the shaft of the tenth servomotor 103 rotates in the counterclockwise direction, the rotation shaft 105 rotates in the counterclockwise direction, the first pressing member 95a (first pressing member lifting mechanism 96a) rotates (rotates) in the counterclockwise direction, and the bend-breaking cutter wheel 93 (holder lifting mechanism 94) and the second pressing member 95b (second pressing member lifting mechanism 96b) revolve around the first pressing member 95a (around the axis thereof) in the counterclockwise direction.

A control unit that controls start and stop of the holder lifting mechanism 94 (first lifting mechanism), a control unit that controls start and stop of the first pressing member lifting mechanism 96a (second lifting mechanism), a control unit that controls start and stop of the second pressing member lifting mechanism 96b (third lifting mechanism), and a control unit that controls start and stop, the number of rotations, and a rotation speed of the rotation mechanism 97 (tenth servomotor 103) are connected to the controller via an interface (wired or wireless) (not illustrated). When receiving a lift signal from the controller, the control unit of the holder lifting mechanism 94 lifts the bend-breaking cutter holder 92 (bend-breaking cutter wheel 93) up and down using the holder lifting mechanism 94 (air cylinder). When receiving a lift signal from the controller, the control unit of the first pressing member lifting mechanism 96a lifts the first pressing member 95a up and down using the first pressing member lifting mechanism 96a (air cylinder). When receiving a lift signal from the controller, the control unit of the second pressing member lifting mechanism 96b lifts the second pressing member 95b up and down using the second pressing member lifting mechanism 96b (air cylinder). The control unit of the rotation mechanism 97 drives the tenth servomotor 103 when receiving a drive signal from the controller, and stops driving the tenth servomotor 103 when receiving a stop signal from the controller.

The sixth servomotor 85 (X-axis servomotor) is installed on the X-axis first actuator frame 89a, and a shaft thereof is coupled to the X-axis first actuator 86a. The X-axis first actuator 86a includes a screw portion and a guide portion (not illustrated). When the shaft of the sixth servomotor 85 rotates in the clockwise direction, the screw portion of the X-axis first actuator 86a rotates in the clockwise direction, when the screw portion rotates in the counterclockwise direction, the first bend-breaking jig 84a of the first bend-breaking device 75a moves forward in the front-rear direction along the X-axis first actuator frame 89a together with the bracket 101, when the shaft of the sixth servomotor 85 rotates in the counterclockwise direction, the screw portion of the X-axis first actuator 86a rotates in the counterclockwise direction, and when the screw portion rotates in the counterclockwise direction, the first bend-breaking jig 84a of the first bend-breaking device 75a moves rearward in the front-rear direction along the X-axis first actuator frame 89a together with the bracket 101.

The seventh servomotor 87 (Y-axis servomotor) is installed on the Y-axis first actuator frame 89c, and a shaft thereof is coupled to the Y-axis first actuator 88a. The Y-axis first actuator 88a includes a screw portion and a guide portion (not illustrated). When the shaft of the seventh servomotor 87 rotates in the clockwise direction, the screw portion of the Y-axis first actuator 88a rotates in the clockwise direction, when the screw portion rotates in the counterclockwise direction, the first bend-breaking jig 84a of the first bend-breaking device 75a moves forward toward one side in the width direction along the Y-axis first actuator frame 89c together with the bracket 101, when the shaft of the seventh servomotor 87 rotates in the counterclockwise direction, the screw portion of the Y-axis first actuator 88a rotates in the counterclockwise direction, and when the screw portion rotates in the counterclockwise direction, the first bend-breaking jig 84a of the first bend-breaking device 75a moves toward the other side in the width direction along the Y-axis first actuator frame 89c together with the bracket 101.

Control units that control start and stop, the number of rotations, and a rotational speed of the sixth and seventh servomotors 85 and 87 are connected to the controller via an interface (wired or wireless) (not illustrated). The control unit of the sixth servomotor 85 drives the sixth servomotor 85 at a predetermined number of rotations and rotational speed when receiving a drive signal from the controller, and stops driving the sixth servomotor 85 when receiving a stop signal from the controller. The control unit of the seventh servomotor 87 drives the seventh servomotor 87 at a predetermined number of rotations and rotational speed when receiving a drive signal from the controller, and stops driving the seventh servomotor 87 when receiving a stop signal from the controller.

The eighth servomotor 90 (X-axis servomotor) is installed on the X-axis second actuator frame 89b, and a shaft thereof is coupled to the X-axis second actuator 86b. The X-axis second actuator 86b includes a screw portion and a guide portion (not illustrated). When the shaft of the eighth servomotor 90 rotates in the clockwise direction, the screw portion of the X-axis second actuator 86b rotates in the clockwise direction, when the screw portion rotates in the counterclockwise direction, the second bend-breaking jig 84b of the second bend-breaking device 75b moves forward in the front-rear direction along the X-axis second actuator frame 89b together with the bracket 101, when the shaft of the eighth servomotor 90 rotates in the counterclockwise direction, the screw portion of the X-axis second actuator 86b rotates in the counterclockwise direction, and when the screw portion rotates in the counterclockwise direction, the second bend-breaking jig 84b of the second bend-breaking device 75b moves rearward in the front-rear direction along the X-axis second actuator frame 89b together with the bracket 101.

The ninth servomotor 91 (Y-axis servomotor) is installed on the Y-axis second actuator frame 89d, and a shaft thereof is coupled to the Y-axis second actuator 88b. The Y-axis second actuator 88b includes a screw portion and a guide portion (not illustrated). When the shaft of the ninth servomotor 91 rotates in the clockwise direction, the screw portion of the Y-axis second actuator 88b rotates in the clockwise direction, when the screw portion rotates in the counterclockwise direction, the second bend-breaking jig 84b of the second bend-breaking device 75b moves toward one side in the width direction along the second actuator frame 89d together with the bracket 101, when the shaft of the ninth servomotor 91 rotates in the counterclockwise direction, the screw portion of the Y-axis second actuator 88b rotates in the counterclockwise direction, and when the screw portion rotates in the counterclockwise direction, the second bend-breaking jig 84b of the second bend-breaking device 75b moves toward the other side in the width direction along the second actuator frame 89d together with the bracket 101.

Control units that control start and stop, the number of rotations, and a rotational speed of the eighth and ninth servomotors 90 and 91 are connected to the controller via an interface (wired or wireless) (not illustrated). The control unit of the eighth servomotor 90 drives the eighth servomotor 90 at a predetermined number of rotations and rotational speed when receiving a drive signal from the controller, and stops driving the eighth servomotor 90 when receiving a stop signal from the controller. The control unit of the ninth servomotor 91 drives the ninth servomotor 91 at a predetermined number of rotations and rotational speed when receiving a drive signal from the controller, and stops driving the ninth servomotor 91 when receiving a stop signal from the controller.

Fig. 20 is a top view of the bend-breaking processing table 74 in which the support device 76 is exposed, and Fig. 21 is a front view of the bend-breaking processing table 74 in which the support device 76 is seen from the front. The support device 76 is formed of two devices of a first support device 76a and a second support device 76b spaced apart in the width direction. The first and second support devices 76a and 76b are coupled to the guide frame 106.

The first support device 76a includes a first support member 107a and a second support member 107b, a second support member lifting mechanism 108 (fourth lifting mechanism) that lifts the second support member 107b up and down in the up-down direction, an 11th servomotor 109 (X-axis serve motor) and an X-axis third actuator 110a, a 12th servomotor 111 (Y-axis serve motor) and a Y-axis third actuator 112a, and an X-axis third actuator frame 113a and a Y-axis third actuator frame 113c.

The second support device 76b includes the first support member 107a and the second support member 107b, the second support member lifting mechanism 108 (fourth lifting mechanism) that lifts the second support member 107b up and down in the up-down direction, a 13th servomotor 114 (X-axis serve motor) and an X-axis fourth actuator 117b, a 14th servomotor 115 (Y-axis serve motor) and a Y-axis fourth actuator 112b, and an X-axis fourth actuator frame 113b and a Y-axis fourth actuator frame 113d.

The first support member 107a is positioned on a radially inner side of the second support member 107b and includes a first support surface 116a having a predetermined area for supporting the lower surface 13 of the glass plates 11a and 11b. The first support surface 116a is formed into a flat perfect circular shape. The second support member 107b is positioned on a radially inner side of the first support member 107a and includes a second support surface 116b having a predetermined area for supporting the lower surface 13 of the glass plates 11a and 11b. The second support surface 116b is formed into a flat annular shape surrounding the first support member 107a (first support surface 116a).

The second support member lifting mechanism 108 (fourth lifting mechanism) is positioned immediately below the second support member 107b, and is fixed to the guide frame 106 by a fixing member. An air cylinder is used as the second support member lifting mechanism 108. The second support member lifting mechanism 108 (air cylinder) lifts (moves) the second support member 107b of the first and second support devices 76a and 76b up and down in the up-down direction (Z-axis direction). The second support member lifting mechanism 108 (fourth lifting mechanism) lowers the second support member 107b from the lower surface 13 of the glass plates 11a and 11b at the time of the bend-breaking processing on the edge portion 56b of the glass plates 11a and 11b, and forms a gap between the lower surfaces 13 of the glass plates 11a and 11b and the second support surface 116b (step between the first support surface 116a and the second support surface 116b). A lowering dimension of the second support member 107b is set in advance.

A control unit that controls start and stop of the second support member lifting mechanism 108 (fourth lifting mechanism) is connected to the controller via an interface (wired or wireless) (not illustrated). The control unit of the second support member lifting mechanism 108 lifts the second support member 107b up and down using the second support member lifting mechanism 108 (air cylinder) when receiving a lift signal from the controller.

The 11th servomotor 109 (X-axis servomotor) is installed on the X-axis third actuator frame 113a, and a shaft thereof is coupled to the X-axis third actuator 110a. The X-axis third actuator 110a includes a screw portion and a guide portion (not illustrated). When the shaft of the 11th servomotor 109 rotates in the clockwise direction, the screw portion of the X-axis third actuator 110a rotates in the clockwise direction, when the screw portion rotates in the counterclockwise direction, the first support device 76a moves forward in the front-rear direction along the X-axis third actuator frame 113a together with the guide frame 106, when the shaft of the 11th servomotor 109 rotates in the counterclockwise direction, the screw portion of the X-axis third actuator 110a rotates in the counterclockwise direction, and when the screw portion rotates in the counterclockwise direction, the first support device 76a moves rearward in the front-rear direction along the X-axis third actuator frame 113a together with the guide frame 106.

The 12th servomotor 111 (Y-axis servomotor) is installed on the Y-axis third actuator frame 113c, and a shaft thereof is coupled to the Y-axis third actuator 112a. The Y-axis third actuator 112a includes a screw portion and a guide portion (not illustrated). When the shaft of the 12th servomotor 111 rotates in the clockwise direction, the screw portion of the Y-axis third actuator 112a rotates in the clockwise direction, when the screw portion rotates in the counterclockwise direction, the first support device 76a moves toward one side in the width direction along the Y-axis third actuator frame 113c together with the guide frame 106, when the shaft of the 12th servomotor 111 rotates in the counterclockwise direction, the screw portion of the Y-axis third actuator 112a rotates in the counterclockwise direction, and when the screw portion rotates in the counterclockwise direction, the first support device 76a moves toward the other side in the width direction along the Y-axis third actuator frame 113c together with the guide frame 106. Note that, the first support device 76a moves in the front-rear direction and the width direction (horizontal direction) in synchronization with (in synchronization with) the first bend-breaking device 75a (first bend-breaking jig 84a).

Control units that control start and stop, the number of rotations, and a rotational speed of the 11th and 12th servomotors 109 and 111 are connected to the controller via an interface (wired or wireless) (not illustrated). The control unit of the 11th servomotor 109 drives the 11th servomotor 109 at a predetermined number of rotations and rotational speed when receiving a drive signal from the controller, and stops driving the 11th servomotor 109 when receiving a stop signal from the controller. The control unit of the 12th servomotor 111 drives the 12th servomotor 111 at a predetermined number of rotations and rotational speed when receiving a drive signal from the controller, and stops driving the 12th servomotor 111 when receiving a stop signal from the controller.

The 13th servomotor 114 (X-axis servomotor) is installed on the X-axis fourth actuator frame 113b, and a shaft thereof is coupled to the X-axis fourth actuator 110b. The X-axis fourth actuator 110b includes a screw portion and a guide portion (not illustrated). When a shaft of the 13th servomotor 114 rotates in the clockwise direction, the screw portion of the X-axis fourth actuator 110b rotates in the clockwise direction, when the screw portion rotates in the counterclockwise direction, the second support device 76b moves forward in the front-rear direction along the X-axis fourth actuator frame 113b together with the guide frame 106, when the shaft of the 13th servomotor 114 rotates in the counterclockwise direction, the screw portion of the X-axis fourth actuator 110b rotates in the counterclockwise direction, and when the screw portion rotates in the counterclockwise direction, the second support device 76b moves rearward in the front-rear direction along the X-axis fourth actuator frame 113b together with the guide frame 106.

The 14th servomotor 115 (Y-axis servomotor) is installed on the Y-axis fourth actuator frame 113d, and a shaft thereof is coupled to the Y-axis fourth actuator 112b. The Y-axis fourth actuator 112b includes a screw portion and a guide portion (not illustrated). When the shaft of the 14th servomotor 115 rotates in the clockwise direction, the screw portion of the Y-axis fourth actuator 112b rotates in the clockwise direction, when the screw portion rotates in the counterclockwise direction, the second support device 76b moves toward one side in the width direction along the Y-axis fourth actuator frame 113d together with the guide frame 106, when the shaft of the 14th servomotor 115 rotates in the counterclockwise direction, the screw portion of the Y-axis fourth actuator 112b rotates in the counterclockwise direction, and when the screw portion rotates in the counterclockwise direction, the second support device 76b moves toward the other side in the width direction along the Y-axis fourth actuator frame 113d together with the guide frame 106. Note that, the second support device 76b moves in the front-rear direction and the width direction (horizontal direction) in synchronization with (in synchronization with) the second bend-breaking device 75b (second bend-breaking jig 84b).

Control units that control start and stop, the number of rotations, and a rotational speed of the 13th and 14th servomotors 114 and 115 are connected to the controller via an interface (wired or wireless) (not illustrated). The control unit of the 13th servomotor 114 drives the 13th servomotor 114 at a predetermined number of rotations and rotational speed when receiving a drive signal from the controller, and stops driving the 13th servomotor 114 when receiving a stop signal from the controller. The control unit of the 14th servomotor 115 drives the 14th servomotor 115 at a predetermined number of rotations and rotational speed when receiving a drive signal from the controller, and stops driving the 14th servomotor 115 when receiving a stop signal from the controller.

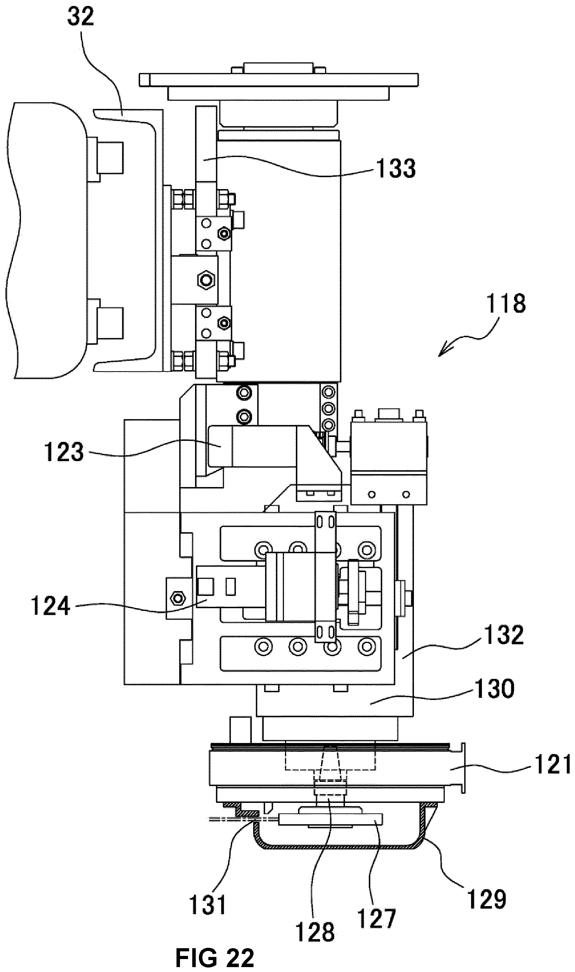

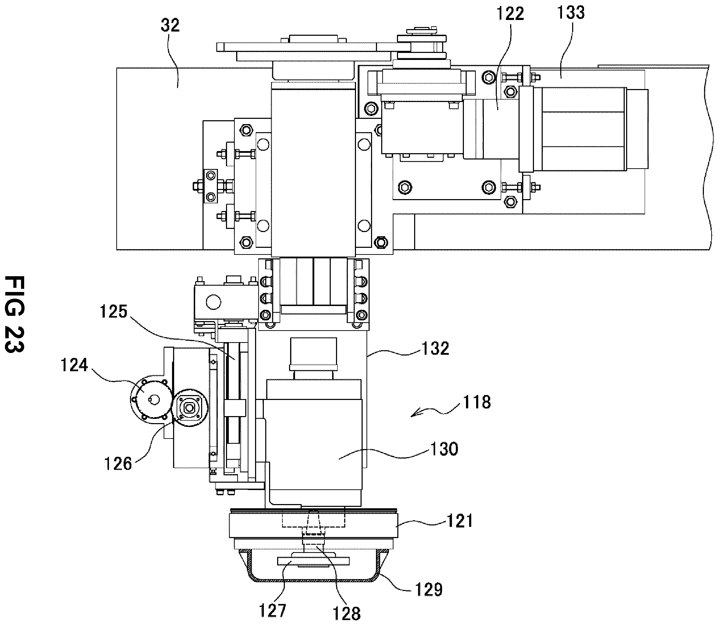

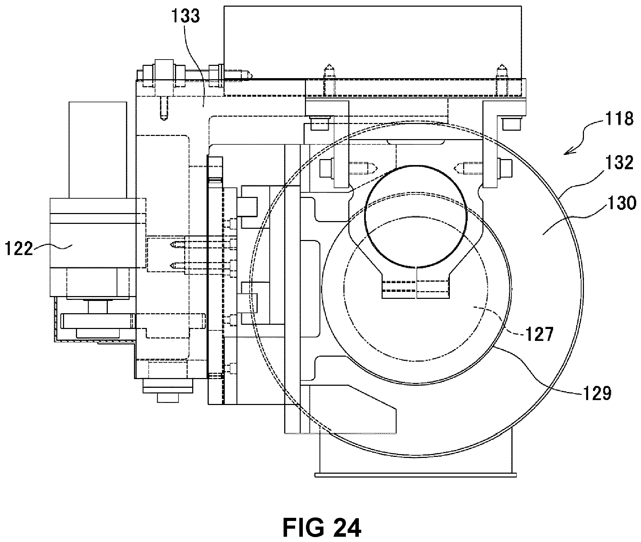

Fig. 22 is a front view of the grinding device 118 illustrated as an example installed in the grinding processing area 22, and Fig. 23 is a side view of the grinding device 118. Fig. 24 is a top view of the grinding device 118. The grinding processing area 22 includes the grinding processing table 117 (grinding processing stand) on which the glass plates 11a and 11b positioned in the loading area 19 and subjected to the cutting processing in the cutting processing area 20 and the bend-breaking processing in the bend-breaking processing area 21 are placed, and the grinding device 118 that grinds an edge (peripheral edge) of the main body portion 56a of the glass plates 11a and 11b placed on the grinding processing table 117.

The grinding processing table 117 is installed on a base lane 57b elongated in the width direction fixed to the floor surface of the system stand 25 (refer to Fig. 7). The grinding processing table 117 includes a plurality of suction pads 119 that sucks and holds the glass plates 11a and 11b, and a vacuum mechanism (air suction device) (air vacuum pump) (not illustrated) that provides a suction force to the suction pads 119 by setting a pressure of the suction pads 119 to a negative pressure. A control unit that controls start and stop of the vacuum mechanism is connected to the controller via an interface (wired or wireless) (not illustrated).

The grinding processing table 117 moves in the width direction in a state in which the positioned glass plates 11a and 11b are placed using the second moving mechanism 58b. The second moving mechanism 58b is formed of a traveling guide rail 59b, a feed screw 60b (ball screw), a 15th servomotor 120, a guide shoe 62b, and a slide block 63b (housing nut). The traveling guide rails 59b are installed on an upper surface of the base lane 57b and extend in the width direction. The feed screw 60b (ball screw) is installed on the upper surface of the base lane 57b and on a side of the traveling guide rail 59b, and extends in the width direction. The 15th servomotor 120 is installed on the base lane 57b and reciprocates the grinding processing table 117 in the width direction. The other end of the feed screw 60b is coupled to a shaft of the 15th servomotor 120.

A control unit that controls start and stop, the number of rotations, and a rotational speed of the 15th servomotor 120 is connected to the controller via an interface (wired or wireless) (not illustrated). The control unit of the 15th servomotor 120 drives the 15th servomotor 120 at a predetermined number of rotations and rotational speed when receiving a drive signal from the controller, and stops driving the 15th servomotor 120 when receiving a stop signal from the controller.

The feed screw 60b is rotatably supported by a bearing (not illustrated) fixed to the base lane 57b. The guide shoe 62b is attached to a lower surface of the grinding processing table 117 and extends in the width direction. The guide shoe 62b is slidably fitted to the traveling guide rail 59b. The slide block 63b (housing nut) is attached to the lower surface of the grinding processing table 117 and between the guide shoes 62b. The slide block 63b is rotatably screwed to the feed screw 60b.

When the shaft of the 15th servomotor 120 rotates in the clockwise direction, the feed screw 60b rotates in the clockwise direction, the rotation of the feed screw 60b in the clockwise direction causes the slide block 63b to move the feed screw 60b in the width direction from the other side edge portion 48b of the grinding processing area 22 toward the one side edge portion 48a, and the movement of the slide block 63b causes the grinding processing table 117 to move in the width direction from the other side edge portion 48b of the grinding processing area 22 toward the one side edge portion 48a. When the shaft of the 15th servomotor 120 rotates in the counterclockwise direction, the feed screw 60b rotates in the counterclockwise direction, the rotation of the feed screw 60b in the counterclockwise direction causes the slide block 63b to move the feed screw 60b in the width direction from the one side edge portion 48a of the grinding processing area 22 toward the other side edge portion 48b, and the movement of the slide block 63b causes the grinding processing table 117 to move in the width direction from the one side edge portion 48a of the grinding processing area 22 toward the other side edge portion 48b.

Note that, the 15th servomotor 120 is driven in synchronization with the fourth servomotor 61 in the cutting processing area 20, and the grinding processing table 117 moves from the other side edge portion 48b of the grinding processing area 22 to the one side edge portion 48a in synchronization with (in synchronization with) movement of the cutting processing table 54 from the other side edge portion 48b of the cutting processing area 20 to the one side edge portion 48a, or the grinding processing table 117 moves from the one side edge portion 48a of the grinding processing area 22 to the other side edge portion 48b in synchronization with (in synchronization with) movement of the cutting processing table 54 from the one side edge portion 48a of the cutting processing area 20 to the other side edge portion 48b. The control unit of the 15th servomotor 120 drives the 15th servomotor 120 at a predetermined number of rotations and rotational speed when receiving a drive signal from the controller, and stops driving the 15th servomotor 120 when receiving a stop signal from the controller.

The grinding device 118 includes a grinding jig 121, a 16th servomotor 122 (grinding Z-axis servomotor), a 17th servomotor 123 (lifting lowering servomotor), a 18th servomotor 124 (cutting servomotor), a grinding wheel lifting screw 125, and a grinding wheel cutting screw 126. The grinding jig 121 is formed of a grinding wheel 127, a grinding holder 128, a cover 129, and a spindle motor 130. The grinding wheel 127 is formed into a disk shape having a predetermined diameter, and grinds the edge (peripheral edge) of the main body portion 56a of the glass plates 11a and 1b by an outer peripheral surface thereof.

The grinding holder 128 is positioned immediately above the grinding wheel 127 and rotatably supports the grinding wheel 127. The cover 129 is positioned immediately below the grinding wheel 127 and covers an entire grinding wheel 127. The cover 129 is detachably attached to the grinding holder 128. A slit 131 into which the edge (peripheral edge) of the main body portion 56a of the glass plates 11a and 11b is inserted is formed on the cover 129. The spindle motor 130 is positioned immediately above the grinding wheel 127 (grinding holder 128), and is installed and housed in a motor housing 132. A shaft of the spindle motor 130 is coupled to the center of the grinding wheel 127. The rotation of the shaft of the spindle motor 130 rotates the grinding wheel 127.

The motor housing 132 is fixed to the first traveling frame 32 via a bracket 133. A control unit that controls start and stop, the number of rotations, and a rotational speed of the spindle motor 130 is connected to the controller via an interface (wired or wireless) (not illustrated). The control unit of the spindle motor 130 drives the spindle motor 130 at a predetermined number of rotations and rotational speed when receiving a drive signal from the controller, and stops driving the spindle motor 130 when receiving a stop signal from the controller.

The 16th servomotor 122 (grinding Z-axis servomotor) is positioned in the vicinity of a rear side of the grinding jig 121, and is coupled and fixed to the first traveling frame 32 via the bracket 133. A shaft of the 16th servomotor 122 is coupled to a support shaft of the motor housing 132. The 15th servomotor 120 finely adjusts an attitude in an axial direction (angle around the axis) of the grinding wheel 127 so that an outer peripheral surface of the grinding wheel 127 abuts the edge (peripheral edge) of the main body portion 56a of the glass plates 11a and 11b in parallel.

The 17th servomotor 123 (lifting servomotor) is positioned in the vicinity of the outer side in the width direction of the motor housing 132 (spindle motor 130), and is coupled and fixed to the motor housing 132. A shaft of the 17th servomotor 123 is coupled to the grinding wheel lifting screw 125, and rotates the grinding wheel lifting screw 125. The 17th servomotor 123 moves the grinding wheel 127 (motor housing 132) up and down according to a thickness dimension of the glass plates 11a and 11b, and finely adjusts a height of the grinding wheel 127 so that the height of the grinding wheel 127 coincides with the height of the edge of the main body portion 56a of the glass plates 11a and 11b and the outer peripheral surface of the grinding wheel 127 abuts the edge of the main body portion 56a of the glass plates 11a and 11b.

Note that, in an initial setting for starting processing of the glass plates 11a and 11b, a distance from an attachment reference surface of the grinding wheel 127 to the center of a groove is input to the controller. The controller calculates the number of rotations of the shaft of the 17th servomotor 123 on the basis of the input distance, and transmits the calculated number of rotations to the control unit of the 17th servomotor 123. The control unit of the 17th servomotor 123 rotates the shaft of the 17th servomotor 123 at the number of rotations received from the controller. When the shaft of the 17th servomotor 123 rotates in the clockwise direction at a predetermined number of rotations, the grinding wheel lifting screw 125 is lowered while rotating in the clockwise direction, so that the grinding wheel 127 (motor housing 132) is lowered. When the shaft of the 17th servomotor 123 rotates in the counterclockwise direction at a predetermined number of rotations, the grinding wheel lifting screw 125 is raised while rotating in the counterclockwise direction, so that the grinding wheel 127 (motor housing 132) is raised. As long as the thickness dimensions of the glass plates 11a and 11b to be processed are the same, once the fine adjustment of the height of the grinding wheel 127 is set, no subsequent adjustment is performed.

The 18th servomotor 124 (cutting servomotor) is positioned immediately below the 17th servomotor 123 (lifting servomotor) and in the vicinity of the outer side in the width direction of the motor housing 132 (spindle motor 130), and is coupled and fixed to the motor housing 132. A shaft of the 18th servomotor 124 is coupled to the grinding wheel cutting screw 126, and rotates the grinding wheel cutting screw 126. The 18th servomotor 124 moves the grinding wheel 127 (motor housing 132) in the width direction according to the width dimension (size) of the glass plates 11a and 11b, and finely adjusts the position in the front-rear direction of the grinding wheel 127 so that the outer peripheral surface of the grinding wheel 127 abuts the edge (peripheral edge) of the main body portion 56a of the glass plates 11a and 11b.

Control units that control start and stop, the number of rotations, and a rotational speed of the 16th to 18th servomotors 122 to 124 are connected to the controller via an interface (wired or wireless) (not illustrated). The control unit of the 16th servomotor 122 drives the 16th servomotor 122 at a predetermined number of rotations and rotational speed when receiving a drive signal from the controller, and stops driving the 16th servomotor 122 when receiving a stop signal from the controller. The control unit of the 17th servomotor 123 drives the 17th servomotor 123 at a predetermined number of rotations and rotational speed when receiving a drive signal from the controller, and stops driving the 17th servomotor 123 when receiving a stop signal from the controller. The control unit of the 18th servomotor 124 drives the 18th servomotor 124 at a predetermined number of rotations and rotational speed when receiving a drive signal from the controller, and stops driving the 18th servomotor 124 when receiving a stop signal from the controller.

Note that, in the initial setting for starting processing of the glass plates 11a and 11b, a diameter (diameter) of the grinding wheel 127 is input to the controller. The controller calculates the number of rotations of the shaft of the 18th servomotor 124 on the basis of the input diameter (diameter) of the grinding wheel 127, and transmits the calculated number of rotations to the control unit of the 18th servomotor 124. The control unit of the 18th servomotor 124 rotates the shaft of the 18th servomotor 124 at the number of rotations received from the controller. When the shaft of the 18th servomotor 124 rotates in the clockwise direction at a predetermined number of rotations, the grinding wheel cutting screw 126 moves rearward in the front-rear direction while rotating in the clockwise direction, so that the grinding wheel 127 (motor housing 132) moves rearward in the front-rear direction. When the shaft of the 18th servomotor 124 rotates in the counterclockwise direction at a predetermined number of rotations, the grinding wheel cutting screw 126 moves forward in the front-rear direction while rotating in the counterclockwise direction, so that the grinding wheel 127 (motor housing 132) moves forward in the front-rear direction. As long as the diameter (diameter) of the grinding wheel 127 is the same, once fine adjustment of the position in the front-rear direction of the grinding wheel 127 is set, no subsequent adjustment is performed.

In the unloading area 23, an unloading conveyor 134 is installed. The unloading area 23 is supported by a leg extending upward from the floor surface of the system stand 25. The unloading conveyors 134 are a plurality of endless tracks extending in the front-rear direction (X direction), and are arranged at predetermined intervals in the width direction (Y direction). A control unit that controls start and stop and a conveyance distance of the unloading conveyors 134 is connected to the controller via an interface (wired or wireless) (not illustrated). The unloading conveyors 134 convey the glass plates 11a and 11b from the rear side to the front side in the front-rear direction from the rear end (loading port) toward the front end (unloading port) of the unloading area 23.

Hereinafter, an example of processing (cutting processing, bend-breaking processing, grinding processing) of the glass plates 11a and 11b will be described. At the start of the processing, the glass plate first holder 40a stands by above the loading area 19, the glass plate second holder 40b stands by above the cutting processing area 20, the glass plate third holder 40c stands by above the bend-breaking processing area 21, and the glass plate fourth holder 40d stands by above the grinding processing area 22.

A plurality of various glass plate images is output (displayed) on a monitor, a display, and a touch panel (output device) connected to the controller. The specific glass plates 11a and 11b to be processed are clicked (tapped) (selected) out of the plurality of various glass plate images output (displayed) to the output device. When the specific glass plates 11a and 11b are selected, the controller selects an NC control program for processing to be performed on the glass plates 11a and 11b. The controller outputs (displays) an input area of the distance from the attachment reference surface of the grinding wheel 127 to the center of the groove, an input area of the dimension in the front-rear direction of the glass plates 11a and 11b, and an input area of the diameter (diameter) of the grinding wheel 127 to the output device.

After inputting the distance in the input area of the distance from the attachment reference surface of the grinding wheel 127 to the center of the groove and inputting the diameter in the input area of the diameter (diameter) of the grinding wheel 127, an input button output to (displayed on) the output device is clicked (tapped). When the distance and the diameter are input, the controller drives the 17th servomotor 123 to move the grinding wheel 127 (motor housing 132) up and down to finely adjust the height of the grinding wheel 127, and drives the 18th servomotor 124 to move the grinding wheel 127 (motor housing 132) in the width direction to finely adjust the position in the front-rear direction of the grinding wheel 127. After the fine adjustment is finished, the controller outputs (displays) a processing start button to (on) the output device. When the processing start button is clicked (tapped), the processing of the glass plates 11a and 11b is started.

The selected glass plates 11a and 11b to be processed (before being processed) are loaded into the loading area 19. Note that, in the loading area 19, a first positioning means (first positioning step) and a second positioning means (second positioning step) are performed. The glass plates 11a and 11b to be processed are automatically supplied to the loading conveyor 43 in the loading area 19 by an automatic supply device (not illustrated). In the automatic supply device, a plurality of glass plates 11a and 11b to be processed having the same area (same size) of the upper surface 12 and the lower surface 13 are stacked in the up-down direction, and the glass plates 11a and 11b are supplied from the automatic supply device to the loading conveyor 43 one by one.

An example of a procedure of positioning the glass plates 11a and 11b in the loading area 19 is as follows. The controller transmits a convey signal (ON signal) to the control unit of the loading conveyor 43, and the control unit of the loading conveyor 43 that has received an advance signal (ON signal) drives the loading conveyors 43. The glass plates 11a and 11b loaded into the loading area 19 are placed on the loading conveyor 43 in a state in which the lower surface 13 thereof abuts the loading conveyor 43. In the glass plates 11a and 11b, the first side edge 14 (one side edge 14) (including a case where the side edge 14 is curved (makes a curve)) is parallel to one side edge portion 48a of the loading area 19, and the second side edge (the other side edge) 15 is parallel to the other side edge portion 48b of the loading area 19.

The glass plates 11a and 11b placed on the loading conveyor 43 gradually move forward in the front-rear direction from the rear side to the front side of the loading area 19 by the loading conveyor 43. When the glass plates 11a and 11b move from the rear side toward the front side of the loading area 19 and the front end edge 16 of the glass plates 11a and 11b abuts the stopper 44, the contact sensor installed in the stopper 44 detects the abutment of the front end edge 16 of the glass plates 11a and 11b on the stopper 44, and transmits a contact (abutment) signal to the controller.

The controller that has received the contact signal transmits a stop signal (OFF signal) to the control unit of the loading conveyor 43, and the control unit of the loading conveyor 43 that has received the stop signal (OFF signal) stops driving the loading conveyors 43. Next, the controller transmits, to the control unit of the loading conveyors 43, the second moving dimension to the rear side in the front-rear direction of the loading conveyors 43 for positioning the front-rear direction center O1 (center line L2 extending in the width direction while dividing the dimension in the front-rear direction of the glass plates 11a and 11b into two) of the first side edge 14 of the glass plates 11a and 11b in the positioning second reference L2 (virtual positioning second reference line) of the loading area 19, and transmits a retreat signal (ON signal) to the control unit of the loading conveyors 43.

The control unit of the loading conveyor 43 that has received the second moving dimension and the retreat signal (ON signal) drives the loading conveyors 43 to move the glass plates 11a and 11b rearward in the front-rear direction by the second moving dimension by the loading conveyors 43. When the loading conveyors 43 move the glass plates 11a and 11b rearward in the front-rear direction by the second moving dimension, the front-rear direction center O1 (center line L2 of glass plates 11a and 11b) of one side edge in the width direction of the glass plates 11a and 11b is positioned in the positioning second reference L2 (virtual positioning second reference line) in the loading area 19 (second positioning means (second positioning step)).

After moving the glass plates 11a and 11b rearward in the front-rear direction by the second moving dimension, the controller transmits a stop signal (OFF signal) to the control unit of the loading conveyor 43, and the control unit of the loading conveyor 43 that has received the stop signal (OFF signal) stops driving the loading conveyors 43. Next, the controller transmits a raising signal (ON signal) to the control unit of the roller lifting mechanisms 46 (air cylinders). The control unit of the roller lifting mechanism 46 that has received the raising signal (ON signal) raises the roller lifting mechanisms 46 (air cylinders). The rollers 45 are raised by rise of the roller lifting mechanisms 46, a part of the peripheral edge portion of the rollers 45 is exposed above the loading conveyors 43, and in a state in which the raised rollers 45 abut the lower surface 13 of the glass plates 11a and 11b, the rollers 45 raise the glass plates 11a and 11b above the loading conveyor 43.

After the rise of the roller lifting mechanism 46 (air cylinder) is completed, the controller transmits the number of rotations of the third servomotor 51 calculated from the first moving dimension (first moving distance) in the width direction of the moving mechanism 47 for positioning the first side edge 14 of the glass plates 11a and 11b to the positioning first reference L1 (virtual positioning first reference line) to the control unit of the third servomotor 51, and transmits a forward rotation signal (ON signal) to the control unit of the third servomotor 51. The control unit that has received the number of rotations of the third servomotor 51 and the forward rotation signal (ON signal) drives the third servomotor 51 to rotate the shaft of the third servomotor 51 in the clockwise direction by a predetermined number of rotations.

The rotation of the feed screw by the rotation of the shaft of the third servomotor 51 in the clockwise direction gradually moves the abutting member 53 together with the moving arm 52 from a movement start point thereof to one side in the width direction. The abutting member 53 that moves to one side in the width direction abuts the second side edge 15 (the other side edge) of the glass plates 11a and 11b, and the abutting member 53 presses the second side edge (the other side edge) 15 of the glass plates 11a and 11b in the width direction so as to move the glass plates 11a and 11b from the other side to the one side in the width direction. The glass plates 11a and 11b pressed by the abutting member 53 move in the width direction from the other side toward one side in the width direction on the roller 45, and the outermost side edge positioned on the outermost side in the width direction out of the first side edge 14 in the width direction of the glass plates 11a and 11b is positioned in the positioning first reference L1 (virtual positioning first reference line) in the loading area 19 (first positioning means (first positioning step)).

When the movement of the abutting member 53 to one side in the width direction is finished and the outermost side edge positioned on the outermost side in the width direction out of the first side edge 14 in the width direction of the glass plates 11a and 11b is positioned in the positioning first reference L1 in the loading area 19, the controller transmits a stop signal (OFF signal) to the control unit of the third servomotor 51. The control unit of the third servomotor 51 that has received the stop signal (OFF signal) stops driving the third servomotor 51. After the drive of the third servomotor 51 is stopped, the controller transmits a reverse rotation signal (ON signal) to the control unit of the third servomotor 51. The control unit of the third servomotor 51 that has received the reverse rotation signal (ON signal) drives the third servomotor 51 to rotate the shaft of the third servomotor 51 in the counterclockwise direction by a predetermined number of rotations.

By the rotation of the feed screw by the rotation of the shaft of the third servomotor 51 in the counterclockwise direction, the abutting member 53 gradually moves to the other side in the width direction together with the moving arm 52, and the abutting member 53 returns to the movement start point. After the abutting member 53 returns to the movement start point, the controller transmits a stop signal (OFF signal) to the control unit of the third servomotor 51, and transmits a lowering signal (ON signal) to the control unit of the roller lifting mechanism 46 (air cylinder). The control unit of the third servomotor 51 that has received the stop signal (OFF signal) stops driving the third servomotor 51, and the control unit of the roller lifting mechanism 46 that has received the lowering signal (ON signal) lowers the roller lifting mechanisms 46 (air cylinders). When the roller lifting mechanisms 46 are lowered, the lower surface 13 of the glass plates 11a and 11b positioned by the first positioning means (first positioning step) and the second positioning means (second positioning step) abuts the loading conveyor 43.

With the bend-breaking system 10a and the bend-breaking processing method (glass plate processing system 10), after the loading conveyor 43 moves the glass plates 11a and 11b from the rear side to the front side in the loading area 19 and the front end edge 16 of the glass plates 11a and 11b abuts the stopper 44, the loading conveyor 43 moves the glass plates 11a and 11b rearward in the front-rear direction, so that the front-rear direction center O1 of the first side edge 14 in the width direction of the glass plates 11a and 11b (center line L2 of the glass plates 11a and 11b) is positioned in the positioning second reference L2 in the loading area 19, and after the second positioning means (second positioning step) positions the front-rear direction center O1 of one side edge 14 in the width direction of the glass plates 11a and 11b (center line L2 of the glass plates 11a and 11b) in the positioning second reference L2, the glass plates 11a and 11b are raised together with the roller 45 by the roller lifting mechanism 46 (air cylinder), and the second side edge 15 of the raised glass plates 11a and 11b is pressed to be moved in the width direction by the moving mechanism 47, so that the outermost side edge positioned on the outermost side in the width direction out of the first side edge 14 in the width direction of the glass plates 11a and 11b is positioned in the positioning first reference L1 in the loading area 19; therefore, the front-rear direction center O1 (center line L2 of the glass plate 11b) of the first side edge 14 extending in the front-rear direction on one side in the width direction of the glass plate 11b having a different size having different areas of the upper and lower surfaces 12 and 13 to be processed later can be accurately positioned in (coincide) the position of the front-rear direction center O1 (center line L2 of the glass plate 11a) of the first side edge 14 extending in the front-rear direction on one side in the width direction of the glass plate 11a to be processed earlier, and the outermost side edge out of the first side edge 14 extending in the front-rear direction on one side in the width direction of the glass plate 11b having different areas of the upper and lower surfaces 12 and 13 to be processed later can be accurately positioned in (coincide) the position of the outermost side edge out of the first side edge 14 extending in the front-rear direction on one side in the width direction of the glass plate 11a to be processed earlier.

Another example of the procedure of positioning the glass plates 11a and 11b in the loading area 19 is as follows. The controller transmits an advance signal (ON signal) to the control unit of the loading conveyor 43, and the control unit of the loading conveyor 43 that has received the advance signal (ON signal) drives the loading conveyors 43. The glass plates 11a and 11b loaded into the loading area 19 are placed on the loading conveyor 43 in a state in which the lower surface 13 thereof abuts the loading conveyor 43. The glass plates 11a and 11b placed on the loading conveyor 43 gradually move forward in the front-rear direction from the rear side (start position) of the loading area 19 toward the front side by the loading conveyor 43. When the glass plates 11a and 11b move from the rear side toward the front side in the loading area 19 and the front end edge 16 of the glass plates 11a and 11b abut the stopper 44, the contact sensor installed on the stopper 44 detects the abutment of the front end edge 16 of the glass plates 11a and 11b to the stopper 44, and transmits a contact signal to the controller.

The controller that has received the contact signal transmits a stop signal (OFF signal) to the control unit of the loading conveyor 43, and the control unit of the loading conveyor 43 that has received the stop signal (OFF signal) stops driving the loading conveyors 43. Next, the controller transmits a raising signal (ON signal) to the control unit of the roller lifting mechanisms 46 (air cylinders). The control unit of the roller lifting mechanism 46 that has received the raising signal (ON signal) raises the roller lifting mechanisms 46 (air cylinders). The rollers 45 are raised by rise of the roller lifting mechanisms 46, a part of the peripheral edge portion of the rollers 45 is exposed above the loading conveyors 43, and in a state in which the raised rollers 45 abut the lower surface 13 of the glass plates 11a and 11b, the rollers 45 raise the glass plates 11a and 11b above the loading conveyor 43.

After the rise of the roller lifting mechanism 46 (air cylinder) is completed, the controller transmits the number of rotations of the third servomotor 51 calculated from the first moving dimension (first moving distance) in the width direction of the moving mechanism 47 for positioning the first side edge 14 of the glass plates 11a and 11b to the positioning first reference L1 (virtual positioning first reference line) to the control unit of the third servomotor 51, and transmits a forward rotation signal (ON signal) to the control unit of the third servomotor 51. The control unit of the third servomotor 51 that has received the number of rotations and the forward rotation signal (ON signal) drives the third servomotor 51 to rotate the shaft of the third servomotor 51 in the clockwise direction by a predetermined number of rotations.

By the rotation of the feed screw by the rotation of the shaft of the third servomotor 51 in the clockwise direction, the abutting member 53 gradually moves from the movement start point thereof to one side in the width direction (the side edge portion 48a of the loading area 19) together with the moving arm 52. The abutting member 53 that moves to one side in the width direction abuts the second side edge 15 of the glass plates 11a and 11b, and the abutting member 53 presses the second side edge 15 of the glass plates 11a and 11b in the width direction so as to move the glass plates 11a and 11b from the other side to the one side in the width direction. The glass plates 11a and 11b pressed by the abutting member 53 move in the width direction from the other side toward one side in the width direction on the roller 45, and the outermost side edge positioned on the outermost side in the width direction out of the first side edge 14 in the width direction of the glass plates 11a and 11b is positioned in the positioning first reference L1 (virtual positioning first reference line) in the loading area 19 (first positioning means (first positioning step)).

When the movement of the abutting member 53 to one side in the width direction is finished and the first side edge 14 in the width direction of the glass plates 11a and 11b are positioned in the positioning first reference L1 in the loading area 19, the controller transmits a stop signal (OFF signal) to the control unit of the third servomotor 51. The control unit of the third servomotor 51 that has received the stop signal (OFF signal) stops driving the third servomotor 51. After the drive of the third servomotor 51 is stopped, the controller transmits a reverse rotation signal (ON signal) to the control unit of the third servomotor 51. The control unit of the third servomotor 51 that has received the reverse rotation signal (ON signal) drives the third servomotor 51 to rotate the shaft of the third servomotor 51 in the counterclockwise direction by a predetermined number of rotations.

By the rotation of the feed screw by the rotation of the shaft of the third servomotor 51 in the counterclockwise direction, the abutting member 53 gradually moves to the other side in the width direction (side edge portion 48b of the loading area 19) together with the moving arm 52, and the abutting member 53 returns to the movement start point. After the abutting member 53 returns to the movement start point, the controller transmits a stop signal (OFF signal) to the control unit of the third servomotor 51, and transmits a lowering signal (ON signal) to the control unit of the roller lifting mechanism 46 (air cylinder). The control unit of the third servomotor 51 that has received the stop signal (OFF signal) stops driving the third servomotor 51, and the control unit of the roller lifting mechanism 46 that has received the lowering signal (ON signal) lowers the roller lifting mechanisms 46 (air cylinders). When the roller lifting mechanisms 46 are lowered, the lower surface 13 of the glass plates 11a and 11b abut the loading conveyor 43.

After the lower surface 13 of the glass plates 11a and 11b abut the loading conveyor 43, the controller transmits the second moving dimension to the rear side in the front-rear direction of the loading conveyor 43 for positioning the front-rear direction center O1 of the first side edge 14 of the glass plates 11a and 11b in the positioning second reference L2 (virtual positioning second reference line) of the loading area 19 to the control unit of the loading conveyor 43, and transmits a convey signal (ON signal) to the control unit of the loading conveyor 43.

The control unit of the loading conveyor 43 that has received the second moving dimension and the convey signal (ON signal) drives the loading conveyors 43 to move the glass plates 11a and 11b rearward in the front-rear direction by the second moving dimension by the loading conveyors 43. When the loading conveyors 43 move the glass plates 11a and 11b rearward in the front-rear direction by the second moving dimension, the front-rear direction center O1 of the first side edge 14 in the width direction of the glass plates 11a and 11b (center line L2 extending in the width direction while dividing the dimension in the front-rear direction of the glass plates 11a and 11b into two) is positioned in the positioning second reference L2 (virtual positioning second reference line) in the loading area 19 (second positioning means (second positioning step)). After moving the glass plates 11a and 11b rearward in the front-rear direction by the second moving dimension, the controller transmits a stop signal (OFF signal) to the control unit of the loading conveyor 43, and the control unit of the loading conveyor 43 that has received the stop signal (OFF signal) stops driving the loading conveyors 43. The glass plates 11a and 11b are positioned by the first positioning means (first positioning step) and second positioning means (second positioning step).

With the bend-breaking system 10a and the bend-breaking processing method (glass plate processing system 10), after the loading conveyor 43 moves the glass plates 11a and 11b from the rear side to the front side in the loading area 19 and the front end edge 16 of the glass plates 11a and 11b abuts the stopper 44, the roller lifting mechanism 46 (air cylinder) raises the glass plates 11a and 11b together with the roller 45, and the second side edge 15 of the raised glass plates 11a and 11b is pressed to be moved in the width direction by the moving mechanism 47, so that the outermost side edge positioned on the outermost side in the width direction out of the first side edge 14 in the width direction of the glass plates 11a and 11b is positioned in the positioning first reference L1 in the loading area 19, and after the first positioning means (first positioning step) positions the outermost side edge positioned on the outermost side in the width direction out of the first side edge 14 in the width direction of the glass plates 11a and 11b in the positioning first reference L1, the glass plates 11a and 11b are lowered together with the roller 45 by the roller lifting mechanism 46 (air cylinder), and after the loading conveyor 43 moves the glass plates 11a and 11b from the rear side to the front side in the loading area 19 and the front end edge 16 of the glass plates 11a and 11b abuts the stopper 44, the loading conveyor 43 moves the glass plates 11a and 11b rearward in the front-rear direction, so that the front-rear direction center O1 (center line L2 of the glass plates 11a and 11b) of the first side edge 14 in the width direction of the glass plates 11a and 11b is positioned in the positioning second reference L2 in the loading area 19; therefore, the outermost side edge of the first side edge 14 extending in the front-rear direction on one side in the width direction of the glass plate 11b having a different size having different areas of the upper and lower surfaces 12 and 13 to be processed later can be accurately positioned in (coincide) the position of the outermost side edge of the first side edge 14 extending in the front-rear direction on one side in the width direction of the glass plate 11a to be processed earlier, and the front-rear direction center O1 (center line L2 of the glass plate 11b) of the side edge 14 extending in the front-rear direction on one side in the width direction of the glass plate 11b having a different size having different areas of the upper and lower surfaces 12 and 13 to be processed later can be accurately (positioned in) coincide the position of the front-rear direction center O1 (center line L2 of the glass plate 11a) of the side edge 14 extending in the front-rear direction on one side in the width direction of the glass plate 11a to be processed earlier.

With the bend-breaking system 10a and the bend-breaking processing method (glass plate processing system 10), in a case where a large-sized glass plate 11a having large areas of the upper and lower surfaces 12 and 13 and a small-sized glass plate 11b having smaller areas of the upper and lower surfaces 12 and 13 than those of the large-sized glass plate 11a are positioned by the first positioning means (first positioning step) and the second positioning means (second positioning step), as illustrated in Fig. 3, the first side edge 14 (one side edge) extending in the front-rear direction of the large-sized glass plate 11a and the first side edge 14 (one side edge) extending in the front-rear direction of the small-sized glass plate 11b are positioned in the positioning first reference L1 (virtual positioning first reference line) of the loading area 19, and the front-rear direction center O1 of the first side edge 14 extending in the front-rear direction of the large-sized glass plate 11a and the front-rear direction center O1 of the first side edge 14 extending in the front-rear direction of the small-sized glass plate 11b are positioned in the positioning second reference L2 (virtual positioning second reference line) of the loading area 19.

In the large-sized glass plate 11a and the small-sized glass plate 11b positioned by the first positioning means (first positioning step) and the second positioning means (second positioning step), the outermost side edge (in the illustrated glass plates 11a and 11b, the first side edge 14) positioned on the outermost side in the width direction out of the first side edge 14 of the glass plates 11a and 11b coincides in the positioning first reference L1 (virtual positioning first reference line), and the front-rear direction center O1 of the first side edge 14 of the glass plates 11a and 11b (center line L2 extending in the width direction while dividing the dimension of the glass plates 11a and 11b in the front-rear direction into two) coincides in the positioning second reference L2 (virtual positioning second reference line).

After the positioning of the glass plates 11a and 11b is completed by the first positioning means (first positioning step) and the second positioning means (second positioning step), the controller transmits a lowering signal (ON signal) to a control unit of a lifting mechanism (air cylinder) of the glass plate first holder 40a. The control unit of the lifting mechanism (air cylinder) that has received the lowering signal (ON signal) lowers the suction pad 42 toward the upper surface 12 of the glass plates 11a and 11b by the lifting mechanism. After the suction pad 42 of the glass plate first holder 40a abuts the upper surface 12 of the glass plates 11a and 11b, the controller transmits a suction signal (ON signal) to the control unit of the vacuum mechanism of the glass plate first holder 40a. The control unit of the vacuum mechanism that has received the suction signal (ON signal) activates the vacuum mechanism.

When the vacuum mechanism is activated, the glass plates 11a and 11b positioned in the loading area 19 are sucked by the suction pad 42. After activating the vacuum mechanism, the controller transmits a raising signal (ON signal) to a control unit of the pad lifting mechanism (air cylinder) of the glass plate first holder 40a. The control unit of the pad lifting mechanism (air cylinder) that has received the raising signal (ON signal) raises the suction pad 42 by the pad lifting mechanism. The glass plates 11a and 11b positioned by the first positioning means (first positioning step) and the second positioning means (second positioning step) in the loading area 19 are raised together with the suction pad 42 in a state of being sucked to the suction pad 42.

After the suction pad 42 (glass plates 11a and 11b) is raised, the controller transmits an advance signal (ON signal) to the control unit of the second servomotor 39. The control unit of the second servomotor 39 that has received the advance signal (ON signal) drives the second servomotor 39. The rotation of the axis of the second servomotor 39 moves the slide block in the front-rear direction from the rear side toward the front side in the second guide frame 35, so that the glass plate first holder 40a (glass plates 11a and 11b sucked to the suction pad 42) moves from the loading area 19 to the cutting processing area 20 (glass plate moving means (glass plate moving step)). Note that, the movement of the slide block causes the glass plate second to fourth holders 40b to 40d to move forward in the front-rear direction together with the glass plate first holder 40a.

After the glass plate first holder 40a moves to the cutting processing area 20, the controller transmits a lowering signal (ON signal) to the control unit of the pad lifting mechanism (air cylinder) of the glass plate first holder 40a. The control unit of the pad lifting mechanism (air cylinder) that has received the lowering signal (ON signal) lowers the suction pad 42 (glass plates 11a and 11b) onto the cutting processing table 54 in the cutting processing area 20 by the pad lifting mechanism. After the glass plates 11a and 11b sucked to the suction pad 42 of the glass plate first holder 40a abut the cutting processing table 54, the controller transmits a stop signal (OFF signal) to the control unit of the vacuum mechanism of the glass plate first holder 40a. The control unit of the vacuum mechanism that has received the stop signal (OFF signal) stops the activation of the vacuum mechanism. When the vacuum mechanism stops, the suction of the suction pad 42 to the glass plates 11a and 11b is canceled, and the positioned glass plates 11a and 11b are placed on the cutting processing table 54.

Next, the controller transmits a raising signal (ON signal) to the control unit of the pad lifting mechanism (air cylinder) of the glass plate first holder 40a, and the glass plate first holder 40a (pad lifting mechanism) is raised above the cutting processing table 54 by the raising signal. After the glass plate first holder 40a is raised, a retreat signal (ON signal) is transmitted from the controller to the control unit of the second servomotor 39, the glass plate first holder 40a moves from the cutting processing area 20 to the loading area 19 by the rotation of the shaft of the second servomotor 39, and the glass plate first holder 40a stands by above the loading area 19. Note that, the glass plate second to fourth holders 40b to 40d move rearward in the front-rear direction together with the glass plate first holder 40a, the glass plate second holder 40b stands by above the cutting processing area 20, the glass plate third holder 40c stands by above the bend-breaking processing area 21, and the glass plate fourth holder 40d stands by above the grinding processing area 22.

A conveyance procedure from the cutting processing area 20 to the bend-breaking processing area 21 by the glass plate second holder 40b of the glass plates 11a and 11b after the cutting processing (glass plate moving means (glass plate moving step)), a conveyance procedure from the bend-breaking processing area 21 to the grinding processing area 22 by the glass plate third holder 40c of the glass plates 11a and 11b after the bend-breaking processing (glass plate moving means (glass plate moving step)), and a conveyance procedure from the grinding processing area 22 to the unloading area 23 by the glass plate fourth holder 40d of the glass plates 11a and 11b after the grinding processing (glass plate moving means (glass plate moving step)) are the same as those from the loading area 19 to the cutting processing area 20 of the glass plates 11a and 11b by the glass plate first holder 40a, so that description of the conveyance procedure by the glass plate second to fourth holders 40b to 40d will be omitted.

After the glass plates 11a and 11b are placed on the cutting processing table 54, the controller transmits a retreat signal (ON signal) to the control unit of the first servomotor 34. The control unit of the first servomotor 34 that has received the retreat signal (ON signal) drives the first servomotor 34. The rotation of the shaft of the first servomotor 34 causes the first slide block to move in the front-rear direction from the front side toward the rear side of the first guide frame 30, so that the cutting device 55 moves rearward in the front-rear direction in the cutting processing area 20 together with the first traveling frame 32, and the cutting device 55 is positioned on the outer side in the width direction (cutting processing start position) of the first corner 18a (front side edge 16) of the glass plates 11a and 11b.

Note that, in the cutting processing, although not illustrated, the glass plate second holder 40b moved (returned) from the bend-breaking processing area 21 to the cutting processing area 20 is lowered onto the cutting processing table 54 in the cutting processing area 20 by the pad lifting mechanism (air cylinder), the suction pad 42 of the glass plate second holder 40b abuts the upper surfaces 12 of the glass plates 11a and 11b placed on the cutting processing table 54, and the suction pad 42 of the glass plate second holder 40b presses the glass plates 11a and 11b downward while the suction pad 42 sucks the glass plates 11a and 11b by the vacuum mechanism being activated. During the cutting processing, the glass plates 11a and 11b are supported under pressure by the suction pad 42 of the glass plate second holder 40b.

After the cutting device 55 is positioned on the outer side in the width direction of the first corner 18a of the glass plates 11a and 11b (cutting processing start position), the controller transmits a stop signal (OFF signal) to the control unit of the first servomotor 34 and transmits a drive signal (ON signal) to the control unit of the fourth servomotor 61. The control unit of the first servomotor 34 that has received the stop signal (OFF signal) stops the first servomotor 34, and the control unit of the fourth servomotor 61 that has received the drive signal (ON signal) drives the fourth servomotor 61. The rotation of the shaft of the fourth servomotor 61 causes the slide block 63a to move the feed screw 60a in the width direction from the other side edge portion 48b of the cutting processing area 20 toward the one side edge portion 48a, so that the cutting processing table 54 moves in the width direction from the side of the other side edge portion 48b of the cutting processing area 20 toward the side of the one side edge portion 48a, and the cutting cutter wheel 67 of the cutting device 55 is positioned at the first corner 18a of the glass plates 11a and 11b.

After the cutting cutter wheel 67 of the cutting device 55 is positioned at the first corner 18a of the glass plates 11a and 11b, the controller transmits a drive signal (ON signal) and an NC control signal to the control units of the air cylinder 65 and the fifth servomotor 66 of the cutting device 55, transmits a retreat signal (ON signal) and an NC control signal to the control unit of the first servomotor 34, and transmits an NC control signal to the control unit of the fourth servomotor 61. The control unit of the air cylinder 65 and the control unit of the fifth servomotor 66 of the cutting device 55, the control unit of the first servomotor 34, and the control unit of the fourth servomotor 61 that have received the drive signal (ON signal) and the NC control signal drive the air cylinder 65, the fifth servomotor 66, the first servomotor 34, and the fourth servomotor 61 to perform contour control motion by the NC control on the vicinity of the first side edge 14 (first side edge portion) of the glass plates 11a and 11b, and the cutting cutter wheel 67 performs cutting processing on the vicinity of the first side edge 14 (first side edge portion) of the glass plates 11a and 11b (cutting processing means (cutting processing step)).

The control unit of the first servomotor 34 that has received the retreat signal (ON signal) drives the first servomotor 34 during the cutting processing to move the cutting device 55 rearward in the front-rear direction in the cutting processing area 20, and the control unit of the fourth servomotor 61 drives the fourth servomotor 61 during the cutting processing to reciprocate the cutting device 55 in the width direction in the cutting processing area 20. The cutting cutter wheel 67 of the cutting device 55 moves from the first corner 18a toward the second corner 18b of the glass plates 11a and 11b while forming the outline cut line K1 in the vicinity of the first side edge 14 (first side edge portion) of the glass plates 11a and 11b.

After the cutting processing of the vicinity of the first side edge 14 (first side edge portion) of the glass plates 11a and 11b is finished by the cutting cutter wheel 67 of the cutting device 55 and the cutting cutter wheel 67 is positioned at the second corner 18b of the glass plates 11a and 11b, the cutting processing table 54 moves in the width direction from the side of the one side edge portion 48a of the cutting processing area 20 toward the side of the other side edge portion 48b, and the cutting cutter wheel 67 performs the cutting processing on the vicinity of the rear end edge 17 (rear end edge portion) of the glass plates 11a and 11b together with the movement of the cutting processing table 54 in the width direction (cutting processing means (cutting processing step)).

The control unit of the fourth servomotor 61 drives the fourth servomotor 61 during the cutting processing to move the cutting processing table 54 in the width direction in the cutting processing area 20, and the control unit of the first servomotor 34 drives the first servomotor 34 during the cutting processing to reciprocate the cutting device 55 in the front-rear direction in the cutting processing area 20. The cutting cutter wheel 67 of the cutting device 55 moves from the second corner 18b toward the third corner 18c of the glass plates 11a and 11b while forming the outline cut line K1 in the vicinity of the rear end edge 17 (rear end edge portion) of the glass plates 11a and 11b.

After the cutting processing of the vicinity of the rear end edge 17 (rear end edge portion) of the glass plates 11a and 11b is finished by the cutting cutter wheel 67 of the cutting device 55 and the cutting cutter wheel 67 is positioned at the third corner 18c of the glass plates 11a and 11b, the cutting device 55 moves forward in the front-rear direction, and the cutting cutter wheel 67 performs the cutting processing on the vicinity of the second side edge 15 (second side edge portion) of the glass plates 11a and 11b together with the movement of the cutting device 55 forward in the front-rear direction (cutting processing means (cutting processing step)).

The control unit of the first servomotor 34 drives the first servomotor 34 during the cutting processing to move the cutting device 55 forward in the front-rear direction in the cutting processing area 20, and the control unit of the fourth servomotor 61 drives the fourth servomotor 61 during the cutting processing to reciprocate the cutting processing table 54 in the width direction in the cutting processing area 20. The cutting cutter wheel 67 of the cutting device 55 moves from the third corner 18c toward the fourth corner 18d of the glass plates 11a and 11b while forming the outline cut line K1 in the vicinity of the second side edge 15 (second side edge portion) of the glass plates 11a and 11b.

After the cutting processing of the vicinity of the second side edge (second side edge portion) of the glass plates 11a and 11b is finished by the cutting cutter wheel 67 of the cutting device 55 and the cutting cutter wheel 67 is positioned at the fourth corner 18d of the glass plates 11a and 11b, the cutting processing table 54 moves in the width direction from the side of the other side edge portion 48b of the cutting processing area 20 toward the side of the one side edge portion 48a, and the cutting cutter wheel 67 performs the cutting processing on the vicinity of the front end edge 16 (front end edge portion) of the glass plates 11a and 11b together with the movement of the cutting processing table 54 in the width direction (cutting processing means (cutting processing step)).

The control unit of the fourth servomotor 61 drives the fourth servomotor 61 during the cutting processing to move the cutting processing table 54 in the width direction in the cutting processing area 20, and the control unit of the first servomotor 34 drives the first servomotor 34 during the cutting processing to reciprocate the cutting device 55 in the front-rear direction in the cutting processing area 20. The cutting cutter wheel 67 of the cutting device 55 moves from the fourth corner 18d toward the first corner 18a of the glass plates 11a and 11b while forming the outline cut line K1 in the vicinity of the front end edge 16 (front end edge portion) of the glass plates 11a and 11b. When the cutting processing of the vicinity of the front end edge 16 (front end edge portion) of the glass plates 11a and 11b is finished by the cutting cutter wheel 67 of the cutting device 55, the cutting device 55 moves to the outer side in the width direction (cutting processing start position) of the first corner 18a (front end edge 16) of the glass plates 11a and 11b and stands by.

In the cutting processing area 20, for example, in a case where the cutting processing of the glass plate 11b having a different area to be processed later is performed after positioning the glass plates 11a and 11b having different sizes having different areas of the upper surface 12 and lower surface 13 by causing the outermost side edge (in the illustrated glass plate 11b, the first side edge 14) positioned on the outermost side in the width direction of the first side edge 14 extending in the front-rear direction on one side in the width direction of the small-sized (small-area) glass plate 11b having smaller areas of the upper surface 12 and the lower surface 13 to be processed later to be positioned in (coincide) the position of the outermost side edge (in the illustrated glass plate 11a, the first side edge 14) (positioning first reference L1 (virtual positioning first reference line)) positioned on the outermost side in the width direction of the first side edge 14 extending in the front-back direction on one side in the width direction of the large-sized (large-area) glass plate 11a having large areas of the upper surface 12 and the lower surface 13 to be processed earlier by the first positioning means (first positioning step) and positioning the glass plates 11a and 11b having different areas of the upper surface 12 and lower surface by causing the front-rear direction center O1 (center line L2 extending in the width direction while dividing the dimension in the front-rear direction of the glass plate 11b into two) of the first side edge 14 extending in the front-rear direction on one side in the width direction of the small-sized glass plate 11b to be processed later to be positioned in (coincide) the position (positioning second reference L2 (virtual positioning second reference line)) of the front-rear direction center O1 (center line L2 extending in the width direction while dividing the dimension in the front-rear direction of the glass plate 11b into two) of the first side edge 14 extending in the front-rear direction on one side in the width direction of the large-sized glass plate 11a to be processed earlier by the second positioning means (second positioning step), a moving distance of the cutting device 55 until arriving at the side edge 14 of the large-sized glass plate 11a (moving distance in the width direction of the cutting processing table 54) and the moving distance of the cutting device 55 until arriving at the side edge 14 of the small-sized glass plate 11b (moving distance in the width direction of the cutting processing table 54) become the same, and the moving distance of until the cutting device 55 returns from the outermost side edge (first side edge 14) of the large-sized glass plate 11a to the outer side in the width direction of the glass plate 11a and the moving distance until this returns from the outermost side edge (first side edge 14) of the small-sized glass plate 11a to the outer side in the width direction of the glass plate 11b become the same. The moving distance of the cutting device 55 until arriving at the outermost side edge (side edge 14) of the small-sized glass plate 11b is shortened, the moving distance of the cutting device 55 until returning from the outermost side edge (side edge 14) of the small-sized glass plate 11b to the outer side in the width direction of the glass is shortened, an arrival time (non-processing time) until the cutting device 55 arrives at the outermost side edge (side edge 14) of the small-sized glass plate 11b is shortened, and the return time until the cutting device 55 returns from the outermost side edge (side edge 14) of the small-sized glass plate 11b to the outer side in the width direction of the glass plate 11b is shortened.

With the bend-breaking system 10a and the bend-breaking processing method (glass plate processing system 10, after positioning the glass plates 11a and 11b having different sizes having different areas of the upper surface 12 and the lower surface 13 by causing the position (positioning first reference L1 (virtual positioning first reference line)) of the outermost side edge (in the illustrated glass plate 11a, one side edge 14) positioned on the outermost side in the width direction out of one side edge 14 extending in the front-rear direction on one side in the width direction of the large-sized (large-area) glass plate 11a having large areas of the upper surface 12 and the lower surface 13 to be processed earlier by the first positioning means (first positioning step) to coincide the position (positioning first reference L1 (virtual positioning first reference line)) of the outermost side edge (in the illustrated glass plate 11b, one side edge 14) positioned on the outermost side in the width direction out of one side edge 14 extending in the front-rear direction on one side in the width direction of the small-sized (small-area) glass plate 11b having small areas of the upper surface 12 and the lower surface 13 to be processed later, and positioning the glass plates 11a and 11b having different sizes having different areas of the upper surface 12 and the lower surface 13 by causing the position (positioning second reference (virtual positioning second reference line) of the front-rear direction center O1 (center line L2 extending in the width direction while dividing the dimension in the front-rear direction of the glass plate 11a into two) of the side edge 14 extending in the front-rear direction on one side in the width direction of the large-sized glass plate 11a to be processed earlier by the second positioning means (second positioning step), to coincide the position (positioning second reference L2 (virtual positioning second reference line)) of the front-rear direction center O1 (center line L2 extending in the width direction while dividing the dimension in the front-rear direction of the glass plate 11b into two) of the side edge 14 extending in the front-rear direction on one side in the width direction of the small-sized glass plate 11b to be processed later, the cutting processing of the small-sized glass plate 11b (glass plate 11b having different area) to be processed later is performed, so that the moving distance of the cutting device 55 (moving distance in the width direction of the cutting processing table 54) until arriving at the outermost side edge (side edge 14) of the large-sized (large-area) glass plate 11a in which the areas of the upper surface 12 and the lower surface 13 are large becomes the same as the moving distance of the cutting device 55 (moving distance in the width direction of the cutting processing table 54) until arriving at the outermost side edge (side edge 14) of the small-sized (small-area) glass plate 11b in which the areas of the upper surface 12 and the lower surface 13 are small, and the moving distance (moving distance in the width direction of the cutting processing table 54) until the cutting device 55 returns from the outermost side edge (side edge 14) of the large-sized glass plate 11a to the outer side in the width direction of the glass plate 11a becomes the same as the moving distance (moving distance in the width direction of the cutting processing table 54) until this returns from the outermost side edge (side edge 14) of the small-sized glass plate 11b to the outer side in the width direction of the glass plate 11b, so that, as compared with the glass plate processing system in the conventional technology, the moving distance of the cutting device 55 until arriving at the outermost side edge (side edge 14) of the small-sized glass plate 11b may be made shorter and the moving distance of the cutting device 55 until returning from the outermost side edge (side edge 14) of the small-sized glass plate 11b to the outer side in the width direction of the glass plate 11b may be made shorter, arrival time (non-processing time) until the cutting device 55 arrives at the outermost side edge (side edge 14) of the small-sized glass plate 11b may be made short, and the return time until the cutting device 55 returns from the outermost side edge (side edge 14) of the small-sized glass plate 11b to the outer side in the width direction of the glass plate 11b may be made short.

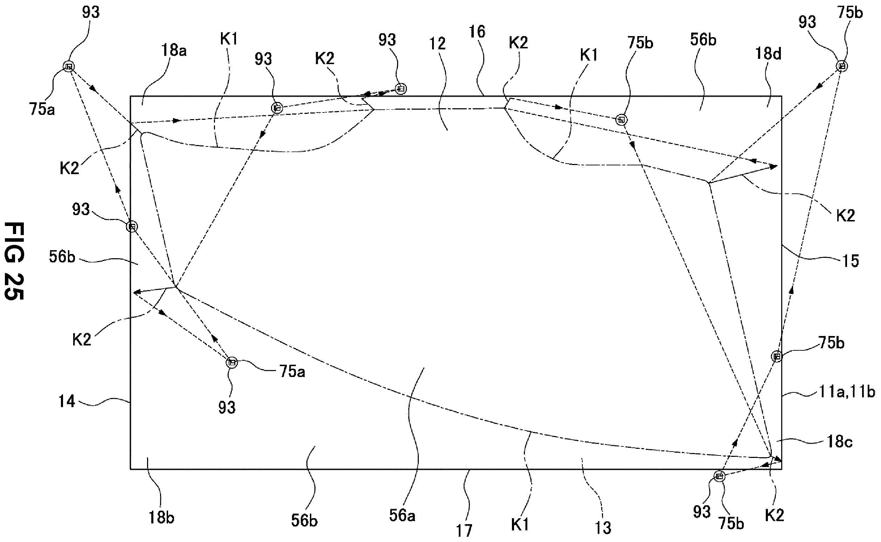

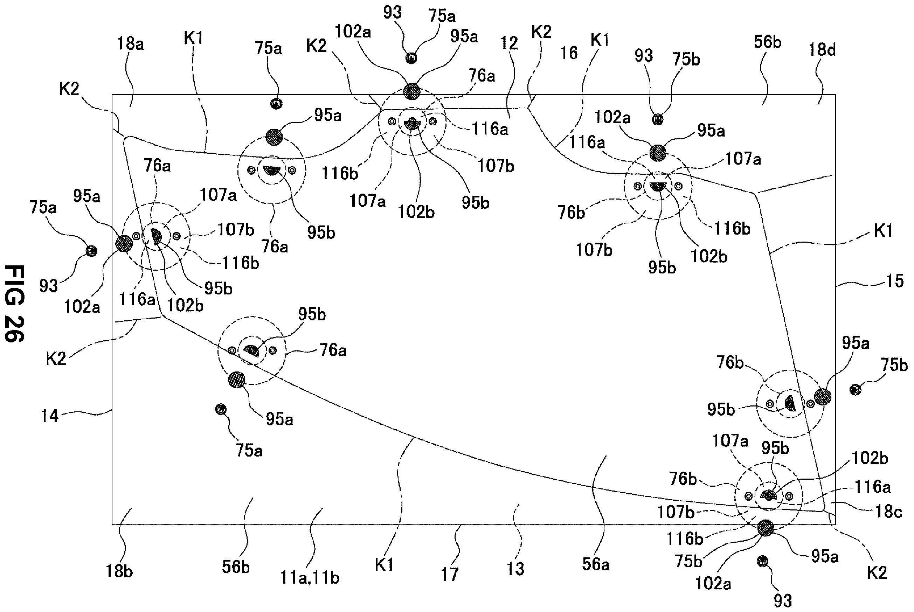

Fig. 25 is a view illustrating an example of an end cut line forming procedure in the bend-breaking processing, and Fig. 26 is a view illustrating an example of a bend-breaking procedure in the bend-breaking processing. After the cutting processing (outline cut line K1) on the edge portion 56b (peripheral edge portion) of the glass plates 11a and 11b is finished, the glass plates 11a and 11b subjected to the cutting processing are conveyed from the cutting processing area 20 to the bend-breaking processing area 21 by the glass plate second holder 40b. In the bend-breaking processing area 21, the end cut line K2 is put into the edge portion 56b extending outside the outline cut line K1 of the glass plates 11a and 11b subjected to the cutting processing, and the edge portion 56b of the glass plates 11a and 11b surrounded by the outline cut line K1 and the end cut line K2 is bend-broken.

Note that, in the bend-breaking processing, although not illustrated, the glass plate third holder 40c moved (returned) from the grinding processing area 22 to the bend-breaking processing area 21 is lowered onto the bend-breaking processing table 74 in the bend-breaking processing area 21 by the pad lifting mechanism (air cylinder), the suction pad 42 of the glass plate third holder 40c abuts the upper surface 12 of the glass plates 11a and 11b placed on the bend-breaking processing table 74, and the suction pad 42 of the glass plate third holder 40c presses the glass plates 11a and 11b downward while the suction pad 42 sucks the glass plates 11a and 11b by the vacuum mechanism being activated. During the bend-breaking processing, the glass plates 11a and 11b are supported under pressure by the suction pad 42 of the glass plate third holder 40c.

After the glass plates 11a and 11b subjected to the cutting processing are placed on the bend-breaking processing table 74, the controller transmits a drive signal (ON signal) to each control unit of the holder lifting mechanism 94 (first lifting mechanism), the first pressing member lifting mechanism 96a (second lifting mechanism), the second pressing member lifting mechanism 96b (third lifting mechanism), the sixth servomotor 85 (X-axis servomotor), the seventh servomotor 87 (Y-axis servomotor), the eighth servomotor 90 (X-axis servomotor), the ninth servomotor 91 (Y-axis servomotor), and the tenth servomotor 103 of the first bend-breaking device 75a and the second bend-breaking device 75b. The control unit of the holder lifting mechanism 94, the control units of the first and second pressing member lifting mechanisms 96a and 96b, and the control units of the sixth to tenth servomotors 85, 87, 90, 91, and 103 that have received the drive signal (ON signal) drive the holder lifting mechanism 94, the first and second pressing member lifting mechanisms 96a and 96b, and the sixth to tenth servomotors 85, 87, 90, 91, and 103. Note that, a command (signal) is transmitted from the controller to the holder lifting mechanism 94, the first and second pressing member lifting mechanisms 96a and 96b, and the sixth to tenth servomotors 85, 87, 90, 91, and 103 so that the first and second bend-breaking devices 75a and 75b travel (move) on the upper surface of the glass plates 11a and 11b along a traveling track (bend-breaking track) set in advance.

In the first bend-breaking device 75a in which the holder lifting mechanism 94, the first and second pressing member lifting mechanism 96a and 96b, the sixth, seventh, and tenth servomotors 85, 87, and 103 are driven, the first bend-breaking jig 84a (bend-breaking jig) moves in the front-rear direction and the width direction (oblique direction) by the X-axis first actuator 86a and the Y-axis first actuator 88a, and the first bend-breaking jig 84a is positioned in the bend-breaking start position in a first (initial) end cut line forming area on the outer side in the width direction of the first corner 18a of the glass plates 11a and 11b.

In the second bend-breaking device 75b in which the holder lifting mechanism 94, the first and second pressing member lifting mechanism 96a and 96b, the eighth, ninth, and tenth servomotors 90, 91, and 103 are driven, the second bend-breaking jig 84b (bend-breaking jig) moves in the front-rear direction and the width direction (oblique direction) by the X-axis second actuator 86b and the Y-axis second actuator 88b, and the second bend-breaking jig 84b is positioned in the bend-breaking start position in a first (initial) end cut line forming area on the outer side in the width direction of the fourth corner 18d of the glass plates 11a and 11b. Note that, the first and second support devices 76a and 76b move to the bend-breaking start position in the first (initial) end cut line forming area in synchronization with (in synchronization with) the first and second bend-breaking devices 75a and 75b.

After the first bend-breaking jig 84a of the first bend-breaking device 75a is positioned in the bend-breaking start position (outer side in the width direction) of the first corner 18a of the glass plates 11a and 11b, this moves in the front-rear direction and the width direction (oblique direction) by the X-axis first actuator 86a and the Y-axis first actuator 88a as indicated by arrows in Fig. 25, and moves to the end cut line forming position in the vicinity of (nearest to) the outline cut line K1 out of the edge portion 56b of the glass plates 11a and 11b extending outside the outline cut line K1.

After the first bend-breaking jig 84a moves to the end cut line forming position in the vicinity of the outline cut line K1, the tenth servomotor 103 is driven and the first pressing member 95a (first pressing member lifting mechanism 96a) rotates (rotates) in the clockwise direction or the counterclockwise direction, and the bend-breaking cutter wheel 93 (holder lifting mechanism 94) and the second pressing member 95b (second pressing member lifting mechanism 96b) revolve around the first pressing member 95a (around the axis) in the clockwise direction or the counterclockwise direction. When the bend-breaking cutter wheel 93 (holder lifting mechanism 94) revolves, a rolling (moving) direction of the peripheral edge of the bend-breaking cutter wheel 93 is directed to the direction in which a virtual end cut line extends. After the bend-breaking cutter wheel 93 (holder lifting mechanism 94) revolves, and the rolling (moving) direction of the peripheral edge of the bend-breaking cutter wheel 93 is directed to the direction in which the virtual end cut line extends, the holder lifting mechanism 94 (first lifting mechanism) operates to lower the bend-breaking cutter holder 92 toward the upper surface 12 of the edge portion 56b of the glass plates 11a and 11b (holder lowering means (holder lowering step)). The bend-breaking cutter wheel 93 abuts the upper surface 12 of the glass plates 11a and 11b in the end cut line forming position with a predetermined pressing force.

After the second bend-breaking jig 84b of the second bend-breaking device 75b is positioned in the bend-breaking start position (outer side in the width direction) of the fourth corner 18d of the glass plates 11a and 11b, this moves in the front-rear direction and the width direction (oblique direction) by the X-axis second actuator 86b and the Y-axis second actuator 88b as indicated by arrows in Fig. 25, and moves to the end cut line forming position in the vicinity of (nearest to) the outline cut line K1 out of the edge portion 56b of the glass plates 11a and 11b extending outside the outline cut line K1. Note that, the end cut line forming position is not necessarily in the vicinity of the outline cut line K1 but may be in the vicinity of the peripheral edge of the glass plates 11a and 11b.

After the second bend-breaking jig 84b moves to the end cut line forming position in the vicinity of the outline cut line K1, the tenth servomotor 103 is driven and the first pressing member 95a (first pressing member lifting mechanism 96a) rotates (rotates) in the clockwise direction or the counterclockwise direction, and the bend-breaking cutter wheel 93 (holder lifting mechanism 94) and the second pressing member 95b (second pressing member lifting mechanism 96b) revolve around the first pressing member 95a (around the axis thereof) in the clockwise direction or the counterclockwise direction. When the bend-breaking cutter wheel 93 (holder lifting mechanism 94) revolves, a rolling (moving) direction of the peripheral edge of the bend-breaking cutter wheel 93 is directed to the direction in which a virtual end cut line extends. After the bend-breaking cutter wheel 93 (holder lifting mechanism 94) revolves, the holder lifting mechanism 94 (first lifting mechanism) operates to lower the bend-breaking cutter holder 92 toward the upper surface 12 of the edge portion 56b of the glass plates 11a and 11b (holder lowering means (holder lowering step)). The bend-breaking cutter wheel 93 abuts the upper surface 12 of the glass plates 11a and 11b in the end cut line forming position with a predetermined pressing force.

After the rolling (moving) direction of the peripheral edge of the bend-breaking cutter wheel 93 is directed to the direction in which the virtual end cut line extends, the first bend-breaking jig 84a travels linearly from the vicinity of the outline cut line K1 of the glass plates 11a and 11b toward the edge of the glass plates 11a and 11b, and the bend-breaking cutter wheel 93 forms the end cut line K2 (scribe) in the first (initial) end cut line forming area (predetermined area) of the edge portion 56b of the glass plates 11a and 11b in the traveling direction of the first bend-breaking jig 84a (end cut line forming means (end cut line forming step)). In the end cut line forming means (end cut line forming step), while the first support device 76a moves in synchronization with the first bend-breaking device 75a, in a state in which the first and second support surfaces 116a and 116b of the first and second support members 107a and 107b support the lower surface 13 of the edge portion 56b extending outside the outline cut line K1 of the glass plates 11a and 11b, the bend-breaking cutter wheel 93 of the first bend-breaking jig 84a forms the end cut line K2 in the edge portion 56b of the glass plates 11a and 11b.

Moreover, the second bend-breaking jig 84b travels linearly from the vicinity of the outline cut line K1 of the glass plates 11a and 11b toward the edge of the glass plates 11a and 11b, and the bend-breaking cutter wheel 93 forms the end cut line K2 (scribe) in a first (initial) end cut line forming area (predetermined area) of the edge portion 56b of the glass plates 11a and 11b in the traveling direction of the second bend-breaking jig 84b (end cut line forming means (end cut line forming step)). In the end cut line forming means, while the second support device 76b moves in synchronization with the second bend-breaking device 75b, in a state in which the first and second support surfaces 116a and 116b of the first and second support members 107a and 107b support the lower surface 13 of the edge portion 56b extending outside the outline cut line K1 of the glass plates 11a and 11b, the bend-breaking cutter wheel 93 of the second bend-breaking jig 84b forms the end cut line K2 in the edge portion 56b of the glass plates 11a and 11b.

Note that, the first and second bend-breaking devices 75a and 75b and the first and second support devices 76a and 76b travel (move) at the same speed. In the end cut line forming means (end cut line forming step), the first and second bend-breaking jigs 84a and 84b may travel linearly from the edge of the glass plates 11a and 11b toward the vicinity of the outline cut line K1 of the glass plates 11a and 11b, and the bend-breaking cutter wheel 93 may form the end cut line K2 (scribe) in the edge portion 56b of the glass plates 11a and 11b. With the bend-breaking system 10a and the bend-breaking processing method (glass plate processing system 10), the first and second support surfaces 116a and 116b of the first and second support members 107a and 107b support the lower surface 13 of the edge portion 56b of the glass plates 11a and 11b, so that elastic deformation of the edge portion 56b can be prevented, and the end cut line K2 can be reliably formed in the edge portion 56b of the glass plates 11a and 11b in a state in which the edge portion 56b of the glass plates 11a and 11b is horizontally held.

After the first (initial) end cut line K2 is formed in the edge portion 56b of the glass plates 11a and 11b, the holder lifting mechanism 94 (first lifting mechanism) operates to raise the bend-breaking cutter holder 92 from the edge of the edge portion 56b of the glass plates 11a and 11b (holder raising means (holder raising step)). After the bend-breaking cutter holder 92 is raised by the holder raising means (holder raising step), the first and second bend-breaking devices 75a and 75b (first and second bend-breaking jigs 84a and 84b) are moved to the first (initial) pressing area by the operation of the X-axis first and second actuators 86a and 86b and the Y-axis first and second actuators 88a and 88b (bend-breaking device moving means (bend-breaking device moving step)).

After the first and second bend-breaking devices 75a and 75b are moved to the first (initial) pressing area by the bend-breaking device moving means (bend-breaking device moving step), as illustrated in Fig. 26, the tenth servomotor 103 operates and the first pressing member 95a (first pressing member lifting mechanism 96a) rotates (rotates) in the clockwise direction or the counterclockwise direction, and the bend-breaking cutter wheel 93 (holder lifting mechanism 94) and the second pressing member 95b (second pressing member lifting mechanism 96b) revolve around the first pressing member 95a (around the axis thereof) in the clockwise direction or the counterclockwise direction. The bend-breaking cutter wheel 93 and the first and second pressing members 95a and 95b are rotated in the axial direction by the rotation mechanism 97 so that the first pressing member 95a is positioned in the edge portion 56b (first (initial) pressing area) of the glass plates 11a and 11b extending outside the outline cut line K1 (rotating means (rotating step)). When the first pressing member 95a is positioned in the edge portion 56b (pressing area) of the glass plates 11a and 11b extending outside the outline cut line K1, the operation of the tenth servomotor 103 is stopped.

After the first pressing member 95a is positioned in the edge portion 56b (first (initial) pressing area) of the glass plates 11a and 11b extending outside the outline cut line K1 by the rotating means (rotating step), the second pressing member 95b of the first and second bend-breaking devices 75a and 75b is lowered in the up-down direction by the second pressing member lifting mechanism 96b (third lifting mechanism), and the second pressing surface 102b of the second pressing member 95b and the first and second support surfaces 116a and 116b of the first and second support members 107a and 107b clamp the main body portion 56a and the edge portion 56b of the glass plates 11a and 11b (glass plate clamping means (glass plate clamping step)). In the glass plate clamping means (glass plate clamping step), when the second pressing member 95b of the first and second bend-breaking devices 75a and 75b is lowered by the second pressing member lifting mechanism 96b (third lifting mechanism), the second pressing surface 102b of the second pressing member 95b abuts the upper surface 12 of the main body portion 56a of the glass plates 11a and 11b extending in the vicinity of the inner side of the outline cut line K1.

In the glass plate clamping means (glass plate clamping step), when the first and second support members 107a and 107b are raised by the second support member lifting mechanism 108 (fourth lifting mechanism), the second support surface 116b formed into an annular shape of the second support member 107b supports the lower surface 13 of the edge portion 56b of the glass plates 11a and 11b extending in the vicinity of the outer side of the outline cut line K1 across the outline cut line K1 and the lower surface 13 of the main body portion 56a of the glass plates 11a and 11b extending in the vicinity of the inner side of the outline cut line K1, and the first support surface 116a formed into a perfect circular shape of the first support member 107a supports the lower surface 13 of the main body portion 56a of the glass plates 11a and 11b extending in the vicinity of the inner side of the outline cut line K1, and the vicinity of the outer peripheral edge of a part of the first support surface 116a supports the lower surfaces 13 of the edge portion 56b of the glass plates 11a and 11b extending in the vicinity of the outer side of the outline cut line K1.

After the second pressing surface 102b of the second pressing member 95b and the first and second support surfaces 116a and 116b of the first and second support members 107a and 107b clamp the main body portion 56a and the edge portion 56b of the glass plates 11a and 11b by the glass plate clamping means (glass plate clamping step), the second support member 107b is lowered in the up-down direction in the first (initial) pressing area by the second support member lifting mechanism 108 (fourth lifting mechanism) (second support member lowering means (second support member lowering step)). When the second support member 107b is lowered, a gap between the lower surface 13 of the glass plates 11a and 11b and the second support surface 116b (a step between the first support surface 116a and the second support surface 116b) is formed. Note that, clamping of the main body portion 56a of the glass plates 11a and 11b by the second pressing surface 102b of the second pressing member 95b and the first support surface 116a of the first support member 107a is maintained.

After the second support member 107b is lowered by the second support member lowering means (second support member lowering step), while the clamping of the main body portion 56a of the glass plates 11a and 11b by the second pressing surface 102b of the second pressing member 95b and the first support surface 116a of the first support member 107a is maintained, the first pressing member 95a is lowered in the up-down direction by the first pressing member lifting mechanism 96a (second lifting mechanism), the first pressing surface 102a of the first pressing member 95a abuts the upper surface 12 of the edge portion 56b of the glass plates 11a and 11b extending to the vicinity of the outer side of the outline cut line K1, and the first pressing surface 102a of the first pressing member 95a presses the edge portion 56b of the glass plates 11a and 11b extending outside the outline cut line K1 downward in the first (initial) pressing area. When the first pressing surface 102a presses the edge portion 56b downward, the edge portion 56b is bend-broken in the first (initial) pressing area (edge portion bend-breaking means (edge portion bend-breaking step)). In the edge portion bend-breaking means (edge portion bend-breaking step), the main body portion 56a and the edge portion 56b of the glass plates 11a and 11b are separated from each other. The edge portion 56b (peripheral edge portion) of the bend-broken (separated) glass plates 11a and 11b remain on the belt conveyor 77.

After the edge portion 56b is bend-broken by the edge portion bend-breaking means (edge portion bend-breaking step) in the first (initial) pressing area, the second support member 107b is raised in the up-down direction by the second support member lifting mechanism 108 (fourth lifting mechanism), the first pressing member 95a is raised in the up-down direction by the first pressing member lifting mechanism 96a (second lifting mechanism), and the second pressing member 95b is raised in the up-down direction by the second pressing member lifting mechanism 96b (third lifting mechanism).

After the first and second pressing members 95a and 95b and the second support member 107b are raised, the first and second bend-breaking devices 75a and 75b are moved to a second (next) end cut line forming area of the edge portion 56b of the glass plates 11a and 11b (device moving means (device moving step)). The first bend-breaking jig 84a is positioned in an end cut line forming position in the second (next) end cut line forming area on the outer side in the width direction of the glass plates 11a and 11b, and the second bend-breaking jig 84b is positioned in an end cut line forming position in the second (next) end cut line forming area on the outer side in the width direction of the glass plates 11a and 11b. Note that, the first and second support devices 76a and 76b move to the end cut line forming position in the second (next) end cut line forming area in synchronization with (in synchronization with) the first and second bend-breaking devices 75a and 75b.

After the first bend-breaking jig 84a moves to the end cut line forming position in the second (next) end cut line forming area in the vicinity of the outline cut line K1, the tenth servomotor 103 is driven and the first pressing member 95a (first pressing member lifting mechanism 96a) rotates (rotates) in the clockwise direction or the counterclockwise direction, the bend-breaking cutter wheel 93 (holder lifting mechanism 94) and the second pressing member 95b (second pressing member lifting mechanism 96b) revolve around the first pressing member 95a (around the axis) in the clockwise direction or the counterclockwise direction, and the rolling (moving) direction of the peripheral edge of the bend-breaking cutter wheel 93 is directed to the direction in which the virtual end cut line extends. After the bend-breaking cutter wheel 93 (holder lifting mechanism 94) revolves, and the rolling (moving) direction of the peripheral edge of the bend-breaking cutter wheel 93 is directed to the direction in which the virtual end cut line extends, the holder lifting mechanism 94 (first lifting mechanism) operates to lower the bend-breaking cutter holder 92 toward the upper surface 12 of the edge portion 56b of the glass plates 11a and 11b (holder lowering means (holder lowering step)). The bend-breaking cutter wheel 93 abuts the upper surface 12 of the glass plates 11a and 11b in the end cut line forming position with a predetermined pressing force.

After the second bend-breaking jig 84b moves to the end cut line forming position in the second (next) end cut line forming area in the vicinity of the outline cut line K1, the tenth servomotor 103 is driven and the first pressing member 95a (first pressing member lifting mechanism 96a) rotates (rotates) in the clockwise direction or the counterclockwise direction, the bend-breaking cutter wheel 93 (holder lifting mechanism 94) and the second pressing member 95b (second pressing member lifting mechanism 96b) revolve around the first pressing member 95a (around the axis) in the clockwise direction or the counterclockwise direction, and the rolling (moving) direction of the peripheral edge of the bend-breaking cutter wheel 93 is directed to the direction in which the virtual end cut line extends. After the bend-breaking cutter wheel 93 (holder lifting mechanism 94) revolves, and the rolling (moving) direction of the peripheral edge of the bend-breaking cutter wheel 93 is directed to the direction in which the virtual end cut line extends, the holder lifting mechanism 94 (first lifting mechanism) operates to lower the bend-breaking cutter holder 92 toward the upper surface 12 of the edge portion 56b of the glass plates 11a and 11b (holder lowering means (holder lowering step)). The bend-breaking cutter wheel 93 abuts the upper surface 12 of the glass plates 11a and 11b in the end cut line forming position with a predetermined pressing force.

After the rolling (moving) direction of the peripheral edge of the bend-breaking cutter wheel 93 is directed to the direction in which the virtual end cut line extends, the first bend-breaking jig 84a travels linearly from the vicinity of the outline cut line K1 of the glass plates 11a and 11b toward the edge of the glass plates 11a and 11b, and the bend-breaking cutter wheel 93 forms the end cut line K2 (scribe) in the second (next) end cut line forming area (predetermined area) of the edge portion 56b of the glass plates 11a and 11b in the traveling direction of the first bend-breaking jig 84a (end cut line forming means (end cut line forming step)). Moreover, the second bend-breaking jig 84b travels linearly from the vicinity of the outline cut line K1 of the glass plates 11a and 11b toward the edge of the glass plates 11a and 11b, and the bend-breaking cutter wheel 93 forms the end cut line K2 (scribe) in a second (next) end cut line forming area (predetermined area) of the edge portion 56b of the glass plates 11a and 11b in the traveling direction of the second bend-breaking jig 84b (end cut line forming means (end cut line forming step)).

In the end cut line forming means (end cut line forming step), while the first and second support devices 76a and 76b move in synchronization with the first and second bend-breaking device 75a and 75b, in a state in which the first and second support surfaces 116a and 116b of the first and second support members 107a and 107b support the lower surface 13 of the edge portion 56b extending outside the outline cut line K1 of the glass plates 11a and 11b, the bend-breaking cutter wheel 93 of the first and second bend-breaking jigs 84a and 84b forms the end cut line K2 in the edge portion 56b of the glass plates 11a and 11b.

After the second (next) end cut line K2 is formed in the edge portion 56b of the glass plates 11a and 11b, the holder lifting mechanism 94 (first lifting mechanism) operates to raise the bend-breaking cutter holder 92 from the edge of the edge portion 56b of the glass plates 11a and 11b (holder raising means (holder raising step)). After the bend-breaking cutter holder 92 is raised by the holder raising means (holder raising step), the first and second bend-breaking devices 75a and 75b (first and second bend-breaking jigs 84a and 84b) are moved to the second (next) pressing area by the operation of the X-axis first and second actuators 86a and 86b and the Y-axis first and second actuators 88a and 88b (bend-breaking device moving means (bend-breaking device moving step)).

After the first and second bend-breaking devices 75a and 75b are moved to the second (next) pressing area by the bend-breaking device moving means (bend-breaking device moving step), the tenth servomotor 103 operates and the first pressing member 95a (first pressing member lifting mechanism 96a) rotates (rotates) in the clockwise direction or the counterclockwise direction, and the bend-breaking cutter wheel 93 (holder lifting mechanism 94) and the second pressing member 95b (second pressing member lifting mechanism 96b) revolve around the first pressing member 95a (around the axis thereof) in the clockwise direction or the counterclockwise direction. The bend-breaking cutter wheel 93 and the first and second pressing members 95a and 95b are rotated in the axial direction by the rotation mechanism 97 so that the first pressing member 95a is positioned in the edge portion 56b (pressing area) of the glass plates 11a and 11b extending outside the outline cut line K1 (rotating means (rotating step)). When the first pressing member 95a is positioned in the edge portion 56b (pressing area) of the glass plates 11a and 11b extending outside the outline cut line K1, the operation of the tenth servomotor 103 is stopped.

After the first pressing member 95a is positioned in the edge portion 56b (second (next) pressing area) of the glass plates 11a and 11b extending outside the outline cut line K1 by the rotating means (rotating step), the second pressing member 95b of the first and second bend-breaking devices 75a and 75b is lowered in the up-down direction by the second pressing member lifting mechanism 96b (third lifting mechanism), and the second pressing surface 102b of the second pressing member 95b and the first and second support surfaces 116a and 116b of the first and second support members 107a and 107b clamp the main body portion 56a and the edge portion 56b of the glass plates 11a and 11b (glass plate clamping means (glass plate clamping step)).

After the second pressing surface 102b of the second pressing member 95b and the first and second support surfaces 116a and 116b of the first and second support members 107a and 107b clamp the main body portion 56a and the edge portion 56b of the glass plates 11a and 11b by the glass plate clamping means (glass plate clamping step), the second support member 107b is lowered in the up-down direction in the second (next) pressing area by the second support member lifting mechanism 108 (fourth lifting mechanism) (second support member lowering means (second support member lowering step)). When the second support member 107b is lowered, a gap between the lower surface 13 of the glass plates 11a and 11b and the second support surface 116b (a step between the first support surface 116a and the second support surface 116b) is formed. Note that, clamping of the main body portion 56a of the glass plates 11a and 11b by the second pressing surface 102b of the second pressing member 95b and the first support surface 116a of the first support member 107a is maintained.

After the second support member 107b is lowered by the second support member lowering means (second support member lowering step), while the clamping of the main body portion 56a of the glass plates 11a and 11b by the second pressing surface 102b of the second pressing member 95b and the first support surface 116a of the first support member 107a is maintained, the first pressing member 95a is lowered in the up-down direction by the first pressing member lifting mechanism 96a (second lifting mechanism), the first pressing surface 102a of the first pressing member 95a abuts the upper surface 12 of the edge portion 56b of the glass plates 11a and 11b extending to the vicinity of the outer side of the outline cut line K1, and the first pressing surface 102a of the first pressing member 95a presses the edge portion 56b of the glass plates 11a and 11b extending outside the outline cut line K1 downward in the second (next) pressing area. When the first pressing surface 102a presses the edge portion 56b downward, the edge portion 56b is bend-broken in the second (next) pressing area (edge portion bend-breaking means (edge portion bend-breaking step)). In the edge portion bend-breaking means (edge portion bend-breaking step), the main body portion 56a and the edge portion 56b of the glass plates 11a and 11b are separated from each other. The edge portion 56b (peripheral edge portion) of the bend-broken (separated) glass plates 11a and 11b remain on the belt conveyor 77.

With the bend-breaking system 10a and the bend-breaking processing method (glass plate processing system 10), after the bend-breaking cutter wheel and the first and second pressing members 95a and 95b are raised by the holder lifting mechanism 94 (first lifting mechanism) and the first and second pressing member lifting mechanisms 96a and 96b (second and third lifting mechanisms), the first and second bend-breaking devices 75a and 75b move in the front-rear direction (horizontal direction) and the width direction (horizontal direction) on the side of the upper surface of the glass plates 11a and 11b (bend-breaking device moving means (bend-breaking device moving step)), after the second support member 107b is raised by the second support member lifting mechanism 108 (fourth lifting mechanism), the first and second support devices 76a and 76b move in the front-rear direction (horizontal direction) and the width direction (horizontal direction) in synchronization (synchronization) with the first and second bend-breaking devices 75a and 75b on the side of the lower surface 13 of the glass plates 11a and 11b (support device moving means (support device moving step)), and after the first and second bend-breaking devices 75a and 75b and the first and second support devices 76a and 76b move in synchronization with each other by the bend-breaking device moving means (bend-breaking device moving step) and the support device moving means (support device moving step), the first bend-breaking device 75a and the first support device 76a cooperate with each other, and the second bend-breaking device 75b and the second support device 76b cooperated with each other to perform the end cut line forming means (end cut line forming step) and the glass plate clamping means (glass plate clamping step) and the edge portion bend-breaking means (edge portion bend-breaking step).

By repeating the above-described procedure, all the edge portions 56 of the glass plates 11a and 11b on which the end cut line K2 is formed are bend-broken. Note that, on the glass plates 11a and 11b illustrated in Fig. 25, the first to third end cut lines K2 are formed by the first bend-breaking jig 84a, and the first to third end cut lines K2 are formed by the second bend-breaking jig 84b; however, the number of end cut lines K2 is not especially limited, and the number of end cut lines K2 is determined depending on the sizes (areas) and thickness dimensions of the glass plates 11a and 11b, and the shapes of the main body of the glass plates 11a and 11b formed by the outline cut line K1.

After the bend-breaking processing is finished and the glass plates 11a and 11b subjected to the bend-breaking processing are lifted upward by the glass plate third holder 40c, the controller transmits a drive signal (ON signal) to the control unit of the conveyor drive motor 78. The control unit of the conveyor drive motor 78 that has received the drive signal (ON signal) drives the belt conveyor 77. The belt conveyor 77 moves from one side toward the other side in the width direction. By the movement of the belt conveyor 77 in the width direction, the bend-broken edge portion 56b (peripheral edge portion) of the glass plates 11a and 11b remaining on the belt conveyor 77 gradually moves from one side toward the other side in the width direction, and the edge portion 56b falls from the belt conveyor 77 and stored (discarded) in a dust box (not illustrated).

After the bend-breaking processing of the glass plates 11a and 11b is finished, the main body portion 56a of the glass plates 11a and 11b after the bend-breaking processing is conveyed from the bend-breaking processing area 21 to the grinding processing area 22 by the glass plate third holder 40c, and the main body portion 56a of the glass plates 11a and 11b are placed on the grinding processing table 117. After the main body portion 56a of the glass plates 11a and 11b are placed on the grinding processing table 117, the controller transmits a drive signal to the control unit of the vacuum mechanism of the grinding processing table 117 and transmits a retreat signal (ON signal) to the control unit of the first servomotor 34. The control unit of the vacuum mechanism that has received the drive signal drives the vacuum mechanism. The main body portion 56a of the glass plates 11a and 11b is sucked and held by the suction pad 119 (grinding processing table 117) by the drive of the vacuum mechanism.

The control unit of the first servomotor 34 that has received the retreat signal (ON signal) drives the first servomotor 34. The rotation of the shaft of the first servomotor 34 causes the first slide block to move in the front-rear direction from the front side toward the rear side of the first guide frame 30, thereby causing the grinding device 118 to move together with the first traveling frame 32 rearward in the front-rear direction in the grinding processing area 22, and the grinding device 118 is positioned on the outer side in the width direction (grinding processing start position) at the first corner 18a (front side edge) of the main body portion 56a of the glass plates 11a and 11b. Note that, the grinding device 118 moves the peripheral edges (side edge, front and rear end edges) of the main body portion 56a of the glass plates 11a and 11b in synchronization with the cutting device 55.

After the grinding device 118 is positioned on the outer side in the width direction (grinding processing start position) at the first corner 18a of the main body portion 56a of the glass plates 11a and 11b, the controller transmits a stop signal (OFF signal) to the control unit of the first servomotor 34 and transmits a drive signal (ON signal) to the control unit of the 15th servomotor 120. The control unit of the first servomotor 34 that has received the stop signal (OFF signal) stops the first servomotor 34, and the control unit of the 15th servomotor 120 that has received the drive signal (ON signal) drives the 15th servomotor 120. The rotation of the shaft of the 15th servomotor 120 causes the slide block 63b to move the feed screw 60b in the width direction from the other side edge portion 48b of the grinding processing area 22 toward the one side edge portion 48a, so that the grinding processing table 117 moves in the width direction from the side of the other side edge portion 48b of the grinding processing area 22 toward the one side edge portion 48a, and the grinding wheel 127 of the grinding device 118 is positioned at the first corner 18a of the main body portion 56a of the glass plates 11a and 11b. The first corner 18a of the main body portion 56a of the glass plates 11a and 11b enter the slit 131 of the cover 129 of the grinding jig 121.

After the grinding wheel 127 of the grinding device 118 is positioned in the first corner 18a of the glass plates 11a and 11b, the controller transmits a drive signal (ON signal) and an NC control signal to the control units of the 16th to 18th servomotors 122 to 124 and the control unit of the spindle motor 130 of the grinding device 118, transmits a retreat signal (ON signal) and an NC control signal to the control unit of the first servomotor 34, and transmits an NC control signal to the control unit of the 15th servomotor 120. The control units of the 16th to 18th servomotors 122 to 124, the control unit of the spindle motor 130, the control unit of the first servomotor 34, and the control unit of the 15th servomotor 120 that have received the drive signal (ON signal) and the NC control signal drive the 16th to 18th servomotors 122 to 124, the spindle motor 130, the first servomotor 34, and the 15th servomotor 120, respectively, perform contour control motion by NC control to the vicinity of one side edge (one side edge portion) of the main body portion 56a of the glass plates 11a and 11b, and the grinding wheel 127 performs grinding processing on the vicinity of one side edge (one side edge portion) of the main body portion 56a of the glass plates 11a and 11b (grinding processing means (grinding processing step)).

The control unit of the first servomotor 34 that has received the retreat signal (ON signal) drives the first servomotor 34 during the grinding processing (during the cutting processing) to move the grinding device 118 rearward in the front-rear direction in the grinding processing area 22, and the control unit of the 15th servomotor 120 drives the 15th servomotor 120 during the grinding processing (during the cutting processing) to reciprocate the grinding device 118 in the width direction in the grinding processing area 22. The grinding wheel 127 of the grinding device 118 moves from the first corner 18a of the glass plates 11a and 11b toward the second corner 18b while grinding the vicinity of one side edge (one side edge portion) of the main body portion 56a of the glass plates 11a and 11b along the edge (outline cut line K1) of the main body portion 56a of the glass plates 11a and 11b.

After the grinding processing of the vicinity of one side edge (one side edge portion) of the main body portion 56a of the glass plates 11a and 11b is finished by the grinding wheel 127 of the grinding device 118 and the grinding wheel 127 is positioned at the second corner 18b of the main body portion 56a of the glass plates 11a and 11b, the grinding processing table 117 moves in the width direction from the side of one side edge portion 48a of the grinding processing area 22 toward the side of the other side edge portion 48b, and the grinding wheel 127 performs the grinding processing on the vicinity of the rear end edge (rear end edge portion) of the main body portion 56a of the glass plates 11a and 11b with the movement of the grinding processing table 117 in the width direction (grinding processing means (grinding processing step)).

The control unit of the 15th servomotor 120 drives the 15th servomotor 120 during the grinding processing (during the cutting processing) to move the grinding processing table 117 in the width direction in the grinding processing area 22, and the control unit of the first servomotor 34 drives the first servomotor 34 during the grinding processing (during the cutting processing) to reciprocate the grinding device 118 in the front-rear direction in the grinding processing area 22. The grinding wheel 127 of the grinding device 118 moves from the second corner 18b of the main body portion 56a of the glass plates 11a and 11b toward the third corner 18c while grinding the vicinity of the rear end edge (rear end edge portion) of the main body portion 56a of the glass plates 11a and 11b along the edge (outline cut line K1) of the main body portion 56a of the glass plates 11a and 11b.

After the grinding processing of the vicinity of the rear end edge (rear end edge portion of the main body portion 56a of the glass plates 11a and 11b is finished by the grinding wheel 127 of the grinding device 118 and the grinding wheel 127 is positioned at the third corner 18c of the main body portion 56a of the glass plates 11a and 11b, the grinding device 118 moves forward in the front-rear direction, and the grinding wheel 127 performs the grinding processing on the vicinity of the second side edge (second side edge portion) of the main body portion 56a of the glass plates 11a and 11b with the movement of the grinding device 118 forward in the front-rear direction (grinding processing means (grinding processing step)).

The control unit of the first servomotor 34 drives the first servomotor 34 during the grinding processing (during the cutting processing) to move the grinding device 118 forward in the front-rear direction in the grinding processing area 22, and the control unit of the 15th servomotor 120 drives the 15th servomotor 120 during the grinding processing (during the cutting processing) to reciprocate the grinding processing table 117 in the width direction in the grinding processing area 22. The grinding wheel 127 of the grinding device 118 moves from the third corner 18c of the main body portion 56a of the glass plates 11a and 11b toward the fourth corner 18d while grinding the vicinity of the second side edge (second side edge portion) of the main body portion 56a of the glass plates 11a and 11b along the edge (outline cut line K1) of the main body portion 56a of the glass plates 11a and 11b.

After the grinding processing of the vicinity of the second side edge (second side edge portion) of the main body portion 56a of the glass plates 11a and 11b is finished by the grinding wheel 127 of the grinding device 118 and the grinding wheel 127 is positioned at the fourth corner 18d of the main body portion 56a of the glass plates 11a and 11b, the grinding processing table 117 moves in the width direction from the side of the other side edge portion 48b of the grinding processing area 22 toward the side of the one side edge portion 48a, and the grinding wheel 127 performs the grinding processing on the vicinity of the front end edge (front end edge portion) of the main body portion 56a of the glass plates 11a and 11b with the movement of the grinding processing table 117 in the width direction (grinding processing means (grinding processing step)).

The control unit of the 15th servomotor 120 drives the 15th servomotor 120 during the grinding processing (during the cutting processing) to move the grinding processing table 117 in the width direction in the grinding processing area 22, and the control unit of the first servomotor 34 drives the first servomotor 34 during the grinding processing (during the cutting processing) to reciprocate the grinding device 118 in the front-rear direction in the grinding processing area 22. The grinding wheel 127 of the grinding device 118 moves from the fourth corner 18d of the main body portion 56a of the glass plates 11a and 11b toward the first corner 18a while grinding the vicinity of the rear end edge (rear end edge portion) of the main body portion 56a of the glass plates 11a and 11b along the edge (outline cut line K1) of the main body portion 56a of the glass plates 11a and 11b. When the grinding processing in the vicinity of the front end edge (front end edge portion) of the main body portion 56a of the glass plates 11a and 11b is finished by the grinding wheel 127 of the grinding device 118, the grinding device 118 moves to the outer side in the width direction (grinding processing start position) of the first corner 18a (front end edge) of the main body portion 56a of the glass plates 11a and 11b and stands by.

In the grinding processing area 22, for example, in a case where the grinding processing of the glass plate 11b having a different area to be processed later is performed after positioning the glass plates 11a and 11b having different areas of the upper surface 12 and lower surface 13 by causing the outermost side edge (in the illustrated glass plate 11b, the first side edge 14) positioned on the outermost side in the width direction of the one side edge 14 extending in the front-rear direction on one side in the width direction of the small-sized (small-area) glass plate 11b having smaller areas of the upper surface 12 and the lower surface 13 to be processed later to be positioned in (coincide) the position of the outermost side edge (in the illustrated glass plate 11a, the one side edge 14) (positioning first reference L1 (virtual positioning first reference line)) positioned on the outermost side in the width direction of the one side edge 14 extending in the front-back direction on one side in the width direction of the large-sized (large-area) glass plate 11a having large areas of the upper surface 12 and the lower surface 13 to be processed earlier by the first positioning means (first positioning step) and positioning the glass plates 11a and 11b having different areas of the upper surface 12 and lower surface 13 by causing the front-rear direction center O1 (center line L2 extending in the width direction while dividing the dimension in the front-rear direction of the glass plate 11b into two) of the side edge 14 extending in the front-rear direction on one side in the width direction of the small-sized glass plate 11b to be processed later to be positioned in (coincide) the position (positioning second reference L2 (virtual positioning second reference line)) of the front-rear direction center O1 (center line L2 extending in the width direction while dividing the dimension in the front-rear direction of the glass plate 11b into two) of the side edge 14 extending in the front-rear direction on one side in the width direction of the large-sized glass plate 11a to be processed earlier by the second positioning means (second positioning step), a moving distance of the grinding device 118 until arriving at the side edge 14 of the large-sized glass plate 11a (moving distance in the width direction of the grinding processing table 117) and the moving distance of the grinding device 118 until arriving at the side edge 14 of the small-sized glass plate 11b (moving distance in the width direction of the grinding processing table 117) become the same, and the moving distance of until the grinding device 118 returns from the outermost side edge (side edge 14) of the large-sized glass plate 11a to the outer side in the width direction of the glass plate 11a and the moving distance until this returns from the outermost side edge (side edge 14) of the small-sized glass plate 11a to the outer side in the width direction of the glass plate 11b become the same.

The moving distance of the grinding device 118 until reaching the outermost side edge (side edge 14) of the small-sized glass plate 11b is shortened, the moving distance of the grinding device 118 until returning from the outermost side edge (side edge 14) of the small-sized glass plate 11b to the outer side in the width direction of the glass is shortened, an arrival time (non-processing time) until the grinding device 118 arrives at the outermost side edge (side edge 14) of the small-sized glass plate 11b is shortened, and the return time until the grinding device 118 returns from the outermost side edge (side edge 14) of the small-sized glass plate 11b to the outer side in the width direction of the glass is shortened.

After the grinding processing of the main body portion 56a of the glass plates 11a and 11b is finished, the main body portion 56a of the glass plates 11a and 11b after the grinding processing are conveyed from the grinding processing area 22 to the unloading area 23 by the glass plate fourth holder 40d. In the unloading area 23, the main body portion 56a of the glass plates 11a and 11b subjected to the cutting processing, the bend-breaking processing, and the grinding processing move forward from the rear end portion toward the front end portion of the unloading area 23 by the unloading conveyor 134, and the main body portion 56a of the glass plates 11a and 11b subjected to each processing are unloaded from the unloading area 23.

Note that, when the main body portion 56a of the glass plates 11a and 11b subjected to each processing is positioned on the unloading conveyor 134 in the unloading area 23, the main body portion 56a of the glass plates 11a and 11b subjected to the grinding processing is positioned on the grinding processing table 117 in the grinding processing area 22, the main body portion 56a of the glass plates 11a and 11b subjected to the bend-breaking processing is positioned on the bend-breaking processing table 74 in the bend-breaking processing area 21, the glass plates 11a and 11b subjected to the cutting processing are positioned on the cutting processing table 54 in the cutting processing area 20, and the glass plates 11a and 11b before the processing positioned by the first positioning means (first positioning step) and the second positioning means (second positioning step) are positioned on the loading conveyor 43 in the loading area 19. In this manner, with the bend-breaking system 10a and the bend-breaking processing method (glass plate processing system 10), a plurality of glass plates is sequentially conveyed from the loading area 19 toward the unloading area 23, and the processing of the plurality of glass plates 11a and 11b is continuously performed.

With the bend-breaking system 10a and the bend-breaking processing method (glass plate processing system 10), after the bend-breaking cutter wheel 93 lowered in the up-down direction by the holder lifting mechanism 94 (first lifting mechanism) forms the end cut line K2 in the edge portion 56b of the glass plates 11a and 11b and forms the end cut line K2 in the edge portion 56b of the glass plates 11a and 11b, the bend-breaking cutter wheel 93 is raised in the up-down direction by the holder lifting mechanism 94 (first lifting mechanism), after the bend-breaking cutter wheel 93 is raised, the rotation mechanism 97 rotates the bend-breaking cutter wheel 93 and the first and second pressing members 95a and 95b in the axial direction so that the first pressing member 95a is positioned in the edge portion 56b of the glass plates 11a and 11b extending outside the outline cut line K1, after the first pressing member 95a is rotated (rotated) and the bend-breaking cutter wheel 93 and the second pressing member 95b are revolved (rotated) and the first pressing member 95a is positioned in the edge portion 56b of the glass plates 11a and 11b extending outside the outline cut line K1, the second pressing member 95b is lowered in the up-down direction by the second pressing member lifting mechanism 96b (third lifting mechanism) and the second pressing surface 102b of the second pressing member 95b and the first and second support surfaces 116a and 116b of the first and second support members 107a and 107b clamp the main body portion 56a and the edge portion 56b of the glass plates 11a and 11b, after the second pressing surface 102b of the second pressing member 95b and the first and second support surfaces 116a and 116b of the first and second support members 107a and 107b clamp the main body portion 56a and the edge portion 56b, the second support member 107b is lowered in the up-down direction by the second support member lifting mechanism 108 (fourth lifting mechanism), and the first pressing member 95a is lowered in the up-down direction by the first pressing member lifting mechanism 96a (second lifting mechanism) to press the edge portion 56b of the glass plates 11a and 11b extending outside the outline cut line K1 downward while maintaining the clamping of the main body portion 56a by the second pressing member 95b and the first support member 107a to bend-break the edge portion 56b, so that the second pressing surface 102b of the second pressing member 95b and the first support surface 116a of the first support member 107a clamp the main body portion 56a of the glass plates 11a and 11b, the first support surface 116a having a predetermined area formed into a perfect circular shape supports the lower surface 13 of the main body portion 56a of the glass plates 11a and 11b extending to the vicinity of the inner side of the outline cut line K1 and the vicinity of the outer peripheral edge of the first support surface 116a supports the lower surface 13 of the edge portion 56b of the glass plates 11a and 11b extending to the vicinity of the outer side of the outline cut line K1, and the second pressing member 95b and the first support member 107a firmly fix the main body portion 56a of the glass plates 11a and 11b, therefore even when the first pressing surface 102a of the first pressing member 95a presses the edge portion 56b of the glass plates 11a and 11b extending outside the outline cut line K1 downward and the pressing force of the first pressing member 95a acts on the edge portion 56b, it is possible to prevent elastic deformation of the main body portion 56a and the edge portion 56b of the glass plates 11a and 11b extending to the vicinity of the outline cut line K1, the main body portion 56a and the edge portion 56b do not curve upward, the edge portion 56b of the glass plates 11a and 11b is bend-broken on the outline cut line K1 and the end cut line K2 by the pressing force of the first pressing member 95a, and the edge portion 56b of the glass plates 11a and 11b can be smoothly and reliably bend-broken.

With the bend-breaking system 10a and the bend-breaking processing method (glass plate processing system 10), the second support surface 116b formed into the annular shape of the second support member 107b supports the lower surface 13 of the edge portion 56b of the glass plates 11a and 11b extending in the vicinity of the outer side of the outline cut line K1 over the outline cut line K1 and the lower surface 13 of the main body portion 56a of the glass plates 11a and 11b extending to the vicinity of the inner side of the outline cut line K1, so that when the second pressing member 95b presses the main body portion 56a and the edge portion 56b of the glass plates 11a and 11b downward, a downward curve of the edge portion 56b of the glass plates 11a and 11b extending to the vicinity of the outer side of the outline cut line K1 and the main body portion 56a of the glass plates 11a and 11b extending to the vicinity of the inner side of the outline cut line K1 supported by the second support surface 116b of the second support member 107b can be prevented, and it is possible to prevent unintended breakage and damage of the main body portion 56a and the edge portion 56n in the vicinity of the outline cut line K1 when the second pressing member 95b and the first and second support members 107a and 107b clamp the main body portion 56a and the edge portion 56b of the glass plates 11a and 11b.

### Reference Signs List

- 10: Glass plate processing system
- 10a: Bend-breaking system
- 11a: Large-sized glass plate
- 11b: Small-sized glass plate
- 12: Upper surface
- 13: Lower surface
- 14: First side edge (one side edge)
- 15: Second side edge (other side edge)
- 16: Front end edge
- 17: Rear end edge
- 18a to 18d: First to fourth corners
- 19: Loading area
- 20: Cutting processing area
- 21: Bend-breaking processing area
- 22: Grinding processing area
- 23: Unloading area
- 24: Conveyance mechanism
- 25: System stand
- 26a, 26b: First and second pillars
- 27: Fixed frame
- 28: First moving means
- 29: Second moving means
- 30: First guide frame
- 31: First guide rail
- 32: First traveling frame
- 33: First guide shoe
- 34: First servomotor
- 35: Second guide frame
- 36: Second guide rail
- 37: Second traveling frame
- 38: Guide shoe
- 39: Second servomotor
- 40a to 40d: Glass plate first to fourth holders
- 41: Pad installing plate
- 42: Suction pad
- 43: Loading conveyor
- 44: Stopper
- 45: Roller
- 45a: Roller
- 46: Roller lifting mechanism
- 47: Moving mechanism
- 48a: One side edge portion
- 48b: Other side edge portion
- 49: Shaft
- 50: Rod
- 51: Third servomotor
- 52: Moving arm
- 53: Abutting member
- 54: Cutting processing table
- 55: Cutting device
- 56a: Main body portion
- 56b: Edge portion (peripheral edge portion)
- 57a, 57b: Base lane
- 58a: First moving mechanism
- 58b: Second moving mechanism
- 59a, 59b: Traveling guide rail
- 60a, 60b: Feed screw
- 61: Fourth servomotor
- 62a, 62b: Guide shoe
- 63a, 63b: Slide block (housing nut)
- 64: Cutting jig
- 65: Air cylinder
- 66: Fifth servomotor
- 67: Cutting cutter wheel
- 68: Cutting cutter holder
- 69: Cutter lifting shaft
- 70: Cutter lifting guide
- 71: Support shaft
- 72: Bracket
- 73: Timing belt
- 74: Bend-breaking processing table
- 75: Bend-breaking device
- 75a: First bend-breaking device
- 75b: Second bend-breaking device
- 76: Support device
- 76a: First support device
- 76b: Second support device
- 77: Belt conveyor
- 78: Conveyor driving motor
- 79: Belt
- 80: Pulley
- 81: Carrier roller
- 82: Conveyor frame
- 83: Suspension frame
- 84a: First bend-breaking jig
- 84b: Second bend-breaking jig
- 85: Sixth servomotor (X-axis servomotor)
- 86a: X-axis first actuator
- 86b: X-axis second actuator
- 87: Seventh servomotor (Y-axis servomotor)
- 88a: Y-axis first actuator
- 88b: Y-axis second actuator
- 89a: X-axis first actuator frame
- 89b: X-axis second actuator frame
- 89c: Y-axis first actuator frame
- 89d: Y-axis second actuator frame
- 90: Eighth servomotor (X-axis servomotor)
- 91: Ninth servomotor (Y-axis servomotor)
- 92: Bend-breaking cutter holder
- 93: Bend-breaking cutter wheel
- 94: Holder lifting mechanism (first lifting mechanism)
- 95a: First pressing member
- 95b: Second pressing member
- 96a: First pressing member lifting mechanism (second lifting mechanism)
- 96b: Second pressing member lifting mechanism (third lifting mechanism)
- 97: Rotation mechanism
- 98: Holder main body
- 99: Holder head
- 100: Coupling unit
- 101: Bracket
- 102a: First pressing surface
- 102b: Second pressing surface
- 103: Tenth servomotor (Z-axis servomotor)
- 104: Timing belt
- 105: Rotation shaft
- 106: Guide frame
- 107a: First support member
- 107b: Second support member
- 108: Second support member lifting mechanism (fourth lifting mechanism)
- 109: 11th servomotor (X-axis servomotor)
- 110a: X-axis third actuator
- 110b: X-axis fourth actuator
- 111: 12th servomotor (Y-axis servomotor)
- 112a: Y-axis third actuator
- 112b: Y-axis fourth actuator
- 113a: X-axis third actuator frame
- 113b: X-axis fourth actuator frame
- 113c: Y-axis third actuator frame
- 113d: Y-axis fourth actuator frame
- 114: 13th servomotor (X-axis servomotor)
- 115: 14th servomotor (Y-axis servomotor)
- 116a: First support surface
- 116b: Second support surface
- 117: Grinding processing table
- 118: Grinding device
- 119: Suction pad
- 120: 15th servomotor
- 121: Grinding jig
- 122: 16th servomotor
- 123: 17th servomotor
- 124: 18th servomotor
- 125: Grinding wheel lifting screw
- 126: Grinding wheel cutting screw
- 127: Grinding wheel
- 128: Grinding holder
- 129: Cover
- 130: Spindle motor
- 131: Slit
- 132: Motor housing
- 133: Bracket
- 134: Unloading conveyor
- 140: Bend-breaking device
- 141: Bend-breaking jig
- 142: First lifting mechanism (air cylinder)
- 143: Pressing roller
- 144: Second lifting mechanism (air cylinder)
- 145: Bend-breaking cutter wheel
- 146: Bend-breaking cutter holder
- 147: θ-axis servomotor
- K1: Outline cut line (cut line)
- K2: End cut line
- L1: Positioning first reference (virtual positioning first reference line)
- L2: Positioning second reference (virtual positioning second reference line) (center line)
- O1: Front-rear direction center of side edge

## Claims

1. A bend-breaking system that bend-breaks an edge portion of a glass plate to be processed, the bend-breaking system comprising:
a bend-breaking device that is positioned on a side of an upper surface of the glass plate and bend-breaks the edge portion of the glass plate; and a support device that is positioned on a side of a lower surface of the glass plate and supports the glass plate,
the bend-breaking device including: a bend-breaking cutter wheel that forms an end cut line on an outer side of an outline cut line formed in the edge portion of the glass plate; a first pressing member that is positioned in the vicinity of a radially outer side of the bend-breaking cutter wheel and presses the edge portion of the glass plate extending outside the outline cut line downward; a second pressing member that is positioned in the vicinity of a radially outer side of the first pressing member and presses a main body portion of the glass plate extending inside the outline cut line downward; a first lifting mechanism that lifts the bend-breaking cutter wheel up and down in an up-down direction; a second lifting mechanism that lifts the first pressing member up and down in the up-down direction; a third lifting mechanism that lifts the second pressing member up and down in the up-down direction; and a rotation mechanism that rotates the bend-breaking cutter wheel and the first and second pressing members in an axial direction, and the support device including: a first support member that supports the main body portion of the glass plate; a second support member that supports the edge portion of the glass plate; and a fourth lifting mechanism that lifts the second support member up and down in the up-down direction, wherein
the bend-breaking system includes: a cutter wheel raising means in which, after the bend-breaking cutter wheel lowered in the up-down direction by the first lifting mechanism forms the end cut line in the edge portion of the glass plate, the bend-breaking cutter wheel is raised in the up-down direction by the first lifting mechanism; a rotating means in which, after the bend-breaking cutter wheel is raised by the cutter wheel raising means, the bend-breaking cutter wheel and the first and second pressing members are rotated in the axial direction by the rotation mechanism so that the first pressing member is positioned in the edge portion of the glass plate extending outside the outline cut line; a glass plate clamping means in which, after the bend-breaking cutter wheel and the first and second pressing members are rotated by the rotating means and the first pressing member is positioned in the edge portion of the glass plate extending outside the outline cut line, the second pressing member is lowered in the up-down direction by the third lifting mechanism and the second pressing member and the first and second support members clamp the main body portion and the edge portion of the glass plate; a second support member lowering means in which, after the second pressing member and the first and second support members clamp the main body portion and the edge portion by the glass plate clamping means, the second support member is lowered in the up-down direction by the fourth lifting mechanism; and an edge portion bend-breaking means in which the first pressing member is lowered in the up-down direction by the second lifting mechanism and presses the edge portion of the glass plate extending outside the outline cut line downward to bend-break the edge portion while maintaining clamping of the main body portion by the second pressing member and the first support member.

2. The bend-breaking system according to claim 1, wherein in the bend-breaking device, the bend-breaking cutter wheel is positioned on a radially outer side of the first pressing member around the first pressing member, and the second pressing member is positioned on a radially outer side of the first pressing member around the first pressing member and on an opposite side of the bend-breaking cutter wheel.

3. The bend-breaking system according to claim 2, wherein in the bend-breaking device, the bend-breaking cutter wheel, the first pressing member, and the second pressing member are arranged in a line at equal intervals in a radial direction, the first pressing member rotates by the rotation mechanism, and the bend-breaking cutter wheel and the second pressing member revolve around the first pressing member.

4. The bend-breaking system according to any one of claims 1 to 3, wherein the second support member is positioned in the vicinity of an outer side of the first support member and extends in an axial direction of the first support member, and in the glass plate clamping means, when the second support member is raised by the fourth lifting mechanism, the second support member supports a lower surface of the edge portion of the glass plate extending to the vicinity of an outer side of the outline cut line over the outline cut line and a lower surface of the main body portion of the glass plate extending to the vicinity of an inner side of the outline cut line.

5. The bend-breaking system according to claim 4, wherein the second support member includes a second support surface having a predetermined area that supports the lower surface of the glass plate, the second support surface of the second support member is formed into an annular shape surrounding the first support member in the axial direction, and in the glass plate clamping means, when the second support member is raised by the fourth lifting mechanism, the second support surface formed into the annular shape supports the lower surface of the edge portion of the glass plate extending to the vicinity of the outer side of the outline cut line over the outline cut line and the lower surface of the main body portion of the glass plate extending to the vicinity of the inner side of the outline cut line.

6. The bend-breaking system according to claim 5, wherein the first support member includes a first support surface having a predetermined area that supports the lower surface of the glass plate, the first support surface of the first support member is formed into a perfect circular shape, and in the glass plate clamping means, the first support surface formed into the perfect circular shape supports the lower surface of the main body portion of the glass plate extending to the vicinity of the inner side of the outline cut line, and the vicinity of an outer peripheral edge of the first support surface supports the lower surface of the edge portion of the glass plate extending to the vicinity of the outer side of the outline cut line.

7. The bend-breaking system according to any one of claims 1 to 6, comprising: a bend-breaking device moving means in which the bend-breaking device moves in a horizontal direction on the side of the upper surface of the glass plate after the bend-breaking cutter wheel and the first and second pressing members are raised by the first to third lifting mechanisms; and a support device moving means in which the support device moves in the horizontal direction in synchronization with the bend-breaking device on the side of the lower surface of the glass plate, wherein after the bend-breaking device and the support device move in synchronization with each other by the bend-breaking device moving means and the support device moving means, the bend-breaking device and the support device perform the glass plate clamping means and the edge portion bend-breaking means in cooperation with each other.

8. The bend-breaking system according to claim 7, comprising: an end cut line forming means, in which the bend-breaking cutter wheel forms the end cut line in the edge portion of the glass plate in a state in which the first and second support members support the lower surface of the edge portion extending outside the outline cut line of the glass plate while the bend-breaking device and the support device move in synchronization with each other.

9. A bend-breaking processing method of bend-breaking an edge portion of a glass plate to be processed,
the bend-breaking processing method using a bend-breaking device that is positioned on a side of an upper surface of the glass plate and bend-breaks the edge portion of the glass plate; and a support device that is positioned on a side of a lower surface of the glass plate and supports the glass plate,
the bend-breaking device including: a bend-breaking cutter wheel that forms an end cut line on an outer side of an outline cut line formed in the edge portion of the glass plate; a first pressing member that is positioned in the vicinity of a radially outer side of the bend-breaking cutter wheel and presses the edge portion of the glass plate extending outside the outline cut line downward; a second pressing member that is positioned in the vicinity of a radially outer side of the first pressing member and presses a main body portion of the glass plate extending inside the outline cut line downward; a first lifting mechanism that lifts the bend-breaking cutter wheel up and down in an up-down direction; a second lifting mechanism that lifts the first pressing member up and down in the up-down direction; a third lifting mechanism that lifts the second pressing member up and down in the up-down direction; and a rotation mechanism that rotates the bend-breaking cutter wheel and the first and second pressing members in an axial direction, and the support device including: a first support member that supports the main body portion of the glass plate; a second support member that supports the edge portion of the glass plate; and a fourth lifting mechanism that lifts the second support member up and down in the up-down direction,
the bend-breaking processing method comprising: a cutter wheel raising step in which, after the bend-breaking cutter wheel lowered in the up-down direction by the first lifting mechanism forms an end cut line in the edge portion of the glass plate, the bend-breaking cutter wheel is raised in the up-down direction by the first lifting mechanism; a rotating step in which, after the bend-breaking cutter wheel is raised by the cutter wheel raising step, the bend-breaking cutter wheel and the first and second pressing members are rotated in the axial direction by the rotation mechanism so that the first pressing member is positioned in the edge portion of the glass plate extending outside the outline cut line; a glass plate clamping step in which, after the bend-breaking cutter wheel and the first and second pressing members are rotated by the rotating step and the first pressing member is positioned in the edge portion of the glass plate extending outside the outline cut line, the second pressing member is lowered in the up-down direction by the third lifting mechanism and the second pressing member and the first and second support members clamp the main body portion and the edge portion of the glass plate; a second support member lowering step in which, after the second pressing member and the first and second support members clamp the main body portion and the edge portion by the glass plate clamping step, the second support member is lowered in the up-down direction by the fourth lifting mechanism; and an edge portion bend-breaking step in which the first pressing member is lowered in the up-down direction by the second lifting mechanism and presses the edge portion of the glass plate extending outside the outline cut line downward to bend-break the edge portion while maintaining clamping of the main body portion by the second pressing member and the first support member.

10. The bend-breaking processing method according to claim 9, wherein in the bend-breaking device, the bend-breaking cutter wheel is positioned on a radially outer side of the first pressing member around the first pressing member, and the second pressing member is positioned on a radially outer side of the first pressing member around the first pressing member and on an opposite side of the bend-breaking cutter wheel.

11. The bend-breaking processing method according to claim 10, wherein in the bend-breaking device, the bend-breaking cutter wheel, the first pressing member, and the second pressing member are arranged in a line at equal intervals in a radial direction, the first pressing member rotates by the rotation mechanism, and the bend-breaking cutter wheel and the second pressing member revolve around the first pressing member.

12. The bend-breaking processing method according to any one of claims 9 to 11, wherein the second support member is positioned in the vicinity of an outer side of the first support member and extends in an axial direction of the first support member, and in the glass plate clamping step, when the second support member is raised by the fourth lifting mechanism, the second support member supports a lower surface of the edge portion of the glass plate extending to the vicinity of an outer side of the outline cut line over the outline cut line and a lower surface of the main body portion of the glass plate extending to the vicinity of an inner side of the outline cut line.

13. The bend-breaking processing method according to claim 12, wherein the second support member includes a second support surface having a predetermined area that supports the lower surface of the glass plate, the second support surface of the second support member is formed into an annular shape surrounding the first support member in the axial direction, and in the glass plate clamping step, when the second support member is raised by the fourth lifting mechanism, the second support surface formed into the annular shape supports the lower surface of the edge portion of the glass plate extending to the vicinity of the outer side of the outline cut line over the outline cut line and the lower surface of the main body portion of the glass plate extending to the vicinity of the inner side of the outline cut line.

14. The bend-breaking processing method according to claim 13, wherein the first support member includes a first support surface having a predetermined area that supports the lower surface of the glass plate, the first support surface of the first support member is formed into a perfect circular shape, and in the glass plate clamping step, the first support surface formed into the perfect circular shape supports the lower surface of the main body portion of the glass plate extending to the vicinity of the inner side of the outline cut line, and the vicinity of an outer peripheral edge of the first support surface supports the lower surface of the edge portion of the glass plate extending to the vicinity of the outer side of the outline cut line.

15. The bend-breaking processing method according to any one of claims 9 to 14, comprising: a bend-breaking device moving step in which the bend-breaking device moves in a horizontal direction on the side of the upper surface of the glass plate after the bend-breaking cutter wheel and the first and second pressing members are raised by the first to third lifting mechanisms; and a support device moving step in which the support device moves in the horizontal direction in synchronization with the bend-breaking device on the side of the lower surface of the glass plate, wherein after the bend-breaking device and the support device move in synchronization with each other by the bend-breaking device moving step and the support device moving step, the bend-breaking device and the support device perform the glass plate clamping step and the edge portion bend-breaking step in cooperation with each other.

16. The bend-breaking processing method according to claim 15, comprising: an end cut line forming step, in which the bend-breaking cutter wheel forms an end cut line in the edge portion of the glass plate in a state in which the first and second support members support the lower surface of the edge portion extending outside the outline cut line of the glass plate while the bend-breaking device and the support device move in synchronization with each other.
